# EUROPEAN PATENT APPLICATION

(11) **EP 3 954 530 A1**
(43) Date of publication of application: **16.02.2022**
(21) Application number: 19924222.3
(22) Date of filing: 09.04.2019
(51) Int. Cl.: B29C 64/393, B33Y 50/02

(54) **MOLDING UNIT**

(71) Applicant: Nikon Corporation, Minato-ku, Tokyo 108-6290 (JP)
(72) Inventor: KATO, Tasuku, Tokyo 108-6290 (JP)
(74) Representative: Hoffmann Eitle
(86) International application number: PCT/JP2019/015464
(87) International publication number: WO 2020/208708

(57) **Abstract**

A build unit is provided with: a build apparatus that builds a build object on a base member on the basis of a set position that is set on the base member; and an output apparatus that output position information relating to the set position.

## Description

### Technical Field

The present invention relates to a technical field of a build unit for building a build object, for example.

### Background Art

A Patent Literature 1 discloses a build system that builds a build object by melting powder-like materials with an energy beam and then solidifying the molten materials. A technical problem of this build system is to properly build the build object.

### Citation List

### Patent Literature

Patent Literature 1: US2017/014909A1

### Summary of Invention

A first aspect provides a build unit that is provided with: a build apparatus that builds a build object on a base member on the basis of a set position that is set on the base member; and an output apparatus that outputs position information relating to the set position.

A second aspect provides a build unit that is provided with: a build apparatus that builds a build object on a base member on the basis of a set position that is set on the base member; and an output apparatus that outputs position information relating to a relative position of the set position and the build object.

A third aspect provides a build unit that is provided with: a build apparatus that builds a build object on a base member on the basis of a set position that is set on the base member; and an output apparatus that outputs position information relating to a relationship between the set position and a position of the build object.

A fourth aspect provides a build unit that is provided with: a control apparatus that sets a set position on a base member; and a build apparatus that builds a build object on the base member on the basis of the set position.

A fifth aspect provides a build unit that is provided with: a build apparatus that builds a build object on a base member; a control apparatus that sets a set position on at least one of the base member and the build object and controls the build apparatus on the basis of the set position; and an output apparatus that outputs first position information relating to the set position and a second position information relating to a positional relationship between the set position and a position of the build object.

A sixth aspect provides a build unit that is provided with: a build apparatus that builds a build object on a base member; and an output apparatus that outputs position information relating to a relationship between a position of the build object and a set position that is set on at least one of the base member and the build object.

A seventh aspect provides a build unit that is provided with: a build apparatus that builds a build object on a base member; and an output apparatus that outputs a three-dimensional shape data of the base member and a three-dimensional shape data of the build object.

A eighth aspect provides a build unit that is provided with: a build apparatus that builds a build object on a base member; a measurement apparatus that obtains three-dimensional information of the base member and the build object; and an output apparatus that outputs a measured result by the measurement apparatus.

A ninth aspect provides a build unit that is provided with: a build apparatus that builds a build object on a base member; a measurement apparatus that measures the base member and the build object; and an output apparatus that outputs a measured result by the measurement apparatus, the measurement apparatus measuring the base member to obtain a first measured result in at least one of a period before the build object is build and a period during which the build object is build, and measuring the build object to obtain a second measured result in at least one of a period during which the build object is build and a period after the build object is build.

A tenth aspect provides a build unit that is provided with: a build apparatus that builds a build object that includes a planar surface on an upper surface of a base member that has a planar side surface; and a control apparatus that controls the build apparatus so that the planar surface of the build object is parallel to the side surface of the base member.

An operation and another advantage of the above described aspect will be apparent from an embodiment described below.

### Brief Description of Drawings

[FIG. 1] FIG. 1 is a cross-sectional view that illustrates a structure of a processing system in a first embodiment.
[FIG. 2] FIG. 2 is a system configuration diagram that illustrates a system configuration of the processing system in the first embodiment.
[FIG. 3] Each of FIG. 3A to FIG. 3J is a planar view that illustrates a projection pattern projected by a projection apparatus.
[FIG. 4] FIG. 4 is a flowchart that illustrates a flow of a coordinate matching operation.
[FIG. 5] FIG. 5 is a planer view that illustrates a stage including a placement surface on which a mark for an alignment is formed.
[FIG. 6] FIG. 6 is a V-V' cross-sectional view of the stage illustrated in FIG. 5.
[FIG. 7] FIG. 7 is a planer view that illustrates a beam detection member on which a mark for an alignment is formed.
[FIG. 8] FIG. 8 is a VII#1-VII#1' cross-sectional view of the beam detection member illustrated in FIG. 7.
[FIG. 9] FIG. 9 is a VII#2-VII#2' cross-sectional view of the beam detection member illustrated in FIG. 7.
[FIG. 10] FIG. 10 is a planer view that illustrates the beam detection member placed on the placement surface.
[FIG. 11] FIG. 1 is a planer view that illustrates a fiducial member on which a mark for an alignment is formed.
[FIG. 12] FIG. 12 is a planer view that illustrates the fiducial member placed on the placement surface.
[FIG. 13] FIG. 13 is a perspective view that illustrates the placement surface and a workpiece in a stage coordinate system.
[FIG. 14] FIG. 14 is a flowchart that illustrates a flow of a first workpiece model alignment operation.
[FIG. 15] FIG. 15 is a flowchart that illustrates a flow of a second workpiece model alignment operation.
[FIG. 16] FIG. 16 is a conceptual diagram that conceptually illustrates an aspect in which a three-dimensional model (namely, the workpiece) represented by model shape information and the workpiece represented by measured shape information.
[FIG. 17] FIG. 17 is a flowchart that illustrates a flow of a third workpiece model alignment operation.
[FIG. 18] FIG. 18 is a cross-sectional view that illustrates an aspect in which a plurality of guide lights intersect at a designated point.
[FIG. 19] FIG. 19 is a cross-sectional view that illustrates an aspect in which the plurality of guide lights do not intersect at the designated point.
[FIG. 20] FIG. 20A is a planer view that illustrates beam spots of the plurality of guide lights on a surface (especially, the user designated point) of the workpiece W when the plurality of guide lights intersect at the user designated point and FIG. 20B is a planer view that illustrates beam spots of the plurality of guide lights on a surface (especially, the user designated point) of the workpiece W when the plurality of guide lights do not intersect at the user designated point.
[FIG. 21] FIG. 21 is a perspective view that illustrates the workpiece and a three-dimensional structural object in the stage coordinate system.
[FIG. 22] FIG. 22 is a flowchart that illustrates a flow of a build model alignment operation.
[FIG. 23] FIG. 23 is a planar view that illustrates a display example of a workpiece model.
[FIG. 24] FIG. 24 is a planar view that illustrates a display example of the workpiece model.
[FIG. 25] FIG. 25 is a planar view that illustrates a display example of the workpiece model.
[FIG. 26] FIG. 26 is a planar view that illustrates a display example of the workpiece model.
[FIG. 27] FIG. 27 is a planar view that illustrates a display example on the display.
[FIG. 28] FIG. 28 is a cross-sectional view that illustrates the workpiece model and a build model.
[FIG. 29] FIG. 29 is a cross-sectional view that conceptually illustrates a modification example of build information with the build model and the workpiece model.
[FIG. 30] Each of FIG. 30A to FIG. 30C is a cross-sectional view that conceptually illustrates one example of a method of modifying the build information with the build model and the workpiece model.
[FIG. 31] Each of FIG. 31A to FIG. 31C is a cross-sectional view that conceptually illustrates another example of a method of modifying the build information with the build model and the workpiece model.
[FIG. 32] Each of FIG. 32A to FIG. 32E is a cross-sectional view that illustrates an aspect in which a certain area on the workpiece is irradiated with light and build materials are supplied thereto.
[FIG. 33] Each of FIG. 23A to FIG. 33C is a cross-sectional view that illustrates a process for forming a three-dimensional structural object.
[FIG. 34] FIG. 34 is a system configuration diagram that illustrates a system configuration of a processing system in the second embodiment.
[FIG. 35] FIG. 35 is a perspective view that illustrates a structure of an exterior of a processing unit of the processing system in the second embodiment.
[FIG. 36] FIG. 36 is a cross-sectional view that illustrates one example of a structure of a processing head.
[FIG. 37] FIG. 37 is a cross-sectional view that illustrates one example of the structure of the processing head.
[FIG. 38] FIG. 38 is a planar view that illustrates an aspect of measuring the three-dimensional structural object or the workpiece by using a probe.
[FIG. 39] FIG. 39 is a planar view that illustrates an aspect of measuring the three-dimensional structural object or the workpiece by using the probe.
[FIG. 40] FIG. 40 is a planar view that illustrates an aspect of measuring the three-dimensional structural object or the workpiece by using the probe.
[FIG. 41] FIG. 41 is a planar view that illustrates an aspect of measuring the three-dimensional structural object or the workpiece by using the probe.
[FIG. 42] FIG. 42 is a planar view that illustrates an aspect of measuring the three-dimensional structural object or the workpiece by using the probe.
[FIG. 43] FIG. 43 is a planar view that illustrates a display example of the workpiece model and the build model.
[FIG. 44] Each of FIG. 44A to FIG. 44C is a planar view that illustrates one example of a mark provided on the workpiece.
[FIG. 45] FIG. 45 is a planar view that illustrates a positional relationship between a fiducial position and the build model.
[FIG. 46] FIG. 46 is a planar view that illustrates the three-dimensional structural object that is formed on the workpiece when a fiducial point illustrated in FIG. 45 is set.
[FIG. 47] FIG. 47 is a flowchart that illustrates a flow of a build operation that is performed by the processing unit.
[FIG. 48] FIG. 48A is a perspective view that illustrates one example of the three-dimensional structural object and the workpiece that is supported by the stage and each of FIG. 48B and FIG. 48C is a planar view that illustrates one example of the three-dimensional structural object and the workpiece that is supported by the stage.
[FIG. 49] FIG. 49A is a perspective view that illustrates one example of the three-dimensional structural object and the workpiece that is supported by the stage and FIG. 49B is a planar view that illustrates one example of the three-dimensional structural object and the workpiece that is supported by the stage.
[FIG. 50] FIG. 50 is a planar view that illustrates the three-dimensional structural object that is formed on the workpiece by the build unit a build accuracy of which is relatively low when the fiducial point illustrated in FIG. 45 is set.
[FIG. 51] FIG. 51 is a system configuration diagram that illustrates a system configuration of a fourth modified example of the processing system in the second embodiment.
[FIG. 52] FIG. 52 is a perspective view that illustrates one example of the stage that supports the workpiece through an object that is different from the workpiece.
[FIG. 53] FIG. 53 is a perspective view that illustrates the three-dimensional structural object that is formed on the workpiece that is fixed to a jig.
[FIG. 54] FIG. 54 is a perspective view that illustrates the stage that supports the workpiece that is fixed to the jig.
[FIG. 55] FIG. 55 is a system configuration diagram that illustrates another example of a system configuration of the processing system.

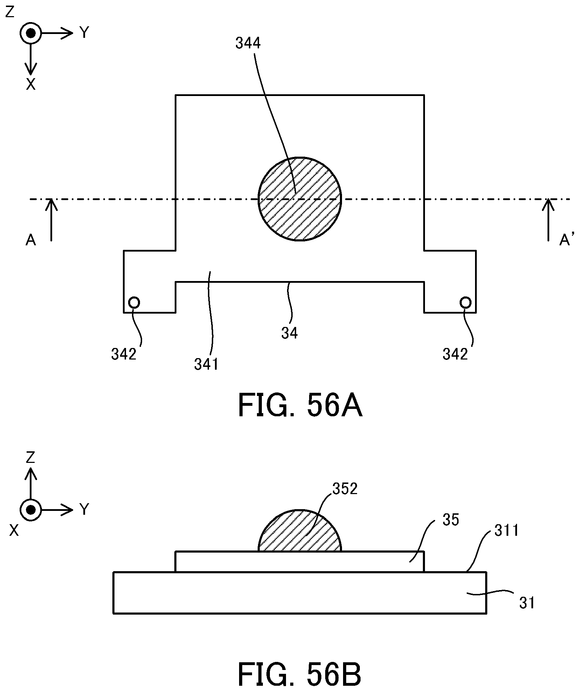

[FIG. 56] FIG. 56A is a planar view that illustrates another example of the fiducial member and FIG. 52B is an A-A' cross-sectional view in FIG. 56A.

### Description of Embodiments

Next, with reference to drawings, an embodiment of a build unit will be described. In the below described description, the embodiment of a build unit will be described by using a processing system SYS (namely, a build system) that forms a build object on a workpiece W that is one example of an object by performing an additive processing. Especially, in the below described description, the embodiment of a build unit will be described by using a processing system SYS that performs the additive processing based on a LMD (Laser Metal Deposition). The additive processing based on the Laser Metal Deposition is an additive processing for forming a three-dimensional structural object ST that is integrated with the workpiece W or that is separable from the workpiece W by melting build materials M supplied to the workpiece W by processing light EL. Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Structure of Processing System SYS in First Embodiment

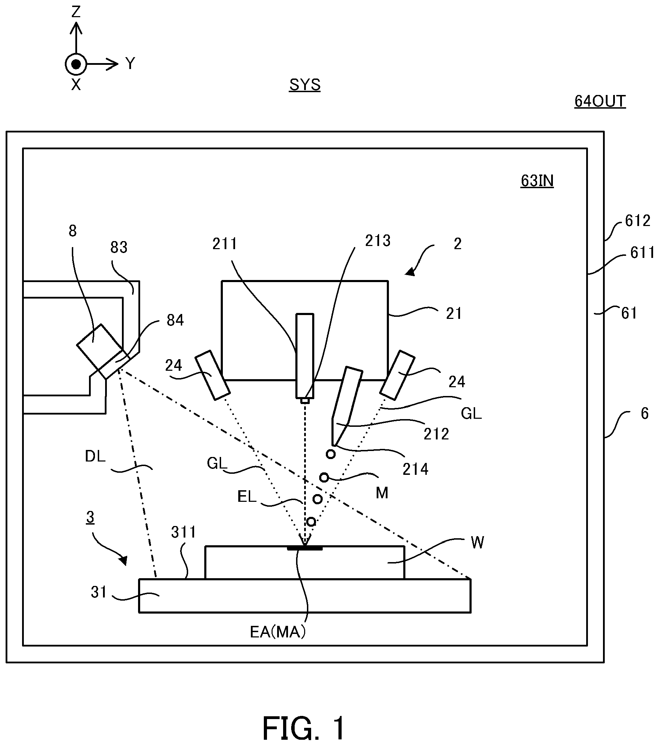

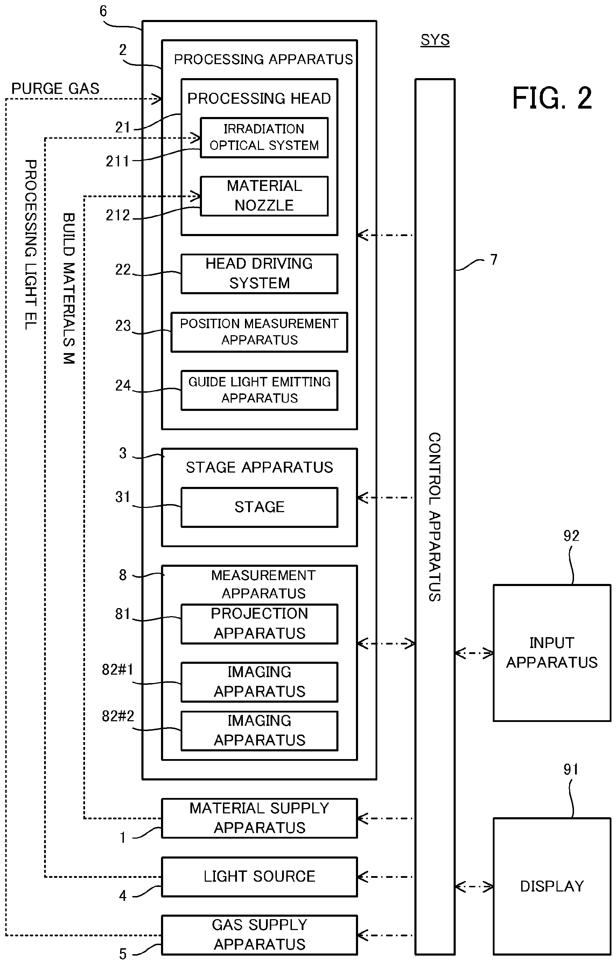

Firstly, with reference to FIG. 1 and FIG. 2, a structure of the processing system SYS in the first embodiment will be described. FIG. 1 is a cross-sectional view that illustrates one example of the structure of the processing system SYS in the first embodiment. FIG. 2 is a system configuration diagram that illustrates a system configuration of the processing system SYS in the first embodiment.

The processing system SYS is configured to form the three-dimensional structural object ST (namely, a three-dimensional object having a size in each of three-dimensional directions, and a solid object). The processing system SYS is configured to form the three-dimensional structural object ST on the workpiece W that is a base for forming the three-dimensional structural object ST. The workpiece W may be referred to as a base member or a basement. The processing system SYS is configured to form the three-dimensional structural object ST on the workpiece W by performing the additive processing on the workpiece W. When the workpiece W is a below described stage 31, the processing system SYS is configured to form the three-dimensional structural object ST on the stage 31. When the workpiece W is an existing structural object held by the stage 31 (alternatively, placed on the stage 31), the processing system SYS is configured to form the three-dimensional structural object ST on the existing structural object. In this case, the processing system SYS may form the three-dimensional structural object ST that is integrated with the existing structural object. An operation for forming the three-dimensional structural object ST that is integrated with the existing structural object may be regarded to be equivalent to an operation for adding a new structural object to the existing structural object. Note that the existing structural object may be an item that needs to be repaired having a missing part, for example. The processing system SYS may form the three-dimensional structural object ST on the item that needs to be repaired to fill in the missing part of the item that needs to be repaired. Alternatively, the processing system SYS may form the three-dimensional structural object ST that is separable from the existing structural object. Note that FIG. 1 illustrates an example in which the workpiece W is an existing structural object held by the stage 31. The below described description also uses the example in which the workpiece W is an existing structural object held by the stage 31.

As described above, the processing system SYS is configured to form the three-dimensional structural object ST by the Laser Metal Deposition. Namely, it can be said that the processing system SYS is a 3D printer that forms an object by using an Additive layer manufacturing technique. Note that the Additive layer manufacturing technique may be referred to as a Rapid Prototyping, a Rapid Manufacturing or an Additive Manufacturing.

In order to form the three-dimensional structural object ST, the processing system SYS is provided with a material supply apparatus 1, a build apparatus 2, a stage apparatus 3, a light source 4, a gas supply apparatus 5, a housing 6, a control apparatus 7, a measurement apparatus 8, a display 91 and an input apparatus 92, as illustrated in FIG. 1 and FIG. 2. At least a part of the build apparatus 2, the stage apparatus 3 and the measurement apparatus 8 is housed in a chamber space 63IN in the housing 6.

The material supply apparatus 1 supplies the build materials M to the build apparatus 2. The material supply apparatus 1 supplies, to the build apparatus 2, the build materials M the amount of which is necessary for the build apparatus 2 to form the three-dimensional structural object ST per unit time by supplying a desire amount of the build materials M based on the necessary amount.

The build material M is a material that is molten by an irradiation of the processing light EL having a predetermined intensity or more intensity. At least one of a metal material and a resin material is usable as the build material M, for example. However, another material that is different from the metal material and the resin material may be used as the build material M. The build materials M are powder-like materials. Namely, the build materials M are powdery materials. The powdery materials may include not only the powder-like materials but also grain-like materials. The build materials M may include the powdery material a particle size of which is within a range of 90 micrometer ± 40 micrometer, for example. An average particle size of the powdery materials included in the build materials M may be 75 micrometer or another size, for example. However, the build materials M may not be the powdery materials, and a wire-shaped material or a gaseous material may be used, for example. Note that the processing system SYS may form the build object by processing the build materials M with an energy beam such as a charged particle beam.

The build apparatus 2 forms the three-dimensional structural object ST by using the build materials M supplied from the material supply apparatus 1. In order to form the three-dimensional structural object ST by using the build materials M, the build apparatus 2 is provided with a build head 21, a head driving system 22, a position measurement apparatus 23 and a plurality of (for example, two) guide light emitting apparatuses 24. Note that the build apparatus 2 may be referred to as a build unit. Moreover, the build head 21 is provided with an irradiation optical system 211 and a material nozzle 212 (namely, a supply system that supplies the build materials M). The build head 21 and the head driving system 22 are housed in the chamber space 63IN. However, at least a part of the build head 21 and / or the head driving system 22 may be disposed in an external space 64OUT that is a space at the outside of the housing 6. Note that the external space 64OUT may be a space in which an operator of the processing system SYS is allowed to enter. The build apparatus 2 may be referred to as an additive processing apparatus, because it is an apparatus that builds the three-dimensional structural object ST that is the build object by the additive processing.

The irradiation optical system 211 is an optical system (for example, a condensing optical system) for emitting the processing light EL from an emitting part 213. Specifically, the irradiation optical system 211 is optically connected to the light source 4 that generates the processing light EL through a non-illustrated light transmitting member such as an optical fiber and light pipe. The irradiation optical system 211 emits the processing light EL transmitted from the light source 4 through the light transmitting member. The irradiation optical system 211 emits the processing light EL so that the processing light EL propagates in the chamber space 63IN. The irradiation optical system 211 emits the processing light EL in a downward direction (namely, toward a -Z side) from the irradiation optical system 211. The stage 31 is disposed below the irradiation optical system 211. When the workpiece W is placed on the stage 31, the irradiation optical system 211 emits the processing light EL toward the workpiece W. Specifically, the irradiation optical system 211 irradiates an irradiation area EA that is set on the workpiece W as an area that is irradiated with the processing light EL (typically, in which the light is condensed). Moreover, a state of the irradiation optical system 211 is switchable between a state where the irradiation area EA is irradiated with the processing light EL and a state where the irradiation area EA is not irradiated with the processing light EL under the control of the control apparatus 7. Note that a direction of the processing light EL emitted from the irradiation optical system 211 is not limited to a direct downward direction (namely, coincident with the -Z axis direction), and may be a direction that is inclined with respect to the Z axis by a predetermined angle, for example.

The material nozzle 212 has a supply outlet 214 that supplies the build materials M. The material nozzle 212 supplies (specifically, injects, blows out or sprays) the build materials M from the supply outlet 214. The material nozzle 212 is physically connected to the material supply apparatus 1 that is a supply source of the build materials M through a non-illustrated pipe and the like. The material nozzle 212 supplies the build materials M supplied from the material supply apparatus 1 through the pipe. The material nozzle 212 may pressure-feed the build materials M supplied from the material supply apparatus 1 through the pipe. Namely, the build materials M from the material supply apparatus 1 and gas (for example, inert gas such as Nitrogen or Argon) for feeding are mixed and pressure-fed to the material nozzle 212 through the pipe. In this case, purge gas supplied from the gas supply apparatus 5 may be used as the gas for feeding, for example. Note that although the material nozzle 212 is illustrated to have a tube-like shape in FIG. 1, the shape of the material nozzle 212 is not limited to this shape. The material nozzle 212 supplies the build materials M toward the chamber space 63IN. The material nozzle 212 supplies the build materials M in a downward direction (namely, toward the -Z side) from the material nozzle 212. The stage 31 is disposed below the material nozzle 212. When the workpiece W is loaded on the stage 31, the material nozzle 212 supplies the build materials M toward the workpiece W. Note that although a moving direction of the build materials M supplied from the material nozzle 212 is a direction that is inclined with respect to the Z axis by a predetermined angle (as one example, an acute angle), it may be the -Z axis direction (namely, a direct downward direction).

In the first embodiment, the material nozzle 212 is aligned with the irradiation optical system 211 so as to supply the build materials M to the irradiation area EA that is irradiated with the processing light EL by the irradiation optical system 211. Namely, the material nozzle 212 is aligned with the irradiation optical system 211 so that the irradiation area EA is coincident with (alternatively, at least partially overlaps with) a supply area MA that is set on the workpiece W as an area to which the material nozzle 212 supplies the build materials M. Note that the material nozzle 212 may aligned so as to supply the build materials M to a melt pool MP that is formed at the workpiece W by the processing light EL emitted from the irradiation optical system 211.

The head driving system 22 moves the build head 21. The head driving system 22 moves the build head 21 in the chamber space 63IN, for example. The head driving system 22 moves the build head 21 along at least one of the X axis, the Y axis and the Z axis. When the build head 21 moves along at least one of the X axis and the Y axis, each of the irradiation area EA and the supply area MA moves on the workpiece W along at least one of the X axis and the Y axis. Furthermore, the head driving system 22 may move the build head 21 along a rotational direction that includes at least one of the θX direction, the θY direction and the θZ direction, in addition to or instead of at least one of the X axis, the Y axis and the Z axis. In other words, the head driving system 22 may rotate the build head 21 around at least one of the X axis, the Y axis and the Z axis. The head driving system 22 may change an attitude of the build head 21 around at least one of the X axis, the Y axis and the Z axis. The head driving system 22 includes a motor, for example.

Note that the head driving system 22 may move the irradiation optical system 211 and the material nozzle 212 separately. Specifically, for example, the head driving system 22 may be configured to adjust at least one of a position of the emitting part 213, a direction of the emitting part 213, a position of the supply outlet 214 and a direction of the supply outlet 214. In this case, the irradiation area EA that is irradiated with the processing light EL by the irradiation optical system 211 and the supply area MA to which the material nozzle 212 supplies the build materials M are controllable separately.

The position measurement apparatus 23 is configured to measure a position of the build head 21. The position measurement apparatus 23 may include at least one of an encoder and a laser interferometer, for example.

The guide light emitting apparatus 24 is disposed at the build head 21. The guide light emitting apparatus 24 emits guide light GL. The guide light emitting apparatus 24 emits guide light GL so that the guide light GL propagates in the chamber space 63IN. The plurality of guide light emitting apparatuses 24 are aligned with each other so that a plurality of guide lights GL that are emitted from the plurality of guide light emitting apparatuses 24, respectively, intersect with each other at a certain position below the build head 21. Especially, the plurality of guide light emitting apparatuses 24 are aligned with each other so that the plurality of guide lights GL intersect with each other at a light concentration position of the processing light EL. It can be said that the plurality of guide light emitting apparatuses 24 are aligned with each other so that the plurality of guide lights GL intersect with each other at an additive processed position at which the build apparatus 2 performs the additive processing, because the build apparatus 2 processes the object (namely, performs the additive processing) mainly at the light concentration position of the processing light EL. The additive processed position typically overlaps with the position of each of the irradiation area EA and the supply area MA at least partially. Note that a usage of the guide emitting apparatuses 24 will be described later in detail. Note that the alignment may be performed so that the plurality of guide lights GL intersect with each other at a position (a defocus position) that is distant from the light concentration position of the processing light EL.

The stage apparatus 3 is provided with the stage 31. The stage 31 is housed in the chamber space 63IN. The stage 31 is configured to support the workpiece W. Note that a state where "the stage 31 supports the workpiece W" here may mean a state where the workpiece W is directly or indirectly supported by the stage 31. The stage 31 may be configured to hold the workpiece W. Namely, the stage 31 may support the workpiece W by holding the workpiece W. Alternatively, the stage 31 may not be configured to hold the workpiece W. In this case, the workpiece W may be placed on the stage 31. Namely, the stage 31 may support the workpiece W placed on the stage 31. In this case, the workpiece W may be placed on the stage 31 without a clamp. Therefore, the state where "the stage 31 supports the workpiece W" in the present embodiment may include a state where the stage 31 holds the workpiece W and a state where the workpiece W is placed on the stage 31. The stage 31 may be referred to as a support apparatus that supports the workpiece W, a placement apparatus on which the workpiece W is placed, a holding apparatus that holds the workpiece W or a table. Since the stage 31 is housed in the chamber space 63IN, the workpiece W supported by the stage 31 is also housed in the chamber space 63IN. Moreover, when the stage 31 may be configured to release the held workpiece W, the workpiece W is held. The above described irradiation optical system 211 emits the processing light EL in at least a part of a period when the stage 31 supports the workpiece W. Moreover, the above described material nozzle 212 supplies the build materials M in at least a part of the period when the stage 31 supports the workpiece W. Note that there is a possibility that a part of the build materials M supplied by the material nozzle 212 is scattered or falls to the outside of the workpiece W (for example, around the stage 31) from a surface of the workpiece W. Thus, the processing system SYS may be provided with a recovery apparatus that recovers the build material M scattered or falling around the stage 31. Note that the stage 31 may be provided with a mechanical chuck, a vacuum chuck and the like in order to hold the workpiece W.

The light source 4 emits, as the processing light EL, at least one of an infrared light and an ultraviolet light, for example. However, another type of light, for example, a light in a visible range may be used as the processing light EL. The processing light EL is a laser light. In this case, the light source 4 may include a laser light source such as a semiconductor laser. At least one of a Laser Diode (LD)), a fiber laser, a CO₂ laser, a YAG laser, an Excimer laser and the like is one example of the laser light source. However, the processing light EL may not be the laser light and the light source 4 may include any light source (for example, at least one of a LED (Light Emitting Diode), a discharge lamp and the like).

The gas supply apparatus 5 is a supply source of the purge gas for purging the chamber 631IN. The purge gas includes inert gas. The Nitrogen gas or Argon gas is one example of the inert gas. The gas supply apparatus 5 supplies the purge gas to the chamber space 63IN. As a result, the chamber space 63IN is a space that is purged by the purge gas. Note that the gas supply apparatus 5 may be a tank that stores the inert gas such as the Nitrogen gas or the Argon gas. When the purge gas is the Nitrogen gas, the gas supply apparatus 5 may be a Nitrogen gas generation apparatus that generates the Nitrogen gas by using air as material.

The housing 6 is a housing apparatus that houses at least a part of each of at least the build apparatus 2 and the stage apparatus 3 in the chamber space 63IN that is an internal space of the housing 6. The housing 6 is provided with a wall member 61 that forms the chamber space 63IN. The wall member 61 is a member that separates the chamber space 63IN from the external space 64OUT at the outside of the housing 6. The wall member 61 faces the chamber space 63IN through its inner wall 611 and faces the external space 64OUT through its outer wall 612. In this case, a space surrounded by the wall member 61 (more specifically, a space surrounded by the inner wall 611 of the wall member 61) is the chamber space 63IN. Note that an openable and closable door may be disposed at the wall member 61. The door may be opened when the workpiece W is to be placed on the stage 31. The door may be opened when the workpiece W and / or a build object (for example, the three-dimensional structural object ST) is unloaded from the stage 31. The door may be closed when the build apparatus 2 builds the build object.

The control apparatus 7 controls an operation of the processing system SYS. The control apparatus 7 may include a CPU (Central Processing Unit) (alternatively, a GPU (Graphic Processing Unit) in addition to or instead of the CPU) and a memory, for example. The control apparatus 7 serves as an apparatus for controlling the operation of the processing system SYS by means of the CPU executing a computer program. The computer program is a computer program that allows the control apparatus 7 (for example, the CPU) to execute (namely, to perform) a below described operation that should be executed by the control apparatus 7. Namely, the computer program is a computer program that allows the control apparatus 7 to function so as to make the processing system SYS execute the below described operation. The computer program executed by the CPU may be recorded in the memory (namely, a recording medium) of the control apparatus 7, or may be recorded in any recording medium (for example, a hard disk or a semiconductor memory) that is built in the control apparatus 7 or that is attachable to the control apparatus 7. Alternatively, the CPU may download the computer program that should be executed from an apparatus disposed at the outside of the control apparatus 7 through a network interface.

For example, the control apparatus 7 may control an emitting aspect of the processing light EL by the irradiation optical system 211. The emitting aspect may include at least one of an intensity of the processing light EL and an emitting timing of the processing light EL, for example. When the processing light EL is a pulse light, the emitting aspect may include a ratio (a duty ratio) of a length of an ON time of the pulse light and an emission cycle of the pulse light, for example. Moreover, the emission aspect may include the length of the ON time of the pulse light itself and the emission cycle itself, for example. Moreover, the control apparatus 7 may control a moving aspect of the build head 21 by the head driving system 22. The moving aspect may include at least one of a moving distance, a moving speed, a moving direction and a moving timing, for example. Moreover, the control apparatus 7 may controls a supply aspect of the build materials M by the material supply apparatus 1. The supply aspect of the build materials M by the material nozzle 212 is mainly determined on the basis of the supply aspect of the build materials M by the material supply apparatus 1. Thus, controlling the supply aspect of the build materials M by the material supply apparatus 1 may be regarded to control the supply aspect of the build materials M by the material nozzle 212. The supply aspect may include at least one of the supplied amount (especially, the supplied amount per unit time) and a supply timing.

The control apparatus 7 may not be disposed in the processing system SYS, and may be disposed at the outside of the processing system SYS as a server or the like. In this case, the control apparatus 7 may be connected to the processing system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the processing system SYS may be configured to transmit and receive various information through the network. Moreover, the control apparatus 7 may be configured to transmit an information such as a command and a control parameter to the processing system SYS through the network. The processing system SYS may be provided with a receiving apparatus that receives the information such as the command and the control parameter from the control apparatus 7 through the network. The processing system SYS may be provided with a transmitting apparatus that transmits the information such as the command and the control parameter to the control apparatus 7 through the network (namely, an output apparatus that outputs the information to the control apparatus 7). Alternatively, a first control apparatus that performs a part of the processing performed by the control apparatus 7 may be disposed in the processing system SYS and a second control apparatus that performs another part of the processing performed by the control apparatus 7 may be disposed at the outside of the processing system SYS.

Note that the recording medium recording therein the computer program that should be executed by the CPU may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. Moreover, the recording medium includes a device that is configured to record the computer program (for example, a device for a universal use or a device for an exclusive use in which the computer program is embedded to be executable in a form of at least one of a software, a firmware and the like). Moreover, various processes or functions included in the computer program may be realized by a logical process block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes an partial element of the hardware are combined.

The measurement apparatus 8 is configured to measure a measurement target object under the control of the control apparatus 7. A measured result by the measurement apparatus 8 is outputted from the measurement apparatus 8 to the control apparatus 7. Note that the measurement apparatus 8 may be referred to as a measurement unit.

The measurement may include a measurement of a position of the measurement target object. The position of the measurement target object may include a position of each segmentalized part (namely, each portion) of the measurement target object in at least one of the X axis direction, the Y axis direction and the Z axis direction. The position of the measurement target object may include a position of a surface of the measurement target object. The position of the surface of the measurement target object may include a position of each segmentalized part (namely, each portion) of the surface of the measurement target object in at least one of the X axis direction, the Y axis direction and the Z axis direction. The measurement may include a measurement of a shape (for example, a three-dimensional shape) of the measurement target object. The shape of the measurement target object may include a direction of each segmentalized part of the measurement target object (for example, a direction of a normal line of each part, and this is equivalent to an inclination amount of each part with respect to at least one of the X axis direction, the Y axis direction and the Z axis direction). The shape of the measurement target object may include a shape of the surface of the measurement target object. The shape of the surface of the measurement target object may include a direction of each segmentalized part of the surface of the measurement target object (for example, a direction of a normal line of each part, and this is equivalent to an inclination amount of each part with respect to at least one of the X axis direction, the Y axis direction and the Z axis direction (namely, an attitude of each part)). Note that the measurement may include a measurement of an attribute of the measurement target object. The attribute of the measurement target object may include at least one of a reflectance of the measurement target object, a spectral reflectance of the measurement target object, a surface roughness of the measurement target object and so on.

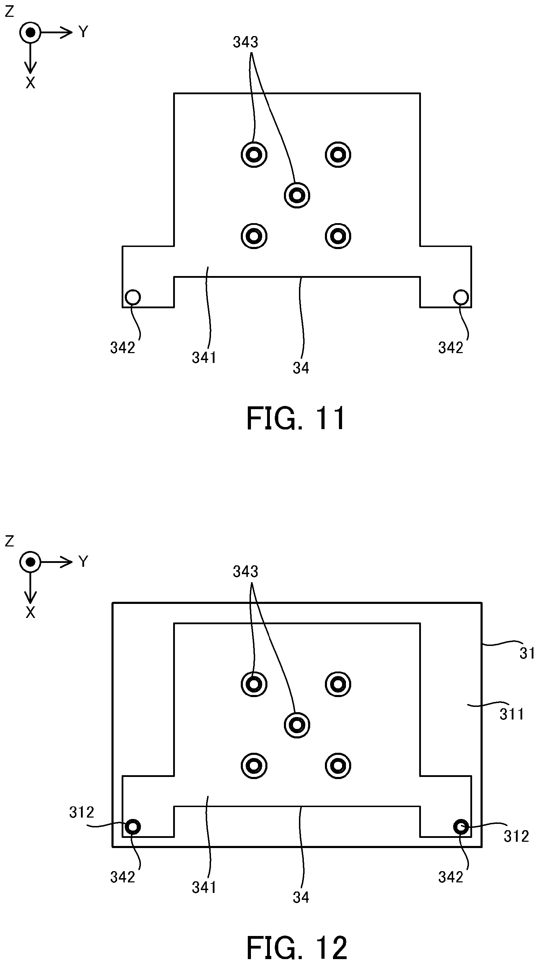

In the first embodiment, the measurement target object include an object placed on the placement surface 311 of the stage 31, for example. Thus, a measurement range of the measurement apparatus 8 is set to a desired range so as to measure the object placed on the placement surface 311. The above described workpiece W is one example of the object placed on the placement surface 311. The three-dimensional structural object ST that is formed on the workpiece W is another example of the object placed on the placement surface 311. A below described fiducial member 34 (see FIG. 11 and so on) is another example of the object placed on the placement surface 311.

The measurement apparatus 8 may have any structure as long as it is configured to measure the measurement target object. The measurement apparatus 8 may be any type of measurement apparatus as long as it is configured to measure the measurement target object. FIG. 1 and FIG. 2 illustrates an example in which the measurement apparatus 8 is a 3D scanner. Namely, FIG. 1 and FIG. 2 illustrates an example in which the measurement apparatus 8 optically measures the measurement target object. FIG. 1 and FIG. 2 illustrates an example in which the measurement apparatus 8 measures the measurement target object without contacting with the measurement target object. Namely, FIG. 1 and FIG. 2 illustrates an example in which the measurement apparatus 8 measures the measurement target object in a non-contact manner. However, the measurement apparatus 8 may measure the measurement target object by using a method, which is different from the optical method, for example, by using electromagnetic wave or ultrasonic wave. The measurement apparatus 8 may measure the measurement target object by contacting with the measurement target object. A measurement apparatus that measures the measurement target object while pressing a sensor such as a probe or the like against the measurement target object is one example of the measurement apparatus that measures the measurement target object by contacting with the measurement target object.

When the measurement apparatus 8 is the 3D scanner, the measurement apparatus 8 is provided with a projection apparatus 81 and an imaging apparatus 82, as illustrated in FIG. 2. In an example illustrated in FIG. 2, the measurement apparatus 8 is provided with a plurality of imaging apparatuses 82. More specifically, in an example illustrated in FIG. 2, the measurement apparatus 8 is provided with two imaging apparatuses 82 (specifically, the imaging apparatus 82#1 and the imaging apparatus 82#2). However, the measurement apparatus 8 may be provided with a single imaging apparatus 82.

The projection apparatus 81 irradiates measurement light DL with the placement surface 311. The measurement light DL is light for projecting a desired projection pattern on the placement surface 311. The measurement light DL is light for projecting the desired projection pattern on the measurement target object placed on the placement surface 311. The desired projection pattern may include one-dimensional pattern. The desired projection pattern may include two-dimensional pattern. The projection apparatus 81 may project a single type of projection pattern on the measurement target object. Alternatively, the projection apparatus 81 may project a plurality of types of projection patterns on the measurement target object.

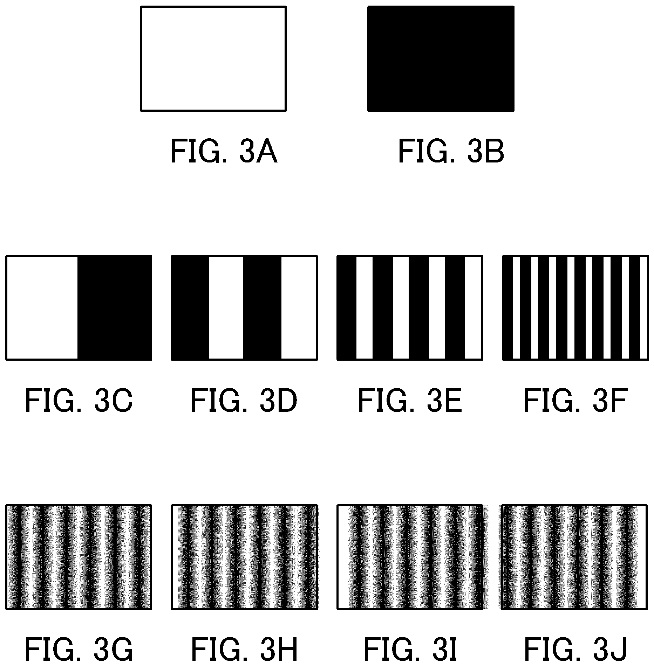

FIG. 3A to FIG. 3J illustrate examples of the projection pattern. FIG. 3A illustrates the projection pattern that corresponds to a white image. FIG. 3B illustrates the projection pattern that corresponds to a black image. FIG. 3A and FIG. 3B may be used to measure a state of environmental light. FIG. 3C to FIG. 3F illustrate a plurality of projection patterns that correspond to stripe patterns that are different from each other (for example, a plurality of projection patterns the numbers and widths of the stripe of which are different from each other). FIG. 3G to FIG. 3J illustrate a plurality of projection patterns that correspond to gray patterns (in other word, phase shift patterns) phases of which are different from each other.

The projection apparatus 8 may project the plurality of projection patterns illustrated in FIG. 3A and FIG. 3B in sequence, then project the plurality of projection patterns illustrated in FIG. 3C to FIG. 3F in sequence, and then project the plurality of projection patterns illustrated in FIG. 3G to FIG. 3J in sequence. In this case, a cycle width of a gray code included in the projection pattern illustrated in each of FIG. 3G to FIG. 3J may be equal to a minimum width of the stripe included in the projection pattern illustrated in each of FIG. 3C to FIG. 3F. Note that a stereo phase shift method is one example of a method of imaging the measurement target object on which the phase shift pattern is projected by using the plurality of imaging apparatuses 82 to measure a state of the measurement target object.

The imaging apparatus 82 images the placement surface 311. The imaging apparatus images the measurement target object placed on the placement surface 311. Especially, the imaging apparatus 82 images the projection pattern projected on the measurement target object. The control apparatus 8 generates measurement information relating to the state of the measurement target object measured by the measurement apparatus 8 (namely, measurement information relating to a measured result of the measurement target object by the measurement apparatus 8) on the basis of an imaged result by the imaging apparatuses 82 (especially, information relating to the imaged projection patterns). Since the measurement includes at least one of a position measurement and a shape measurement of the measurement target object, the measurement information may include at least one of measurement position information relating to the position of the measurement target object measured by the measurement apparatus 8 and measurement shape information relating to the shape of the measurement target object measured by the measurement apparatus 8. In this case, the control apparatus 7 may be configured to serve as an information generation apparatus for generating the measurement information (namely, at least one of the measurement position information and the measurement shape information).

The measurement information may include either one of the measurement position information and the measurement shape information. The measurement information may include both of the measurement position information and the measurement shape information. Especially, the measurement information may be information in which the measurement position information is associated with the measurement shape information. "The measurement information in which the measurement position information is associated with the measurement shape information" means information from which both of the position and the shape of each part of the measurement target object is determinable. Thus, when the measurement information is used, a situation does not occur where the position of a certain part of the measurement target object is determinable but the shape of the same part of the measurement target object is not determinable. In the below describe description, an example in which the measurement information is the information in which the measurement position information is associated with the measurement shape information will be described, for convenience of the description. Note that this measurement information may not include the measurement position information and the measurement shape information as separate and independent different information, and the measurement information may have any data structure as long as both of the position and the shape of each part of the measurement target object are determinable.

The measurement apparatus 8 is isolated from the chamber space 63IN by a wall member 83. The measurement apparatus 8 is disposed in a space that is isolated from the chamber space 63IN by the wall member 83. This prevents substance existing in the chamber space 63IN from being attached to the measurement apparatus 8. Note that the build material M supplied from the material nozzle 212 to the chamber space 63IN and a substance that is generated from a below described build surface MS due to the irradiation of the processing light EL are examples of the substance existing in the chamber space 63IN. Fume including at least one of a micro particle of the molten build material M and a micro particle of a molten material of the workpiece W is one example of the substance that is generated from the below described build surface MS due to the irradiation of the processing light EL.

The wall member 83 is provided with a light transmission member 84 through which the measurement light DL is allowed to pass and by which the above described substance is blocked at a position where an optical path of the measurement light DL emitted from the projection apparatus 81 intersects with the wall member 83. As a result, even when the measurement apparatus 8 is isolated from the chamber space 63IN by the wall member 83, the measurement apparatus 8 properly irradiates the measurement target object disposed in the chamber space 63IN with the measurement light DL. Note that the measurement apparatus 8 may not be isolated from the chamber space 63IN by the wall member 83. For example, the measurement apparatus 8 may be disposed in the chamber space 63IN. When the measurement apparatus 8 is disposed in the chamber space 63IN, the measurement apparatus 8 may be dust resistant.

The display 91 is a display device that is configured to display a desired image under the control of the controller 7. For example, the display 91 may display information relating to the processing system SYS. For example, the display 91 may display information relating to the three-dimensional structural object ST. For example, the display 91 may display information relating to the workpiece W. For example, the display 91 may display information to the imaged result by the imaging apparatuses 82.

Note that the display 91 may not be disposed in the processing system SYS. For example, the display 91 may be disposed at an outside of the processing system SYS as an external display. _In this case, the display 91 may be connected to the processing system SYS by a wired and / or wireless network (alternatively, a cable, a data bus and / or a communication line). In this case, the control apparatus 7 may be configured to transmit and receive (namely, input and output) various types of information to and from the display 91 through the network. The display 91 may be provided with: a transmitting and receiving part (namely, and inputting and outputting part) that transmits / receives information to / from the control apparatus 7 (furthermore, to / from another apparatus of the processing system SYS through or without the control apparatus 7); and a display part that displays the image.

The input apparatus 92 is an apparatus that receives an input of information from the outside of the processing system SYS. For example, the input apparatus 92 may receive the input of the information from a user of the processing system SYS. For example, the input apparatus 92 may receive the input of the information from an apparatus at the outside of the processing system SYS. For example, the input apparatus 92 may receive the input of the information from a recording medium that is attachable to the processing system SYS. An operation apparatus that is operable by the user is one example of the input apparatus 92. At least one of a keyboard, a mouse, a touch pad, a touch panel (for example, a touch panel that is integrated with the display 91) and a pointing device is one example of the operation apparatus. An interface apparatus for connecting to the apparatus at the outside of the processing system SYS is another example of the input apparatus 92. A reading apparatus that is configured to read the recording medium that is attachable to the processing system SYS is another example of the input apparatus 92. The information the input of which is received by the input apparatus 92 (namely, the information inputted to the input apparatus 92) is outputted to the control apparatus 7, for example.

The input apparatus 92 may receive the input of the information through a display screen of the display 91. For example, the input apparatus 92 may receive the input of the information through a GUI (graphical user interface) displayed on the display screen of the display 91. For example, the input apparatus 92 may receive the input of the information regarding a user's operation of the GUI displayed on the display screen of the display 91. In this case, the display 91 may display an image (for example, the above described GUI) for receiving the input of the information through the input apparatus 92 under the control of the control apparatus 7. In this way, the display apparatus may also serve as the input apparatus 92.

Note that the input apparatus 92 may not be disposed in the processing system SYS. For example, the input apparatus 92 may be disposed at an outside of the processing system SYS as an external input apparatus. In this case, the input apparatus 92 may be connected to the processing system SYS by a wired and / or wireless network (alternatively, a cable, a data bus and / or a communication line). In this case, the control apparatus 7 may be configured to receive the information inputted to the input apparatus 92 through the network. In other word, the control apparatus 7 may be configured to serve as a receiving apparatus that receives the information inputted to the input apparatus 92 through the network. The input apparatus 92 may be provided with: a transmitting and receiving part (namely, and inputting and outputting part) that transmits / receives information to / from the control apparatus 7 (furthermore, to / from another apparatus of the processing system SYS through or without the control apparatus 7); and an input receiving part that receives an input from the outside of the processing system SYS.

### (2) Operation of Processing System SYS in First Embodiment

Next, a flow of an operation of the processing system SYS will be described. In the first embodiment, the processing system SYS performs a workpiece model alignment operation under the control of the control apparatus 7. Then, the processing system SYS performs a build model alignment operation under the control of the control apparatus 7. Then, the processing system SYS performs a build operation under the control of the control apparatus 7. Moreover, the processing system SYS may perform a coordinate matching operation before the workpiece model alignment operation under the control of the control apparatus 7. Thus, in the below described description, the coordinate matching operation, the workpiece model alignment operation, the build model alignment operation and the build operation will be described in sequence.

### (2-1) Coordinate Matching Operation

Firstly, the coordinate matching operation will be described. The coordinate matching operation is an operation for associating a build coordinate system, a stage coordinate system and a measurement coordinate system with one another. The build coordinate system is a three-dimensional coordinate system that is used to determine the position of the build head 21. For example, the head driving system 22 moves the build head 21 on the basis of information relating to the position of the build head 21 determined in the build coordinate system. For example, the position measurement apparatus 23 measures the position of the build head 21 in the build coordinate system. The stage coordinate system is a three-dimensional coordinate system that is used to determine a position on the stage 31 (especially, a position on the placement surface 311). Alternatively, the stage coordinate system may be a three-dimensional coordinate system that is used to determine the position of the stage 31. When the stage 31 is movable by a below described stage driving system, the stage driving system may move the stage 31 on the basis of information relating to the position of the stage 31 determined in the stage coordinate system. The measurement coordinate system is a three-dimensional coordinate system that is used to determine the position of the measurement target object measured by the measurement apparatus 8. Namely, the measurement coordinate system is a three-dimensional coordinate system that is used to determine a position in a measurement range of the measurement apparatus 8. The control apparatus 7 generates the measurement position information relating to the position of the measurement target object in the measurement coordinate system on the basis of the measured result by the measurement apparatus 8.

When the build coordinate system, the stage coordinate system and the measurement coordinate system are associated with one another, a coordinate of a certain position in either one coordinate system of the build coordinate system, the stage coordinate system and the measurement coordinate system is convertible to a coordinate of a certain position in another coordinate system of the build coordinate system, the stage coordinate system and the measurement coordinate system. Therefore, it can be said that the coordinate matching operation is equivalent to an operation of obtaining information (for example, a conversion matrix) for converting a coordinate in the build coordinate system to a coordinate in each of the stage coordinate system and the measurement coordinate system, information (for example, a conversion matrix) for converting a coordinate in the stage coordinate system to a coordinate in each of the build coordinate system and the measurement coordinate system and information (for example, a conversion matrix) for converting a coordinate in the measurement coordinate system to a coordinate in each of the build coordinate system and the stage coordinate system.

Note that the processing system SYS may not perform the coordinate matching operation, when the information (for example, the information relating to the conversion matrix) obtained by the coordinate matching operation is already known to the control apparatus 7. For example, when the information obtained by the coordinate matching operation is inputted to the processing system SYS through the input apparatus 92, the processing system SYS may not perform the coordinate matching operation.

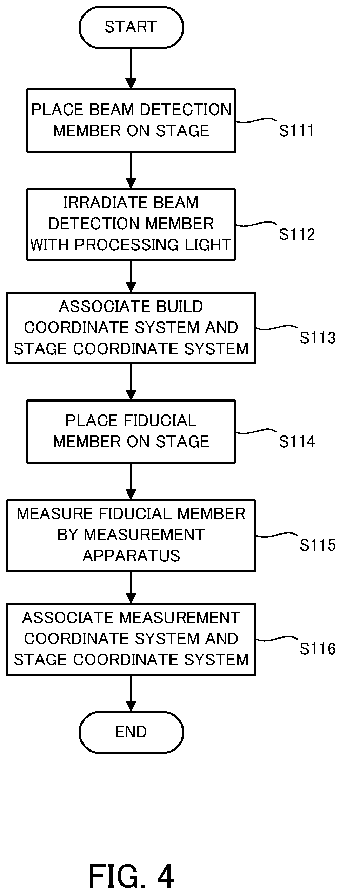

Next, with reference to FIG. 4, a flow of this coordinate matching operation will be described. FIG. 4 is a flowchart that illustrates the flow of this coordinate matching operation.

As illustrated in FIG. 4, the processing system SYS performs, as a part of the coordinate matching operation, an operation of associating the build coordinate system with the stage coordinate system (a step S111 to a step S113). Furthermore, the processing system SYS performs, as a part of the coordinate matching operation, an operation of associating the measurement coordinate system with the stage coordinate system (a step S114 to a step S116). When the build coordinate system is associated with the stage coordinate system and the measurement coordinate system is associated with the stage coordinate system, the build coordinate system is indirectly associated with the measurement coordinate system through the stage coordinate system. Thus, the build coordinate system, the stage coordinate system and the measurement coordinate system are associated with one another by performing the processes from the step S111 to the step S116.

FIG. 4 illustrates an example in which the processing system SYS performs the operation of associating the measurement coordinate system with the stage coordinate system after performing the operation of associating the build coordinate system with the stage coordinate system. However, the processing system SYS may perform the operation of associating the build coordinate system with the stage coordinate system after performing the operation of associating the measurement coordinate system with the stage coordinate system.

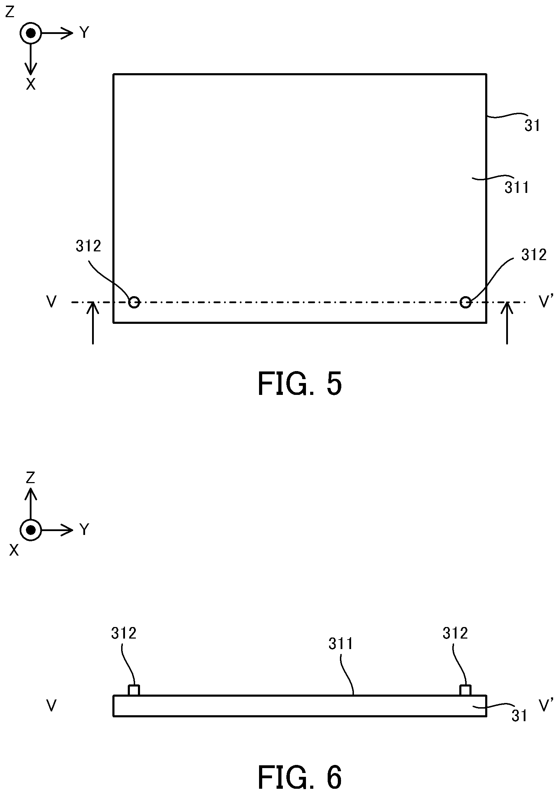

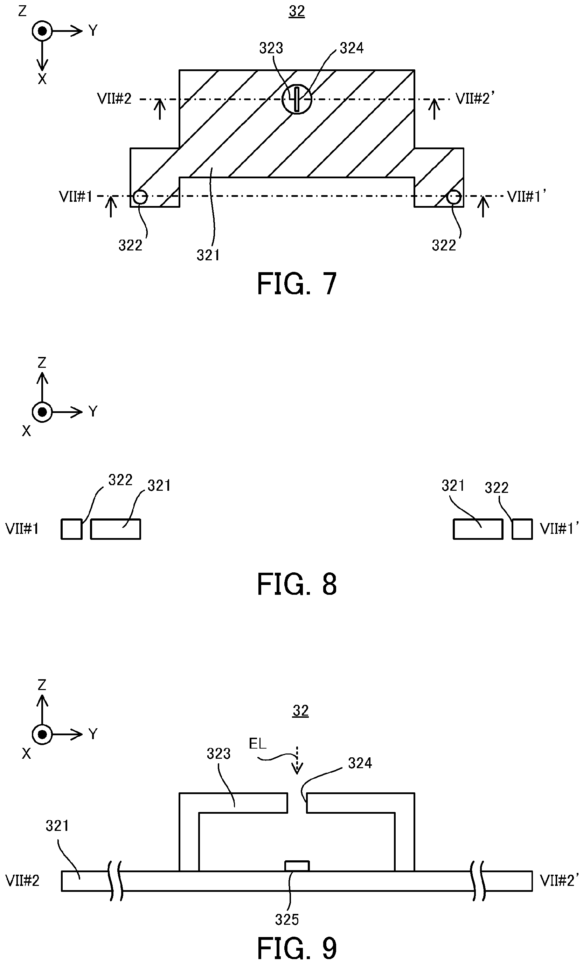

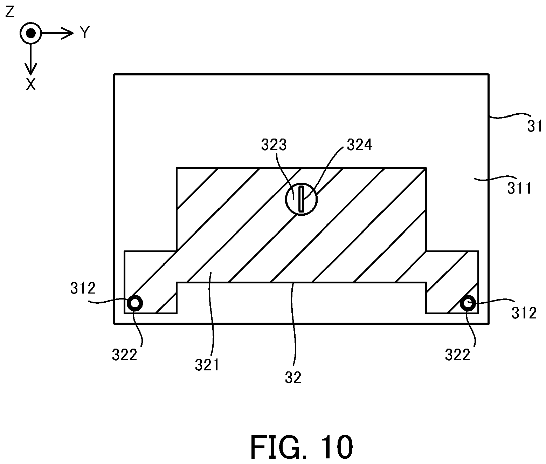

In order to associate the build coordinate system with the stage coordinate system, firstly, a beam detection member 32 is placed on the placement surface 311 of the stage 31 (the step S111). Especially, the beam detection member 32 is placed on the placement surface 311 so that a positional relationship between the beam detection member 32 and the placement surface 311 is a desired first positional relationship. In the first embodiment, in order to place the beam detection member 32 on the placement surface 311 so that the positional relationship between the beam detection member 32 and the placement surface 311 is the desired first positional relationship, a mark for an alignment is formed on each of the beam detection member 32 and the placement surface 311. Next, with reference to FIG. 5 to FIG. 10, examples of the placement surface 311 and the beam detection member 32 on which the marks for the alignment are formed will be described. FIG. 5 is a planar view that illustrates the stage 31 including the placement surface on which the mark for the alignment is formed. FIG. 6 is a V-V' cross-sectional view of the stage 32 illustrated in FIG. 5. FIG. 7 is a planer view that illustrates the beam detection member 32 on which the mark for the alignment is formed. FIG. 8 is a VII#1-VII#1' cross-sectional view of the beam detection member 32 illustrated in FIG. 7. FIG. 9 is a VII#2-VII#2' cross-sectional view of the beam detection member 32 illustrated in FIG. 7. FIG. 10 is a planer view that illustrates the beam detection member 32 placed on the placement surface 311.

As illustrated in FIG. 5 and FIG. 6, a plurality of pins 312 are formed on the placement surface 311 as the marks for the alignment. Although two pins 312 are formed on the placement surface 311 in an example illustrated in FIG. 5 and FIG. 6, three or more pins 312 may be formed on the placement surface 311. The pin 312 is a member that protrudes from the placement surface 311 along the Z axis direction. Note that information relating to positions of the pins 312 in the stage coordinate system is information that is already known to the control apparatus 7.

As illustrated in FIG. 7 to FIG. 9, the beam detection member 32 is provided with a base member 321. The base member 321 is a plate-shaped member. The base member 321 has a shape and a size that allow it to be placed on the placement surface 311. A plurality of through-holes 322 are formed in the base member 321 as the marks for the alignment. Two through-holes 322 are formed in the base member 321 in an example illustrated in FIG. 7 and FIG. 8. The through-hole 322 penetrates the base member 321 along the Z axis direction.

In the first embodiment, as illustrated in FIG. 10, the beam detection member 32 is placed on the placement surface 311 so that the pins 312 are inserted into the through-holes 322. The beam detection member 32 is placed on the placement surface 311 in a state where the pins 312 are inserted into the through-holes 322. Thus, an arrangement aspect of the through-holes 322 is same as an arrangement aspect of the pins 312. Furthermore, the number of the through-holes 322 is equal to (alternatively, may be more than) the number of the pins 312. As a result, the beam detection member 32 is placed on the placement surface 311 to have the desired first positional relationship relative to the placement surface 311. The beam detection member 32 is placed on the placement surface 311 to have the desired first positional relationship relative to the pins 312 on the placement surface 311. The beam detection member 32 is placed on the placement surface 311 to satisfy the desired first positional relationship that the pins 312 on the placement surface 311 overlap with the through-holes 322 of the beam detection member 32 along the Z axis direction. The beam detection member 32 is placed on the placement surface 311 to satisfy the desired first positional relationship that a position in the X axis direction of a certain pin 312 is same as a position in the X axis direction of the through-hole 322 corresponding the certain pin 312 and a position in the Y axis direction of a certain pin 312 is same as a position in the Y axis direction of the through-hole 322 corresponding the certain pin 3 12.

The position at which the pin 312 is formed may be used as a fiducial position on the placement surface 311 in placing the beam detection member 32 on the placement surface 311. In this case, the beam detection member 32 is placed on the placement surface 311 in a state where it is aligned to have the desired first positional relationship relative to the fiducial position on the placement surface 311.

The beam detection member 32 is further provided with a light shield member 323. The light shield member 323 is a member that shields the processing light EL. The light shield member 323 is formed on an upper surface (namely, a surface that faces toward the +Z side) of the base member 321. An upper surface of the light shield member 323 is located above the upper surface of the base member 321. However, the upper surface of the light shield member 323 may be located below the upper surface of the base member 321 or may be located at the same height as the upper surface of the base member 321. At least a part of the light shield member 323 may be integrated with the base member 321. The light shield member 323 may be detachable from the base member 321.

An aperture 324 that penetrates the light shield member 323 along the Z axis direction is formed at the light shield member 323. A shape of the aperture 324 in a plane along the XY plane is slit shape, however, may be any other shape such as a circular shape (a pin-hole shape), an oblong shape and a polygonal shape. The aperture 324 is a through-hole through which the processing light EL is allowed to pass.

The beam detection member 32 is further provided with a beam detector 325. The beam detector 325 is disposed at a position at which the processing light EL passing through the aperture 324 is optically receivable. And, the aperture 324 is disposed at a position that has a predetermined positional relationship relative to the through-holes 322. In this case, information relating to a positional relationship between the aperture 324 and the through-holes 322 is information that is already known to the control apparatus 7. As a result, for example, when the beam detection member 32 is provided with single beam detector 325 (typically, a photoelectric converter such as a photometric sensor by which the received processing light EL is photoelectrically convertible), a positional relationship between the aperture 324 and the processing light EL is calculatable from an output of the photoelectric converter. Typically, the beam detector 325 is disposed below (namely, at the -Z side from) the light shield member 323.

Note that a diffuser plate that diffuses the processing light EL or the guide light GL may be disposed between the aperture 324 and the beam detector 325 and / or at an incident side of the aperture 324. Moreover, a cover glass for protecting the aperture 324 may be disposed at the incident side of the aperture 324.

The bead detection member 32 may be provided with single beam detector 325 as described above or may be provided with a plurality of beam detectors 325. When the bead detection member 32 is provided with the plurality of beam detectors 325, a plurality of apertures 324 that correspond to the plurality of beam detectors 325, respectively, may be formed at the light shield member 323. In this case, each beam detector 325 detects the processing light EL that enters each beam detector 325 through the aperture 324 corresponding to each beam detector 325.

A detected result by the beam detector 325 may include information relating to a state of the processing light EL that enters the beam detector 325. For example, the detected result by the beam detector 325 includes information relating to an intensity (more specifically, an intensity in a plane that intersects with the XY plane) of the processing light EL that enters the beam detector 325. More specifically, the detected result by the beam detector 325 includes information relating to an intensity distribution in the plane along the XY plane of the processing light EL. The detected result by the beam detector 325 is outputted to the control apparatus 7.

Again in FIG. 4, after the beam detection member 32 is placed on the placement surface 311, the build apparatus 2 irradiates the beam detection member 32 with the processing light EL (a step S112). Especially, the build apparatus 2 irradiates the bead detector 325 disposed in the beam detection member 32 with the processing light EL. When the bead detection member 32 is provided with the plurality of beam detectors 325, the build apparatus 2 irradiates the plurality of beam detectors 325 with the processing light EL in sequence. Specifically, the head driving system 22 moves the build head 21 so that the beam detector 325 is irradiated with the processing light EL. In this case, the head driving system 22 may move the build head 21 so that the processing light EL (more specifically, the irradiation area EA of the processing light EL) traverses the aperture 324 in the plane along the XY plane. The build head 21 emits the processing light EL during a period when it moves by the head driving system 22. As a result, the aperture 324 is irradiated with the processing light EL at a certain timing in the period when the build head 21 moves. Namely, the processing light EL is detected by the beam detector 325 at a certain timing in the period when the build head 21 moves.

Then, the control apparatus 7 associates the build coordinate system with the stage coordinate system on the basis of the detected result by the beam detector 325 at the step S112 (a step S113). Specifically, the detected result by the beam detector 32 indicates that the intensity of the processing light EL during a period when the aperture 324 is irradiated with at least a part of the processing light EL is higher than the intensity of the processing light EL during a period when the aperture 324 is not irradiated with the processing light EL. Thus, the control apparatus 7 determines a time when the aperture 324 is irradiated with the processing light EL (namely, a time when the beam detector 325 is irradiated with the processing light EL) on the basis of the detected result by the beam detector 325. Moreover, the control apparatus 7 determines the position of the build head 21 at the time when the beam detector 325 is irradiated with the processing light EL on the basis of the time when the aperture 324 is irradiated with the processing light EL and a measured result by the position measurement apparatus 23. Note that the control apparatus 7 may be capable of determining the position of the build head 21 that is in a state where it is allowed to irradiate the beam detector 325 with the processing light EL on the basis of the output of the beam detector 325 and the measured result by the position measurement apparatus 23. Namely, the control apparatus 7 determines, in the build coordinate system, the position of the build head 21 that is in a state where it is allowed to irradiate the beam detector 325 with the processing light EL. Note that the position of the build head 21 herein may include a position of the build head 21 itself and may include a position that is unique to the build head 21. The additive processed position at which the build head 21 performs the additive processing (namely, the light concentration position of the processing light EL) is one example of the position that is unique to the build head 21. Furthermore, as described above, the information relating to the positional relationship between the aperture 324 and the through-holes 322 is the information that is already known to the control apparatus 7. Thus, the control apparatus 7 determines, in the build coordinate system, the position of the build head 21 that is in a state where it is allowed to irradiate the through-hole 322 with the processing light EL on the basis of information relating to the position of the build head 21 that is in the state where it is allowed to irradiate the aperture 324 with the processing light EL and the information relating to the positional relationship between the aperture 324 and the through-holes 322. Furthermore, as described above, the through-holes 322 overlap with the pins 312 along the Z axis direction in a situation where the beam detection member 32 is placed on the placement surface 311. Thus, the position of the build head 21 that is in the state where it is allowed to irradiate the through-hole 322 with the processing light EL may be regarded to be equivalent to the position of the build head 21 that is in a state where it is allowed to irradiate the pin 312 with the processing light EL. Furthermore, as described above, the information relating to the positions of the pins 312 in the stage coordinate system is the information that is already known to the control apparatus 7. Thus, the control apparatus 7 determines that the position in the build coordinate system of the build head 21 that is in the state where it is allowed to irradiate the pin 312 with the processing light EL and the position in the stage coordinate system at which the pin 312 is formed are positions that should be associated with each other. Namely, the control apparatus 7 determines that a specific position in the build coordinate system and a specific position in the stage coordinate system are positions that should be associated with each other. As a result, the control apparatus 7 associates the build coordinate system with the stage coordinate system on the basis of such a determined result that the specific position in the build coordinate system and the specific position in the stage coordinate system are positions that should be associated with each other. As a result, the control apparatus 7 determines, in the build coordinate system, the position of the build head 21 that is in a state where it is allowed to irradiate any position in the stage coordinate system with the processing light EL. Furthermore, the control apparatus 7 determines, in the stage coordinate system, a position (for example, the additive processed position) that is irradiated with the processing light EL by the build head 21 that is disposed at any position in the build coordinate system.

Next, in order to associate the measurement coordinate system with the stage coordinate system, firstly, a fiducial member 34 is placed on the placement surface 311 of the stage 31. Especially, the fiducial member 34 is placed on the placement surface 311 so that a positional relationship between the fiducial member 34 and the placement surface 311 is a desired second positional relationship. In the first embodiment, in order to place the fiducial member 34 on the placement surface 311 so that the positional relationship between the fiducial member 34 and the placement surface 311 is the desired second positional relationship, a mark for an alignment is formed on each of the fiducial member 34 and the placement surface 311. Specifically, the pin 312 formed on the placement surface 311 may be used as the mark even in the case where the fiducial member 34 is placed on the placement surface 311, as with the case where the beam detection member 32 is placed on the placement surface 311. Thus, in the below described description, the description about the placement surface 311 on which the mark for the alignment is formed is omitted and one example of the fiducial member 34 on which the mark for the alignment is formed will be described with reference to FIG. 11 to FIG. 12. FIG. 11 is a planer view that illustrates the fiducial member 34 on which the mark for the alignment is formed. FIG. 12 is a planer view that illustrates the fiducial member 34 placed on the placement surface 311. However, a mark that is different from the pin 312 formed on the placement surface 311 may be used as the mark for placing the fiducial member 34 on the placement surface 311.

As illustrated in FIG. 11, the fiducial member 34 is provided with a base member 341. The base member 341 is a plate-shaped member. The base member 341 has a shape and a size that allow it to be placed on the placement surface 311. A plurality of through-holes 342 are formed in the base member 341 as the marks for the alignment. Two through-holes 342 are formed in the base member 341 in an example illustrated in FIG. 11. The through-hole 342 penetrates the base member 341 along the Z axis direction.

In the first embodiment, as illustrated in FIG. 12, the fiducial member 34 is placed on the placement surface 311 so that the pins 312 are inserted into the through-holes 342. Thus, an arrangement aspect of the through-holes 342 is same as the arrangement aspect of the pins 312. Furthermore, the number of the through-holes 342 is equal to (alternatively, may be more than) the number of the pins 312. As a result, the fiducial member 34 is placed on the placement surface 311 to have the desired second positional relationship relative to the placement surface 311. The fiducial member 34 is placed on the placement surface 311 to have the desired second positional relationship relative to the pins 312 on the placement surface 311. The fiducial member 34 is placed on the placement surface 311 to satisfy the desired second positional relationship that the pins 312 on the placement surface 311 overlap with the through-holes 342 of the fiducial member 34 along the Z axis direction. The fiducial member 34 is placed on the placement surface 311 to satisfy the desired second positional relationship that a position in the X axis direction of a certain pin 312 is same as a position in the X axis direction of the through-hole 342 corresponding the certain pin 312 and a position in the Y axis direction of a certain pin 312 is same as a position in the Y axis direction of the through-hole 342 corresponding the certain pin 312.

The position at which the pin 312 is formed may be used as a fiducial position on the placement surface 311 in placing the fiducial member 34 on the placement surface 311. In this case, the fiducial member 34 is placed on the placement surface 311 in a state where it is aligned to have the desired second positional relationship relative to the fiducial position on the placement surface 311.

At least one fiducial mark 343 is formed on an upper surface of the base member 341. One fiducial mark 343 may be formed on the base member 341, two fiducial marks 343 may be formed on the base member 341, three fiducial marks 343 may be formed on the base member 341, four fiducial marks 343 may be formed on the base member 341, or five or more fiducial marks 343 may be formed on the base member 341. FIG. 11 illustrates an example in which five fiducial marks 343 are formed on the upper surface of the base member 341. The fiducial mark 343 is a mark that is measurable by the measurement apparatus 8. For example, the fiducial mark 343 is a mark that is imageable by the imaging apparatus 82 of the measurement apparatus 8. Information relating to a positional relationship between the fiducial marks 343 and the through-holes 342 is information that is already known to the control apparatus 7.

The fiducial mark 343 may be formed at a predetermined position on the base member 341 so that the fiducial mark 343 is disposed at a predetermined position on the placement surface 311 (for example, a center of the placement surface 311) in the case where the fiducial member 34 is placed on the placement surface 311 so that the pins 312 are inserted into the through-holes 342. In this case, information relating to the predetermined position on the placement surface 311 (namely, the predetermined position on the placement surface 311 in the stage coordinate system) on which the fiducial mark 343 is disposed (for example, a center of the placement surface 311) may be information that is already known to the control apparatus 7. Moreover, in this case, the predetermined position on the placement surface 311 on which the fiducial mark 343 is to be disposed may be used as a fiducial position on the placement surface 311 in placing the fiducial member 34 on the placement surface 311. In this case, the fiducial member 34 is placed on the placement surface 311 in a state where it is aligned so that the fiducial mark 343 is disposed on the fiducial position on the placement surface 311. Incidentally, in this case, information relating to a positional relationship between the positions at which the fiducial marks 343 are disposed and the through-holes 342 may not be the information that is already known to the control apparatus 7.

Note that the beam detection member 32 illustrated in FIG. 7 to FIG. 9 and the fiducial member illustrated in FIG. 11 and FIG. 12 may be provided on the same member.

Again in FIG. 4, after the fiducial member 34 is placed on the placement surface 311, the measurement apparatus 8 measures the fiducial member 34 (a step S114). Especially, the measurement apparatus 8 measures the fiducial marks 343 formed on the fiducial member 34.

Then, the control apparatus 7 associates the measurement coordinate system with the stage coordinate system on the basis of the measured result by the measurement apparatus 8 at the step S115 (a step S116). Specifically, the control apparatus 7 determines the position of the fiducial marks 343 in the measurement coordinate system on the basis of the measured result by the measurement apparatus 8. Furthermore, as described above, the information relating to the positional relationship between the fiducial marks 343 and the through-holes 342 is the information that is already known to the control apparatus 7. Thus, the control apparatus 7 determines the position of the through-holes 322 in the measurement coordinate system on the basis of the information relating to the position of the fiducial marks 343 in the measurement coordinate system and the information relating to the positional relationship between the fiducial marks 343 and the through-holes 342. Furthermore, as described above, the positions of the through-holes 342 are same as the positions of the pins 312 in a situation where the fiducial member 34 is placed on the placement surface 311. Thus, the position of the through-holes 342 in the measurement coordinate system may be regarded to be equivalent to the position of pins 312 in the measurement coordinate system. Furthermore, as described above, the information relating to the position of the pins 312 in the stage coordinate system is the information that is already known to the control apparatus 7. Thus, the control apparatus 7 determines that the position of the pin 312 in the measurement coordinate system and the position of the pin 312 in the stage coordinate system are positions that should be associated with each other. Namely, the control apparatus 7 determines that a specific position in the measurement coordinate system and a specific position in the stage coordinate system are positions that should be associated with each other. As a result, the control apparatus 7 associates the measurement coordinate system with the stage coordinate system on the basis of such a determined result that the specific position in the measurement coordinate system and the specific position in the stage coordinate system are positions that should be associated with each other. As a result, the control apparatus 7 determines the position of the measurement target object in the stage coordinate system.

Alternatively, as described above, when the fiducial mark 343 is formed on the base member 341 so that the fiducial mark 343 is disposed at the predetermined position on the placement surface 311 (for example, a center of the placement surface 311), the information relating to the predetermined position in the stage coordinate system on which the fiducial mark 343 is disposed is the information that is already known to the control apparatus 7. Thus, the control apparatus 7 determines that the information relating to the position of the fiducial marks 343 in the measurement coordinate system and the predetermined position in the stage coordinate system at which the fiducial mark 343 is disposed are positions that should be associated with each other. Namely, the control apparatus 7 determines that a specific position in the measurement coordinate system and a specific position in the stage coordinate system are positions that should be associated with each other. As a result, the control apparatus 7 associates the measurement coordinate system with the stage coordinate system on the basis of such a determined result that the specific position in the measurement coordinate system and the specific position in the stage coordinate system are positions that should be associated with each other.

Note that a positional misalignment between the processing light EL and the guide light GL may be measured by the beam detection member 32. When the processing system SYS emits the plurality of guide lights GL, a positional misalignment between the position at which the plurality of guide lights GL intersect and the light concentration position of the processing light EL (the additive processed position) may be measured by the beam detection member 32. When there is the misalignment between the processing light EL and the guide light GL, the light concentration position of the processing light EL and / or a position of the guide light GL (an intersecting position of the plurality of guide lights GL when the plurality of guide lights GL are used) may be changed.

### (2-2) Workpiece Model Alignment Operation

Next, the workpiece model alignment operation will be described. The workpiece model alignment operation is an operation for aligning a workpiece model WM, which is a three-dimensional model of the workpiece W on which the three-dimensional structural object ST should be formed, with the actual workpiece W. Especially, the workpiece model alignment operation is an operation for aligning the workpiece model WM with the workpiece W in a fiducial coordinate system. The fiducial coordinate system is a coordinate system that is a fiducial of the processing system SYS. The fiducial coordinate system is a coordinate system that is used for the control by the control apparatus 7. In the present embodiment, it is assumed that the stage coordinate system is used as the fiducial coordinate system. In this case, the workpiece model alignment operation is an operation for aligning the workpiece model WM with the workpiece W in the stage coordinate system. However, the measurement coordinate system or the build coordinate system may be used as the fiducial coordinate system. Another coordinate system that is different from the stage coordinate system, the measurement coordinate system and the build coordinate system may be used as the fiducial coordinate system.

As a result of the alignment of the workpiece model WM and the workpiece W, workpiece information relating to the workpiece model WM that is aligned with the workpiece W is generated. The workpiece information includes both of workpiece position information relating to a position of the workpiece model WM and workpiece shape information relating to a shape of the workpiece model WM. The workpiece information is information in which the workpiece position information is associated with the workpiece shape information. The position of the workpiece model WM is same as (alternatively, is substantially almost same as, although is not quite same as) the position of the actual workpiece W. Thus, the workpiece position information may be regarded to be equivalent to information relating to the position of the workpiece W. The shape of the workpiece model WM is same as (alternatively, is substantially almost same as, although is not quite same as) the shape of the actual workpiece W. Thus, the workpiece shape information may be regarded to be equivalent to information relating to the shape of the actual workpiece W. Note that "the workpiece information in which the workpiece position information is associated with the workpiece shape information" means information from which both of the position and the shape of each part of the workpiece model WM is determinable, as with "the measurement information in which the measurement position information is associated with the measurement shape information". Note that the workpiece information may not include the workpiece position information and the workpiece shape information as separate and independent different information, and the workpiece information may have any data structure as long as both of the position and the shape of each part of the workpiece model WM is determinable.

The workpiece shape information may include information relating to a position of a pixel (in other words, a volume element, and what we call a voxel) that constitutes the workpiece model WM (namely, a data that indicates the shape of the workpiece model WM by using information relating to the position of the pixel). The workpiece shape information may include a polygonal data of the workpiece model WM. The workpiece shape information may include a cross-section shape data relating toa cross-section of each layer that is obtained by performing a slicing process on the workpiece model WM (namely, slicing the workpiece model WM along any surface direction by a predetermined thickness).

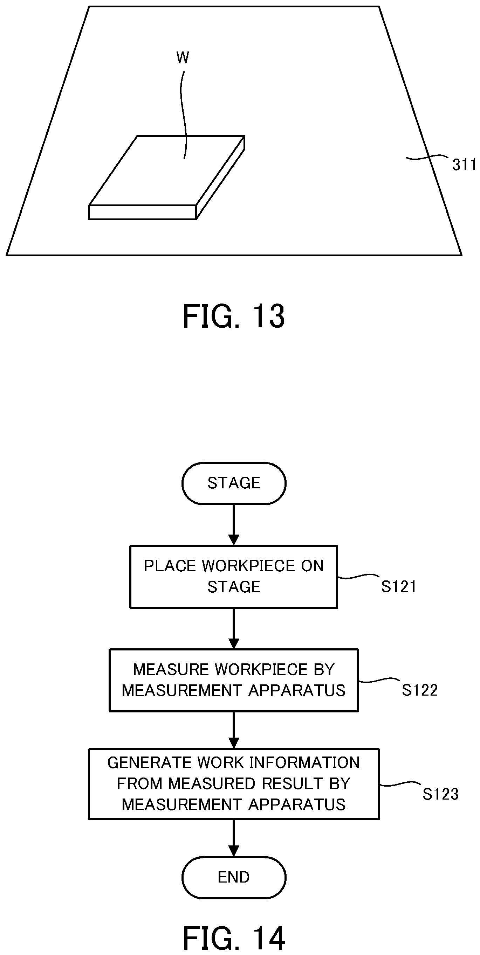

The control apparatus 7 determines the position and a direction (in other words, an attitude) of each part of the workpiece model WM (for example, each part of a surface of the workpiece model WM) in the stage coordinate system by referring to the workpiece information in which the workpiece position information is associated with the workpiece shape information, as illustrated in FIG. 13 that is a perspective view that illustrates the placement surface 311 and the workpiece W in the stage coordinate system. Namely, the control apparatus 7 determines the position and a direction (in other words, an attitude) of each part of the workpiece W (for example, each part of a surface of the workpiece W) in the stage coordinate system. As a result, the processing system SYS properly performs the additive processing on the workpiece W, the position and the direction of which are known by the workpiece information, in the below described build operation on the basis of the workpiece information.

In the first embodiment, the processing system SYS performs, as the workpiece model alignment operation, at least one of a first workpiece model alignment operation, a second workpiece model alignment operation and a third workpiece model alignment operation. Thus, in the below described description, the first to third workpiece model alignment operations will be described in sequence.

Incidentally, when the workpiece information is information that is already known to the control apparatus 7, the processing system SYS may not perform the workpiece model alignment operation. For example, when the workpiece information is inputted to the processing system SYS through the input apparatus 92, the processing system SYS may not perform the workpiece model alignment operation.

### (2-2-1) First Workpiece Model Alignment Operation

Firstly, with reference to FIG. 14, the first workpiece model alignment operation will be described. FIG. 14 is a flowchart that illustrates a flow of the first workpiece model alignment operation.

As illustrated in FIG. 14, firstly, the workpiece W is placed on the placement surface 311 of the stage 31 (a step S121). Then, the measurement apparatus 7 measures the workpiece W (a step S122).

Then, the control apparatus 7 generates the workpiece information on the basis of the measured result by the measurement apparatus 8 at the step S122 (a step S123). Specifically, as described above, the control apparatus 7 generates the measurement information relating to the workpiece W that is measured by the measurement apparatus8 on the basis of the measured result by the measurement apparatus 8 (namely, the imaged result by the imaging apparatuses 82). The measurement information includes the measurement shape information relating to the shape of the workpiece W. This measurement shape information is used as the workpiece shape information as it is. Furthermore, the measurement information includes the measurement position information relating to the position of the workpiece W. However, the measurement position information is the information relating to the position of the workpiece W in the measurement coordinate system. Thus, the control apparatus 7 converts the position of the workpiece W in the measurement coordinate system that is indicated by the measurement position information into the position of the workpiece W in the stage coordinate system. Information relating to the position of the workpiece W in the stage coordinate system that is obtained by the conversion is used as the workpiece position information. As a result, the control apparatus 7 generates the workpiece information in which the workpiece position information is associated with the workpiece shape information. Namely, the control apparatus 7 generates the workpiece information relating to the workpiece model WM that corresponds to the actual workpiece W.

### (2-2-2) Second Workpiece Model Alignment Operation

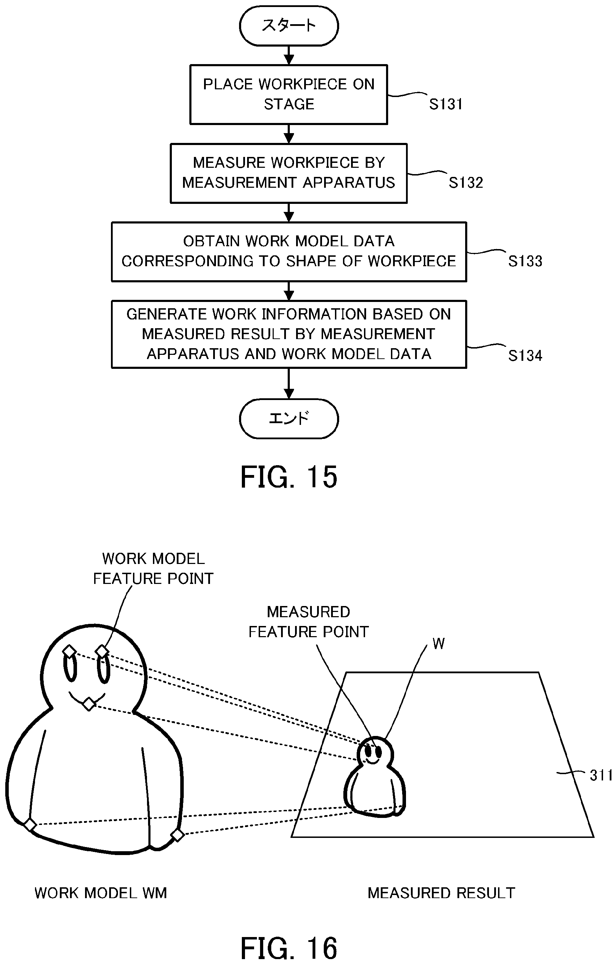

Next, with reference to FIG. 15, the second workpiece model alignment operation will be described. FIG. 15 is a flowchart that illustrates a flow of the second workpiece model alignment operation.

As illustrated in FIG. 15, firstly, the workpiece W is placed on the placement surface 311 of the stage 31 (a step S131). Then, the measurement apparatus 7 measures the workpiece W (a step S132).

After, before or in parallel with the processes from the step S131 to the step S132, the control apparatus 7 obtains a workpiece model data corresponding to the shape of the workpiece W placed on the placement surface 311 (a step S133). Specifically, the control apparatus 7 obtains the workpiece model data that represents the workpiece model WM the shape of which is same as or similar to the shape of the workpiece W. The workpiece model data includes workpiece model characteristic information relating to a characteristic of the workpiece model WM. Especially, the workpiece model data includes workpiece model shape information relating to the shape of the workpiece model WM that is one example of the characteristic of the workpiece model WM.

The workpiece model data may be recorded in the memory (namely, the recording medium) of the control apparatus 7. The workpiece model data may be recorded in any recording medium (for example, a hard disk or a semiconductor memory) that is built-in the control apparatus 7 or that is attachable to the control apparatus 7. In this case, the control apparatus 7 may obtain the workpiece model data by reading the workpiece model data from the recording medium by using the input apparatus 92 as needed. The workpiece model data may be recorded in an external apparatus outside the control apparatus 7. The workpiece model data may be recorded in an external apparatus outside the processing system SYS. In this case, the control apparatus 7 may obtain the workpiece model data by downloading the workpiece model data from the external apparatus by using the input apparatus 92 as needed.

A plurality of workpiece model data that represent a plurality of workpiece models WM having a plurality of different shapes, respectively, may be recorded in the recording medium (alternatively, the external apparatus). In this case, the control apparatus 7 may obtain one workpiece model data corresponding to the shape of the workpiece W from the plurality of workpiece model data. As a result, even when the shape of the workpiece W placed on the placement surface 311 changes, the control apparatus 7 properly obtains one workpiece model data corresponding to the shape of the workpiece W. Alternatively, when the shape of the workpiece W placed on the placement surface 311 is always the same, single workpiece model data may be recorded in the recording medium (alternatively, the external apparatus).

The control apparatus 7 may obtain the workpiece model data on the basis of an instruction of the user of the processing system SYS. Specifically, the control apparatus 7 may control the display 91 to display the plurality of workpiece models WM. Furthermore, the control apparatus 7 may control the display 91 to display a GUI that allows the user to select either one of the plurality of workpiece models WM as the workpiece model WM the shape of which is same as or similar to the shape of the workpiece W. The user may recognize the shape of the workpiece W by watching the workpiece W and select the workpiece model WM the shape of which is same as or similar to the recognized shape of the workpiece W by using the input apparatus 92. As a result, the control apparatus 7 obtains the workpiece model data that represents the workpiece model WM selected by the user. Alternatively, when the shape of the workpiece W placed on the placement surface 311 is determined in advance, the control apparatus 7 may obtain the workpiece model data that represents the workpiece model WM the shape of which is same as or similar to the shape of the workpiece W that is determined in advance.

The control apparatus 7 may modify the workpiece model WM represented by the obtained workpiece model data on the basis of the instruction of the user. For example, the control apparatus 7 may modify the characteristic (for example, at least one of the shape and the size) of the workpiece model WM on the basis of the instruction of the user. When the workpiece model WM is modified, the workpiece model data relating to the modified workpiece model WM is used in the subsequent process.

Then, the control apparatus 7 generates the workpiece information on the basis of the measured result by the measurement apparatus 8 at the step S132 and the workpiece model data obtained at the step S133 (a step S134).

Specifically, the control apparatus 7 obtains the workpiece model shape information relating to the shape of the workpiece model WM from the workpiece model data. Since the shape of the workpiece model WM is same as or similar to the shape of the workpiece W, the workpiece model shape information may be regarded to be equivalent to the information relating to the shape of the workpiece W. On the other hand, the measurement information generated on the basis of the measured result by the measurement apparatus 8 also includes the measurement shape information relating to the shape of the workpiece W. However, there is a possibility that an accuracy of the shape of the workpiece W represented by the measurement shape information is lower than an accuracy of the shape of the workpiece model WM represented by the workpiece model shape information, due to a measurement error and the like of the measurement apparatus 8. Thus, in the first embodiment, the control apparatus 7 uses, as the workpiece shape information, the workpiece model shape information obtained from the workpiece model data instead of the measurement shape information included in the measurement information.

However, the workpiece model shape information is information different from the measurement information generated on the basis of the measured result by the measurement apparatus 8. Thus, the information relating to the position of the workpiece W on the placement surface 311 is not associated with the workpiece model shape information. Namely, the control apparatus 7 cannot determine which position on the placement surface W the workpiece model WM (namely, the workpiece W) is disposed at only by referring to the workpiece model shape information. Moreover, the control apparatus 7 cannot determine what attitude the workpiece model WM (namely, the workpiece W) placed on the placement surface 311 has only by referring to the workpiece model shape information. Moreover, the control apparatus 7 cannot determine what size the workpiece model WM (namely, the workpiece W) placed on the placement surface 311 has only by referring to the workpiece model shape information. Thus, the control apparatus 7 associates the workpiece mode shape information with the measurement position information relating to the position of the workpiece W included in the measurement information. Specifically, the control apparatus 7 generates the workpiece information from which not only the shape of the workpiece model WM but also the position of the workpiece model WM on the placement surface 311 are determinable by associating the workpiece model shape information and the measurement position information. In this case, the control apparatus 7 serves as a calculation apparatus that associates the workpiece model shape information and the measurement position information.

Specifically, the control apparatus 7 generates the measurement information that includes the measurement shape information and the measurement position information in a state where they are associated with each other on the basis of the measured result by the measurement apparatus 8. Then, the control apparatus 7 performs an alignment process for disposing the workpiece model WM at the position of the workpiece W represented by the measurement position information. Namely, the control apparatus 7 performs the alignment process for allowing the workpiece model WM to be closer to the workpiece W represented by the measurement shape information by translating, scaling and / or rotating it. As a result, the position of the workpiece model WM on the placement surface 311 (namely, the position of the workpiece W on the placement surface 311) is determined. Thus, the control apparatus 7 generates the workpiece information on the basis of a result of the alignment process.

The control apparatus 7 may perform a pattern matching process as a part of the alignment process. Next, one specific example of alignment process including the pattern matching process will be described. The control apparatus 7 extracts workpiece model feature points that are a plurality of feature points of the workpiece model WM on the basis of the workpiece model WM. The control apparatus 7 extracts a plurality of (for example, three or more) workpiece model feature points. The control apparatus 7 may extract the workpiece model feature points on the basis of an operation of designating the workpiece model feature points that is performed by the user using the input apparatus 92. The control apparatus 7 may extract the workpiece model feature points in accordance with a predetermined criterion without needing the operation of the user. Moreover, the control apparatus 7 may extracts a measurement feature point that is a feature point of the workpiece W (specifically, a feature point of the workpiece W that is determinable from the measurement information) and that corresponds to the workpiece model feature point on the basis of the measurement information. The control apparatus 7 extracts a plurality of (for example, three or more) measurement feature points. The control apparatus 7 may extract the measurement feature points on the basis of an operation of designating the measurement feature points that is performed by the user using the input apparatus 92. The control apparatus 7 may extract the measurement feature points in accordance with a predetermined criterion without requiring the operation of the user. Then, the control apparatus 7 performs a pattern matching between the workpiece model WM and the workpiece W represented by the measurement information on the basis of the workpiece model feature points and the measurement feature points. Specifically, as illustrated in FIG. 16 that is a conceptual diagram that conceptually illustrates an aspect pattern matching between the workpiece model WM and the workpiece W represented by the measurement information, the control apparatus 7 translates, scales and / or rotates the workpiece model WM so that the workpiece model feature points are closer to the measurement feature points. The control apparatus 7 translates, scales and / or rotates the workpiece model WM until a difference between the workpiece model feature points and the measurement feature points is equal to or smaller than a predetermined amount (typically, is minimum). As a result, the workpiece model WM is disposed at a position that is same as a disposing position of the workpiece W represented by the measurement information in the measurement coordinate system. Thus, as a result of the alignment process, the control apparatus 7 determines the position of the workpiece model WM in the measurement coordinate system. However, when the workpiece information is generated, the position of the workpiece model WM in the measurement coordinate system is converted into the position of the workpiece model WM in the stage coordinate system, as described above. As a result, the information relating to the position of the workpiece model WM that is usable as the workpiece position information is obtained. Namely, the workpiece information in which the workpiece model shape information that is usable as the workpiece shape information is associated with the information relating to the position of the workpiece model WM that is usable as the workpiece position information is obtained as the information relating to the workpiece model WM.

The control apparatus 7 may perform the alignment process by using any algorithm for performing the alignment process. An ICP (Interative Closest Point) algorithm for performing an alignment of a plurality of point cloud (for example, a point cloud including the above described workpiece model feature point and a point cloud including the above described measurement feature point) is one example of this algorithm.

According to the above described second workpiece model alignment operation, there is a possibility that the shape of the workpiece model WM (namely, the shape of the workpiece W) represented by the workpiece information is more accurate, compared to the first workpiece model alignment operation. The reason for this is that the accuracy of the shape of the workpiece W represented by the measurement shape information is lower than the accuracy of the shape of the workpiece model WM represented by the workpiece model shape information, as described above. Thus, there is a possibility that the processing system SYS forms the three-dimensional structural object more accurately by the below described build operation by using the workpiece information generated by the second workpiece model alignment operation.

Note that the control apparatus 7 generates, at the step S134 in FIG. 15, the workpiece information on the basis of the measured result (especially, the measurement position information) by the measurement apparatus 8 of the processing system SYS and the workpiece model data (especially, the workpiece model shape information) obtained at the step S133 in the above described description. Namely, the control apparatus 7 associates the measurement position information that is generated from the measured result by the measurement apparatus 8 of the processing system SYS with the workpiece model shape information. However, the control apparatus 7 may obtain the measurement position information from the outside of the processing system SYS through the input apparatus 92 and generate the workpiece information on the basis of the obtained measurement position information and the workpiece model shape information. Namely, the control apparatus 7 may associate the measurement position information that is obtained from the outside of the processing system SYS through the input apparatus 92 with the workpiece model shape information.

In the above described description, the control apparatus 7 of the processing system SYS associates the measurement position information with the workpiece model shape information at the step S134 in FIG. 15. However, an external apparatus outside the processing system SYS may associate the measurement position information with the workpiece model shape information. In this case, the control apparatus 7 may transmit (namely, output) the measurement position information and the model shape information to the external apparatus outside the processing system SYS through a network.

### (2-2-3) Third Workpiece Model Alignment Operation

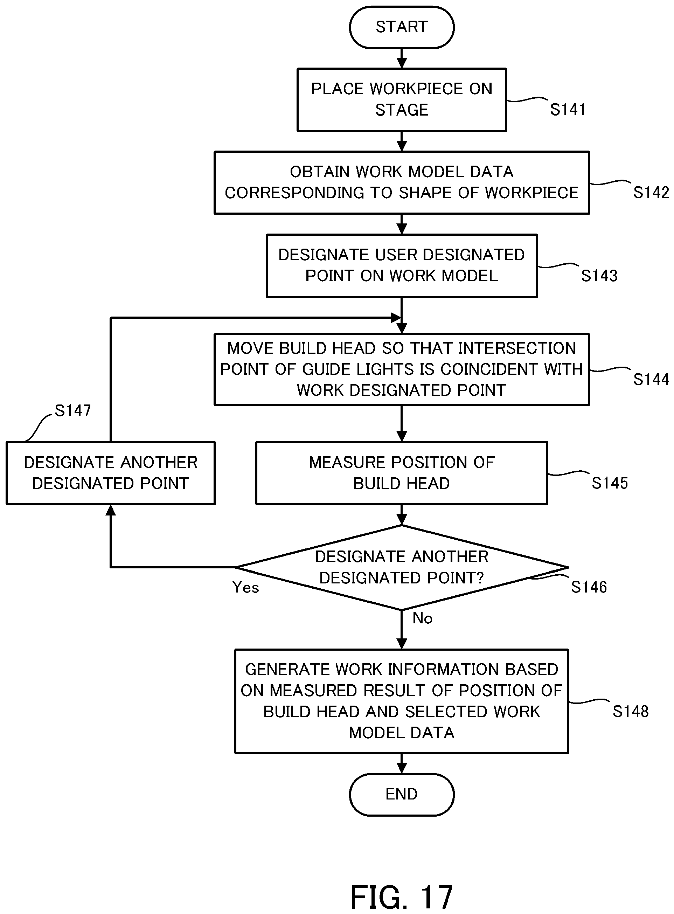

Next, with reference to FIG. 17, the third workpiece model alignment operation will be described. FIG. 17 is a flowchart that illustrates a flow of the third workpiece model alignment operation.

As illustrated in FIG. 17, firstly, the workpiece W is placed on the placement surface 311 of the stage 31 (a step S141). Then, the measurement apparatus 7 measures the workpiece W (a step S142).

Then, the control apparatus 7 obtains the workpiece model data corresponding to the shape of the workpiece W placed on the placement surface 311 (a step S142). Note that the process at the step S142 may be same as the process at the step S133 in the above described second workpiece model alignment operation, and thus a detailed description thereof is omitted.

Then, a point on the surface of the workpiece model WM is designated as a user designated point by the user (a step S143). Specifically, the user designates the user designated point by using the input apparatus 92. In this case, the control apparatus 7 may control the display 91 to display the workpiece model WM represented by the workpiece model data obtained at the step S142 and the user may designate the user designated point on the workpiece model WM displayed on the display 91. The user designated point may be a feature point on the surface of the workpiece model WM. At least one of a vertex, an edge, a point located at the most +Z side, a point located at the most -Z side, a point located at the most +X side, a point located at the most -X side, a point located at the most +Y side and a point located at the most -Y side is one example of the feature point on the surface of the workpiece model WM. However, the user designated point may be any point as long as it is a point on the surface of the workpiece model WM.

Then, the head driving system 22 moves the build head 21 to satisfy a position condition that a point (it is referred to as a "workpiece designated point" in the below described description) on the workpiece W corresponding to the user designated point designated at the step S143 and the build apparatus 2 have a desired third positional relationship (a step S144). The workpiece designated point is typically a point that is same as the user designated point. For example, when the vertex of the workpiece model WM is designated as the user designated point, the vertex of the workpiece W is the workpiece designated point. In this case, information relating to the third positional relationship is information that is already known to the control apparatus 7.

A state where the build apparatus 2 is allowed to process the workpiece designated point is one example of a state where the workpiece designated point and the build apparatus 2 have the desired third positional relationship. Since the build apparatus 2 mainly processes the object at the additive processed position (namely, the light concentration position of the processing light EL), a state where the additive processed position is designated as the workpiece designated point is one example of a state where the workpiece designated point and the build apparatus 2 have the desired third positional relationship. As described above, the plurality of guide lights GL emitted from the plurality of guide light emitting apparatuses 24, respectively, intersect at the additive processed position. Thus, a state where the plurality of guide lights GL intersect at the workpiece designated point is one example of a state where the workpiece designated point and the build apparatus 2 have the desired third positional relationship. Namely, a state where the workpiece designated point is irradiated with the plurality of guide lights GL is one example of a state where the workpiece designated point and the build apparatus 2 have the desired third positional relationship.

When a condition that the plurality of guide lights GL intersect at the workpiece designated point is used as the position condition, the plurality of guide light emitting apparatuses 24 emits the plurality of guide lights GL, respectively, and the head driving system 22 moves the build head 21 so that the plurality of guide lights GL intersect at the workpiece designated point (the step S144). Namely, the head driving system 22 changes a relative positional relationship between the workpiece W and the additive processed position by moving the build head 21 so that the plurality of guide lights GL intersect at the workpiece designated point.

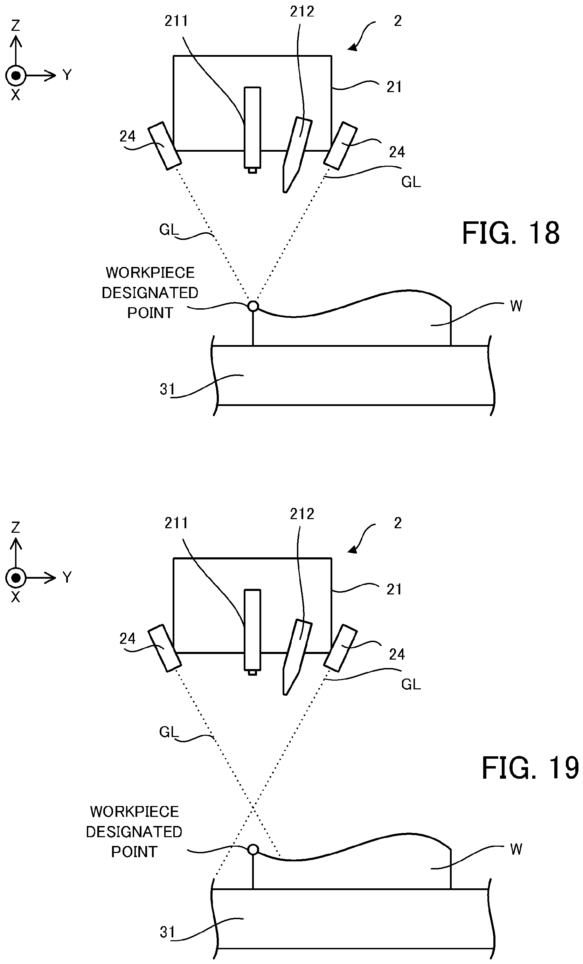

FIG. 18 is a cross-sectional view that illustrates an aspect in which the plurality of guide lights GL intersect at the workpiece designated point. On the other hand, FIG. 19 is a cross-sectional view that illustrates an aspect in which the plurality of guide lights GL do not intersect at the workpiece designated point. The head driving system 22 moves the build head 21 so that a state of the plurality of guide lights GL changes from a state illustrated in FIG. 19 to a state illustrated in FIG. 18 (namely, the point at which the plurality of guide lights GL intersect is closer to the workpiece designated point).

In this case, the guide light GL may serve as a guide light for performing an alignment of the workpiece designated point and the build apparatus 2 so that the workpiece designated point and the build apparatus 2 have the desired third positional relationship. Since the workpiece designated point is designate on the surface of the workpiece W, the guide light GL may serve as a guide light for performing an alignment of the workpiece W and the build apparatus 2 so that the workpiece designated point and the build apparatus 2 have the desired third positional relationship.

The control apparatus 7 may control the head driving system 22 so that the build head 21 moves on the basis of the instruction of the user for moving the build head 21. Namely, the user may visually confirm whether or not the plurality of guide lights GL intersect at the workpiece designated point and the head driving system 22 may move the build head 21 on the basis of a confirmed result by the user. In this case, the instruction of the user may be inputted through the input apparatus 92.

When the build head 21 moves, the control apparatus 7 may control the imaging apparatus 82 to image the state of the guide lights GL on the workpiece W and may control the display 91 to display the imaged result by the imaging apparatus 82. Alternatively, when the processing system SYS is provided with an imaging apparatus that is different from the imaging apparatus 82, he control apparatus 7 may control another imaging apparatus to image the state of the guide lights GL on the workpiece W and may control the display 91 to display the imaged result by another imaging apparatus. In this case, the user may input the instruction for moving the build head 21 by using the input apparatus 92 while referring to the displayed content of the display 91. Alternatively, the control apparatus 7 may control the head driving system 22 so that the build head 21 moves on the basis of the imaged result by the imaging apparatus 82 (alternatively, the imaged result by another imaging apparatus, the same applies to the below described description).

Note that a wavelength of the guide light GL may be different from a wavelength of the processing light EL. When the wavelength of the guide light GL is different from the wavelength of the processing light EL, a filter that reflects the processing light EL and through which the guide light GL is allowed to pass may be disposed at the most workpiece W side of an optical system of the imaging apparatus 82 or another imaging apparatus. For example, when the processing light is in a wavelength band of an infrared light, an infrared reflection filter may be used as the filter.

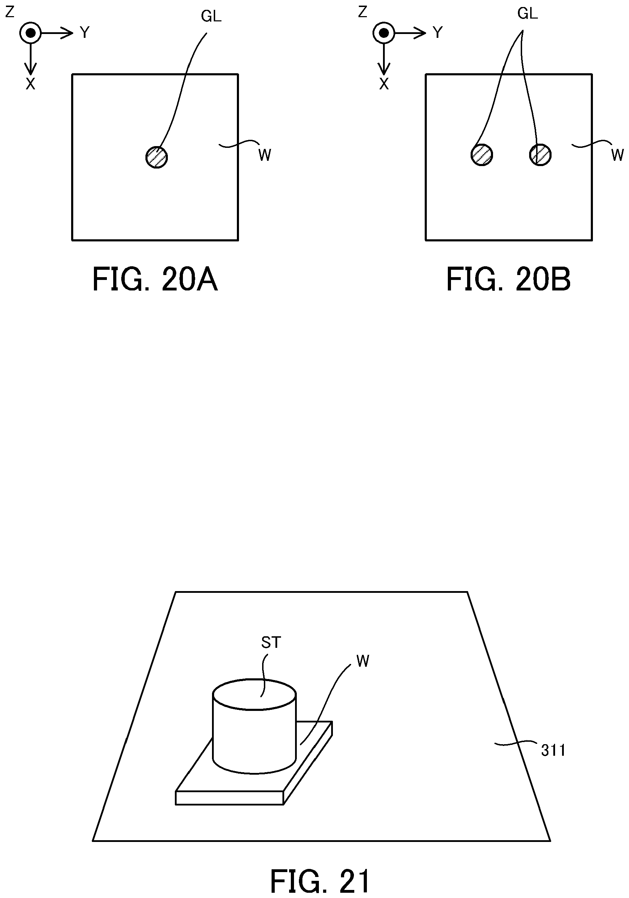

Specifically, when the plurality of guide lights GL intersect at the workpiece designated point, the imaged result by the imaging apparatus 82 indicates that beam spots of the plurality of guide lights GL overlap on the surface of the workpiece W (especially, the workpiece designated point), as illustrated in FIG. 20A. Namely, the imaged result by the imaging apparatus 82 indicates that single beam spot is generated on the surface of the workpiece W (especially, the workpiece designated point), as illustrated in FIG. 20A. On the other hand, when the plurality of guide lights GL do not intersect at the workpiece designated point, the imaged result by the imaging apparatus 82 indicates that beam spots of the plurality of guide lights GL do not overlap on the surface of the workpiece W (especially, the workpiece designated point), as illustrated in FIG. 20B. Namely, the imaged result by the imaging apparatus 82 indicates that a plurality of beam spots are generated on the surface of the workpiece W (especially, the workpiece designated point), as illustrated in FIG. 20B. Therefore, the control apparatus 7 determines on the basis of the imaged result by the imaging apparatus 82 whether or not the plurality of guide lights GL intersect at the workpiece designated point. When the plurality of guide lights GL do not intersect at the workpiece designated point, the user or the control apparatus 7 moves the build head 21 so that the state of the plurality of guide lights GL on the surface of the workpiece W changes from a state illustrated in FIG. 20B to a state illustrated in FIG. 20A (namely, the plurality of beam spots are closer to each other).

Then, after the build head 21 moves to satisfy the position condition that the workpiece designated point and the build apparatus 2 have the desired third positional relationship, the position measurement apparatus 23 measures the position of the build head 21 at a timing when the position condition is satisfied (a step S145). In the above described example, the position measurement apparatus 23 measures the position of the build head 21 when the plurality of guide lights GL intersect at the workpiece designated point (the step S145). As described above, the plurality of guide lights GL intersect at the additive processed position. Thus, it can be said that the position measurement apparatus 23 measures the position of the build head 21 in a state where the additive processed position is set on the workpiece designated point at the step S145. Namely, it can be said that the position measurement apparatus 23 measures the position of the build head 21 in a state where it is allowed to process the workpiece designated point at the step S145. Moreover, since the additive processed position has a fixed positional relationship relative to the build head 21, an operation of measuring the position of the build head 21 may be regarded to be equivalent to an operation of indirectly measuring the additive processed position. Moreover, since the position of the build head 21 is measured in a state where the additive processed position is set on the workpiece designated point, the operation of measuring the position of the build head 21 (namely, the operation of indirectly measuring the additive processed position) may be regarded to be equivalent to an operation of indirectly measuring a position of the workpiece designated point on the workpiece W.

Then, the control apparatus 7 determines whether or not new user designated point should be designated (a step S146). Specifically, the control apparatus 7 may determine whether or not a desired number of user designated point is designated and the processes of the above described steps S144 and S145 are performed by using each of the desired number of user designated point. The desired number may be one, may be two, may be three, may be four, may be five or more. When it is determined that the desired number of the user designated point is not designated (as a result, the processes of the above described steps S144 and S145 are not performed by using each of the desired number of user designated point), the control apparatus 7 may determine that new user designated point should be designated. On the other hand, when it is determined that the desired number of the user designated point is designated and the processes of the above described steps S144 and S145 are performed by using each of the desired number of user designated point, the control apparatus 7 may determine that new user designated point may not be designated.

Incidentally, when the number of the user designated point is one, the position in the X axis direction, the position in the Y axis direction and the position in the Z axis direction of the workpiece W are calculatable at a step S148 described below. When the shape of the workpiece is already known to the control apparatus 7 and the number of the user designated point is two, a rotation θZ of the workpiece W around the Z axis is calculatable in addition to the position in the X axis direction, the position in the Y axis direction and the position in the Z axis direction of the workpiece W. When the shape of the workpiece is already known to the control apparatus 7 and the number of the user designated point is three or more, a rotation θX of the workpiece W around the X axis, a rotation θY of the workpiece W around the Y axis and the rotation θZ of the workpiece W around the Z axis are calculatable in addition to the position in the X axis direction, the position in the Y axis direction and the position in the Z axis direction of the workpiece W.

As a result of the determination at the step S146, when it is determined that new user designated point should be designated (a step S147: Yes), a point on the surface of the workpiece model WM (however, a point that is not yet designated as the user designated point) is designated as new user designated point by the user (a step S147). Then, the processes of the above described steps S144 and S145 are performed by using new user designated point.

On the other hand, as a result of the determination at the step S146, when it is determined that new user designated point may not be designated (a step S147: No), the control apparatus 7 generates the workpiece information on the basis of the measured result by the position measurement apparatus 23 at the step S145 and the workpiece model data obtained at the step S142 (a step S148).

Specifically, as described above, the measured result by the position measurement apparatus 23 at the step S145 indicates the position of the build head 21 when the workpiece designated point and the build apparatus 2 have the desired third positional relationship. Thus, the control apparatus 7 determines the position of the workpiece designated point in the build coordinate system from the measured result by the position measurement apparatus 23. This is because the workpiece designated point and the build apparatus 2 have the desired third positional relationship and thus the workpiece designated point and the build head 21 must have a certain positional relationship that is determinable from the information relating to the third positional relationship that is the information already know to the control apparatus 7.

Then, the control apparatus 7 performs an alignment process for disposing the user designated point of the workpiece model WM at the position of the workpiece designated point that is determined from the measured result by the position measurement apparatus 23. Namely, the control apparatus 7 performs the alignment process for allowing the user designated point to be closer to the position of the workpiece designated point by translating, scaling and / or rotating the workpiece model WM represented by the workpiece model shape information. As a result, the position of the workpiece model WM on the placement surface 311 is determined. Thus, the control apparatus 7 generates the workpiece information on the basis of a result of the alignment process. Note that the control apparatus 7 may perform, as the alignment process, a process that is same as the alignment process used in the above described second workpiece model alignment operation. For example, the control apparatus 7 may perform the alignment process by using the ICP (Interative Closest Point) algorithm for performing the alignment of the plurality of point cloud (for example, a point cloud including model designated point and a point cloud including the user designated point). Thus, the detail of the alignment process in the third workpiece model alignment operation is omitted.

According to the above described third workpiece model alignment operation, the control apparatus 7 generates the workpiece information without requiring the measurement of the workpiece W by the measurement apparatus 8. Thus, even when the workpiece W has a shape that is not measurable easily or that is not measurable by the measurement apparatus 8, the control apparatus 7 generates the workpiece information.

### (2-3) Build model Alignment Operation

Next, the build model alignment operation will be described. The build model alignment operation is an operation for aligning a build model PM, which is a three-dimensional model of the three-dimensional structural object ST that should be formed by the additive processing, with the workpiece model WM represented by the workpiece information that is generated by the workpiece model alignment operation. Especially, the build model alignment operation is an operation for aligning the build model PM with the workpiece model WM in the fiducial coordinate system. As described above, in the first present embodiment, the stage coordinate system is used as the fiducial coordinate system. Thus, the build model alignment operation is an operation for aligning the build model PM with the workpiece model WM in the stage coordinate system.

As a result of the alignment of the build model PM and the workpiece model WM, build information relating to the build model PM that is aligned with the workpiece model WM is generated. The build model information is information in which build position information relating to a position of the build model PM is associated with build shape information relating to a shape of the build model PM. Note that "the build model information in which the build position information is associated with the build shape information" means information from which both of the position and the shape of each part of the build model PM is determinable. Note that the build information may not include the build position information and the build shape information as separate and independent different information, and the build information may have any data structure as long as both of the position and the shape of each part of the build model PM is determinable.

The build shape information may include information relating to a position of a pixel (in other words, a volume element, and what we call a voxel) that constitutes the build model PM (namely, a data that indicates the shape of the build model PM by using information relating to the position of the pixel). The build shape information may include a polygonal data of the build model PM. The build shape information may include a cross-section shape data relating toa cross-section of each layer that is obtained by performing a slicing process on the build model PM (namely, slicing the build model PM along any surface direction by a predetermined thickness).

The control apparatus 7 determines a positional relationship between the workpiece W and the three-dimensional structural object ST that should be formed on the workpiece W in the stage coordinate system by referring to the build information (furthermore, the workpiece information as necessary), as illustrated in FIG. 21 that is a perspective view that illustrates the workpiece W and the three-dimensional structural object ST in the stage coordinate system. Namely, the control apparatus 7 determines, in the stage coordinate system, which position on the workpiece W the three-dimensional structural object ST should be formed at. The control apparatus 7 determines, in the stage coordinate system, what attitude on the workpiece W the three-dimensional structural object ST should be formed in. The control apparatus 7 determines, in the stage coordinate system, what size of the three-dimensional structural object ST should be formed on the workpiece W. As a result, the processing system SYS forms the three-dimensional structural object ST on a proper position on the workpiece W in the below described build operation on the basis of the build information. Namely, the processing system SYS forms the three-dimensional structural object ST having a proper shape based on the build information on the proper position on the workpiece W the position and the shape of which is determinable by the workpiece information.

Incidentally, when the build information is information that is already known to the control apparatus 7, the processing system SYS may not perform the build model alignment operation. For example, when the build information is inputted to the processing system SYS through the input apparatus 92, the processing system SYS may not perform the build model alignment operation.

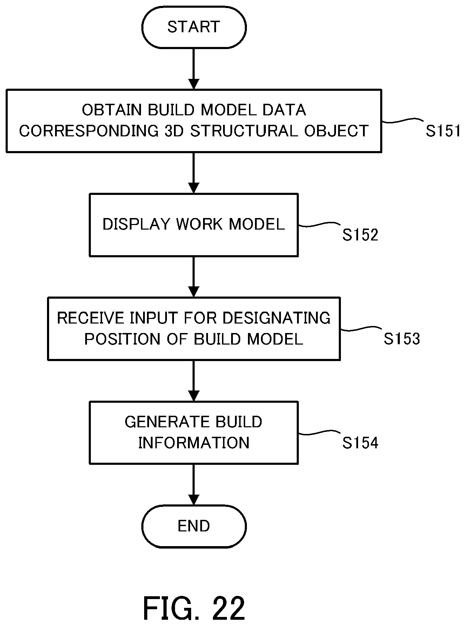

Next, with reference to FIG. 22, the build model alignment operation will be described. FIG. 22 is a flowchart that illustrates a flow of the build model alignment operation.

As illustrated in FIG. 22, the control apparatus 7 obtains a build model data corresponding to the shape of the three-dimensional structural object ST that should be formed by the additive processing (a step S151). Specifically, the control apparatus 7 obtains the build model data that represents the build model PM the shape of which is same as or similar to the shape of the three-dimensional structural object ST. The build model data includes build model characteristic information relating to a characteristic of the build model PM. Especially, the build model data includes build model shape information relating to the shape of the build model PM that is one example of the characteristic of the build model PM.

The build model data may be recorded in the memory (namely, the recording medium) of the control apparatus 7. The build model data may be recorded in any recording medium (for example, a hard disk or a semiconductor memory) that is built-in the control apparatus 7 or that is attachable to the control apparatus 7. In this case, the control apparatus 7 may obtain the build model data by reading the build model data from the recording medium by using the input apparatus 92 as needed. The build model data may be recorded in an external apparatus outside the control apparatus 7. The build model data may be recorded in an external apparatus outside the processing system SYS. In this case, the control apparatus 7 may obtain the build model data by downloading the build model data from the external apparatus by using the input apparatus 92 as needed.

A plurality of build model data that represent a plurality of build models PM having a plurality of different shapes, respectively, may be recorded in the recording medium (alternatively, the external apparatus). In this case, the control apparatus 7 may obtain one build model data corresponding to the shape of the three-dimensional structural object ST from the plurality of build model data. As a result, even when the shape of the three-dimensional structural object ST placed on the placement surface 311 changes, the control apparatus 7 properly obtains one build model data corresponding to the shape of the three-dimensional structural object ST. Alternatively, when the shape of the three-dimensional structural object ST placed on the placement surface 311 is always the same, single build model data may be recorded in the recording medium (alternatively, the external apparatus).

The control apparatus 7 may obtain the build model data on the basis of an instruction of the user of the processing system SYS. Specifically, the control apparatus 7 may control the display 91 to display the plurality of build models PM. Furthermore, the control apparatus 7 may control the display 91 to display a GUI that allows the user to select either one of the plurality of build models PM as the build model PM the shape of which is same as or similar to the shape of the three-dimensional structural object ST. The user may select the build model PM the shape of which is same as or similar to the shape of the three-dimensional structural object ST that should be formed by the additive processing by using the input apparatus 92. As a result, the control apparatus 7 obtains the build model data that represents the build model PM selected by the user. Alternatively, when the shape of the three-dimensional structural object ST that should be formed by the additive processing is determined in advance, the control apparatus 7 may obtain the build model data that represents the build model PM the shape of which is same as or similar to the shape of the three-dimensional structural object ST that is determined in advance.

The control apparatus 7 may modify the build model PM represented by the obtained build model data on the basis of the instruction of the user. For example, the control apparatus 7 may modify the characteristic (for example, at least one of the shape and the size) of the build model PM on the basis of the user. When the build model PM is modified, the build model data relating to the modified build model PM is used in the subsequent process.

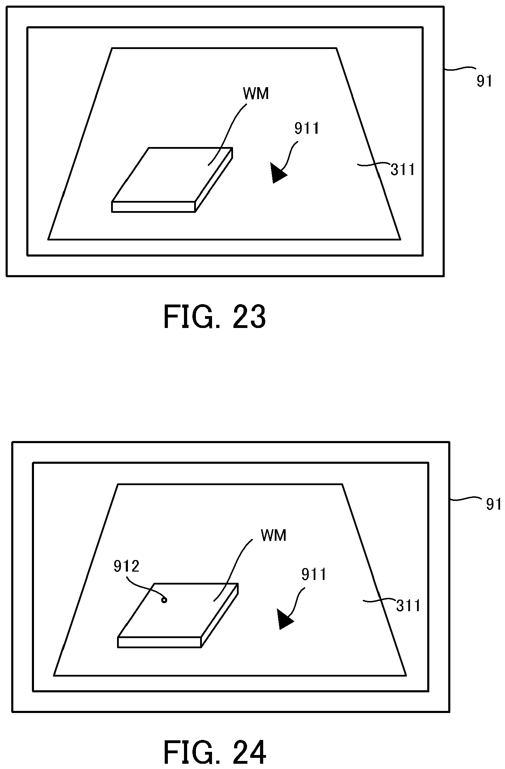

Then, the control apparatus 7 controls the display 91 to display the workpiece model WM on the basis of the workpiece information (a step S152). Namely, the control apparatus 7 controls the display 91 to display an image of the workpiece model WM having the shape represented by the workpiece information at a position represented by the workpiece information (namely, a position of the actual workpiece W) in the stage coordinate system. In this case, the control apparatus 7 may control the display 91 to display the workpiece model WM with the stage 3 (especially, the placement surface 311). Alternatively, the control apparatus 7 may control the display 91 to display the actual workpiece W (namely, an image of the actual workpiece W). For example, the control apparatus 7 may control the display 91 to display the imaged result by the imaging apparatus 82 that images the actual workpiece W. Note that FIG. 23 illustrate a display example of the workpiece model WM.

Then, the control apparatus 87 receives, from the user, an input for performing the alignment of the workpiece model WM and the build model PM (namely, the alignment of the workpiece W and the build model PM) (a step S153). Specifically, the workpiece model WM is displayed at the step S152. Thus, at the step S153, the control apparatus 7 may receive, from the user, an input for designating the position of the build model PM relative to the workpiece model WM displayed on the display 91. Therefore, the input apparatus 92 may be referred to as a "designating apparatus", because it is an apparatus that is used to designate the position of the build model PM.

The user may designate, as the position of the build model PM, a position at which at least a part of the three-dimensional structural object ST should be formed by the additive processing (namely, a build position at which at least a part of the three-dimensional structural object ST should be built). The build position may include a position at which at least a part of the three-dimensional structural object ST that is formed by the additive processing distributes. The build position may include a position at which the additive processing for forming at least a part of the three-dimensional structural object ST is performed. Since the additive processing is performed at the above described additive processed position (typically, the light concentration position of the processing light EL), the build position may include a position at which the additive processed position is set in order to form at least a part of the three-dimensional structural object ST. Since the additive processing is performed at a position that is irradiated with the processing light EL (namely, a position at which the irradiation area EA is set), the build position may include the position that is irradiated with the processing light EL (namely, the position at which the irradiation area EA is set) in order to form at least a part of the three-dimensional structural object ST. Since the additive processing is performed at a position to which the build materials M are supplied (namely, a position at which the supply area MA is set), the build position may include the position to which the build materials M are supplied (namely, the position at which the supply area MA is set) in order to form at least a part of the three-dimensional structural object ST. The build position may include a position at which the additive processing for forming the three-dimensional structural object ST starts (namely, a build start position). The build position may include a position at which the additive processing for forming the three-dimensional structural object ST ends (namely, a build end position). The build position may include a position at which a feature point of the three-dimensional structural object ST exists. At least one of a vertex, a corner, a point located at the most +Z side, a point located at the most -Z side, a point located at the most +X side, a point located at the most -X side, a point located at the most +Y side and a point located at the most -Y side is one example of the feature point of the three-dimensional structural object ST.

The user may designate, as the position of the build model PM, a position that has a predetermined positional relationship relative to the above described build position, in addition to or instead of designating, as the position of the build model PM, the above described build position itself. For example, the user may designate, as the position of the build model PM, a position that is away from the above described build position toward a predetermined direction by a predetermined distance.

The user may designate the position of the build model PM by using the input apparatus 92. In this case, the user may designate the position of the build model PM on the display screen of the display 91 on which the workpiece model WM is displayed at the step S152. For example, as illustrated in the above described FIG. 23, the user may move a pointer 911 for designating the position of the build model PM and designate, as the position of the build model PM, a position of the pointer 911 at a timing when the pointer 911 is located at a position that is desired to be designated as the position of the build model PM by using the input apparatus 92.

The user may designate the position of the build model PM by using the guide light GL emitted by the above described guide light emitting apparatus 24. For example, the user may move the build head 21 to move the plurality of guide lights GL relative to the workpiece W and designate, as the position of the build model PM, the position at which the plurality of guide lights GL intersect at a timing when the plurality of guide lights GL intersect at the position that is desired to be designated as the position of the build model PM by using the input apparatus 92.

The control apparatus 7 may control the display 91 to display the position that is designated as the position of the build model PM with it being associated with the workpiece model WM. For example, as illustrated in FIG. 24 that illustrates a display example of the workpiece model WM, the control apparatus 7 may control the display 91 to display a display object 912 (in an example illustrated in FIG. 24, a display object indicating a white circle) that indicates the position designated as the position of the build model PM in a display aspect that allows a positional relationship between the display object and the workpiece model WM to be determined.

Moreover, as illustrated in FIG. 24, the user may designate single position as the position of the build model PM. In this case, the position that is designated by the user may be designated as a position of a certain part of the build model PM (namely, a position (an area) at which a certain part of the three-dimensional structural object ST should be formed). Alternatively, an area that is defined by the position designated by the user may be designated as the position of the build model PM (namely, a position at which the three-dimensional structural object ST should be formed). At least one of an area that includes the position designated by the user, an area that is centered on the position designated by the user, an area a vertex of which is at the position designated by the user, an area that is defined by a border including the position designated by the user and an area that has a predetermined positional relationship relative to the position designated by the user is one example of the area that is defined by the position designated by the user.

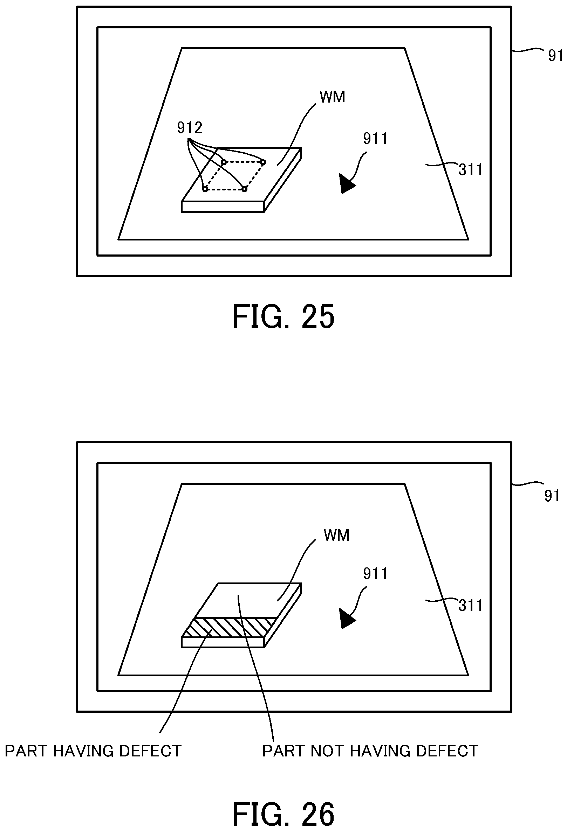

Alternatively, as illustrated in FIG. 25 that illustrates a display example of the workpiece model WM, the user may designate a plurality of positions as the position of the build model PM. In this case, an area that is surrounded by the plurality of positions designated by the user (an area that is surrounded by a dashed-line in FIG. 25) may be designated as the position of the build model PM (namely, the position at which the three-dimensional structural object ST should be formed). An area that has a predetermined positional relationship relative to the plurality of positions designated by the user may be designated as the position of the build model PM (namely, the position at which the three-dimensional structural object ST should be formed).

Moreover, the user may designate, as the position of the build model PM, single position and an attitude of the build model PM.

Here, as described above, the three-dimensional structural object ST is formed on the workpiece W. Thus, there is a high possibility that the user designates, as the build position, a position on the surface of the workpiece W. On the other hand, there is a possibility that a certain position on the surface of the workpiece W is not appropriate as the build position, depending on a state of the surface of the workpiece W. Specifically, there is a possibility that a surface part having a defect on the surface of the workpiece W is not appropriate as the build position. Note that the defect here may mean a defect that is an obstacle to the proper formation of the three-dimensional structural object ST. Thus, in order to reduce the possibility that the surface part having the defect on the surface of the workpiece W is designated as the build position, the control apparatus 7 may display the workpiece model WM in a display aspect that allows the surface part having the defect on the surface of the workpiece W to be distinguished from a surface part not having the defect on the surface of the workpiece W, as illustrated in FIG. 26 that illustrates a display example of the workpiece model WM. Incidentally, when the workpiece W is repaired by building the three-dimensional structural object ST on a part having the defect on the workpiece W, the surface part having the defect on the surface of the workpiece W may be designated as the build position.

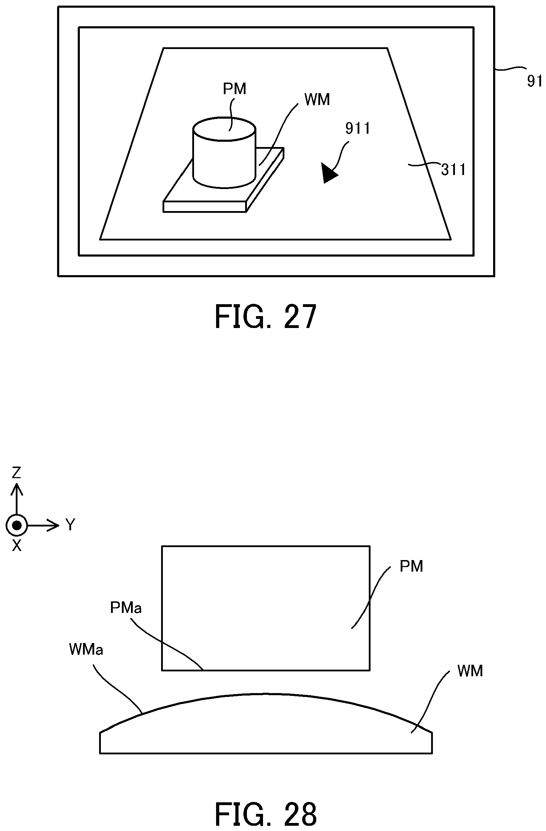

When the input for designating the position of the build model PM is received, as illustrated in FIG. 27 that illustrates a display example on the display 91, the control apparatus 7 may control the display 91 to display the build model PM (namely, an image of the build model PM) with the workpiece model WM (alternatively, the actual workpiece W). Namely, the control apparatus 7 may control the display 91 to display the build model PM that is disposed at the position designated by the user. In this case, the user may designate the position of the build model PM by moving, on the display screen of the display 91 on which the build model PM is displayed, the build model PM by using the input apparatus 92. As a result, the user intuitively designates the position of the build model PM.

The control apparatus 7 may receive, from the user, an input for designating an attitude of the build model PM relative to the workpiece model WM, in addition to the input for designating the position of the build model PM relative to the workpiece model WM. The control apparatus 7 may receive, from the user, an input for designating a size of the build model PM relative to the workpiece model WM, in addition to the input for designating the position of the build model PM relative to the workpiece model WM. In both cases, the user may designate the attitude and / or the size of the build model PM by using the input apparatus 92. For example, the user may designate the position, the attitude and / or the attitude of the build model PM by translating, scaling and / or rotating the build model PM by using the input apparatus 92 on the display screen of the display 91 on which the build model PM is displayed.

After the alignment of the workpiece model WM and the build model PM at the step S153 is completed, the position (furthermore, the attitude and / or the size) of the build model PM in the stage coordinate system fixed. Thus, the control apparatus 7 generates the build position information relating to the position of the build model PM in the stage coordinate system. As a result, the control apparatus 7 generates the build information in which the build position information relating to the position of the build model PM is associated with the build shape information relating to the shape of the build model PM (a step S154). Namely, the control apparatus 7 generates the build information relating to the build model PM the position and the shape in the stage coordinate system of which are fixed.

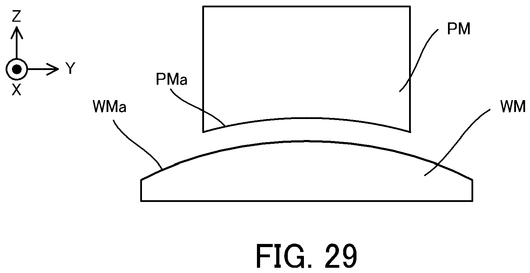

However, the control apparatus 7 may modify the build information generated at the step S154, if needed. For example, as described above, the three-dimensional structural object ST is formed on the workpiece W. Namely, the alignment of the build model PM and the workpiece model WM is performed so that the build model PM is disposed on the workpiece model WM. In this case, there is a possibility that such a technical problem occurs that the three-dimensional structural object ST cannot be formed on the workpiece W by using the build information generated at the step S154, depending on a relationship between a shape of a surface of the build model PM facing toward the workpiece model WM and a shape of a surface of the workpiece model WM facing toward the build model PM. Specifically, as illustrated in FIG. 28 that is a cross-sectional view illustrating the workpiece model WM and the build model PM, when the shape of a surface PMa (a surface facing toward the -Z side in FIG. 28) of the build model PM facing toward the workpiece model WM and the shape of a surface WMa (a surface facing toward the +Z side in FIG. 28) of the workpiece model WM facing toward the build model PM do not have a complementary relationship, there is a possibility that using the build information results in a gap between the three-dimensional structural object ST and the workpiece W. Alternatively, there is a possibility that using the build information results in the formation of the three-dimensional structural object ST that partially enters the workpiece W. Thus, when the shape of the surface PMa and the shape of the surface WMa do not have the complementary relationship, the control apparatus 7 may modify the build information. Specifically, as illustrated in FIG. 29 that is a cross-sectional view conceptually illustrating a modification example of the build information with the build model PM and the workpiece model WM, the control apparatus 7 may modify the build information (especially, the build shape information) so that the shape of the surface PMa of the build model PM represented by the modified build model PM and the shape of the surface WMa of the workpiece model WM have the complementary relationship.

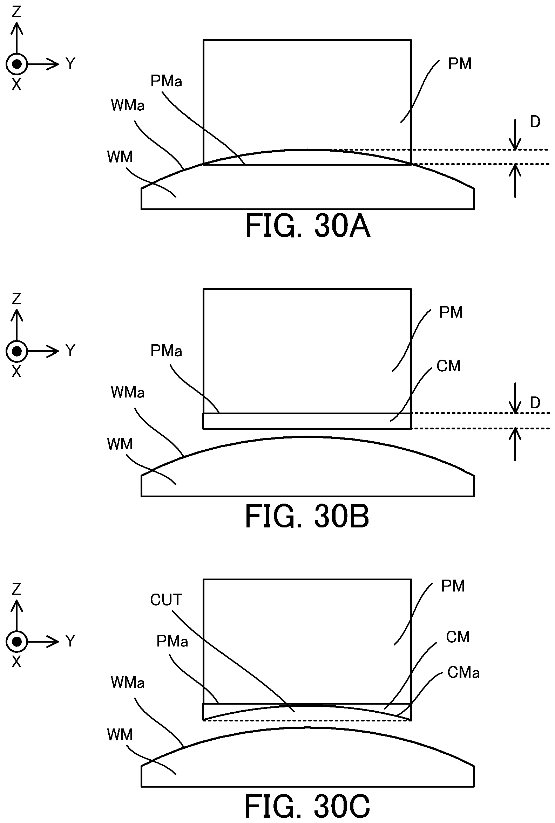

FIG. 30A to FIG. 30C illustrate one example of a method of modifying the build information as illustrated in FIG. 29. Each of FIG. 30A to FIG. 30C is a cross-sectional view that conceptually illustrates one example of the method of modifying the build information with the build model PM and the workpiece model WM. In this case, as illustrated in FIG. 30A, the control apparatus 7 makes the build model PM be closer to the workpiece model WM until there is no gap between the surface PMa of the build model PM and the surface WMa of the workpiece model WM. Namely, the control apparatus 7 makes the build model PM enter the workpiece model WM until there is no gap between the surface PMa of the build model PM and the surface WMa of the workpiece model WM. Then, the control apparatus 7 calculates a thickness (namely, an entering amount of the build model PM relative to the workpiece model WM) D of an overlapped part of the build model PM and the workpiece model WM. Then, as illustrated in FIG. 30B, the control apparatus 7 adds, to the unmodified surface PMa of the build model PM, a margin model CM that is a three-dimensional model corresponding to a build object having the thickness D. Then, as illustrated in FIG. 30C, the control apparatus 7 partially cuts the margin model CM so that a surface CMa of the margin model CM facing toward the workpiece model WM and the shape of the surface WMa of the workpiece model WM have the complementary relationship. As a result, a three-dimensional model including the partially cut margin model CM and the build model PM is used as a new (namely, modified) build model PM Therefore, the control apparatus 7 may modify the build information (especially, the build shape information) so that the modified build information include information relating to a position and a shape of the three-dimensional model (namely, the modified build model PM) including the partially cut margin model CM and the unmodified build model PM.

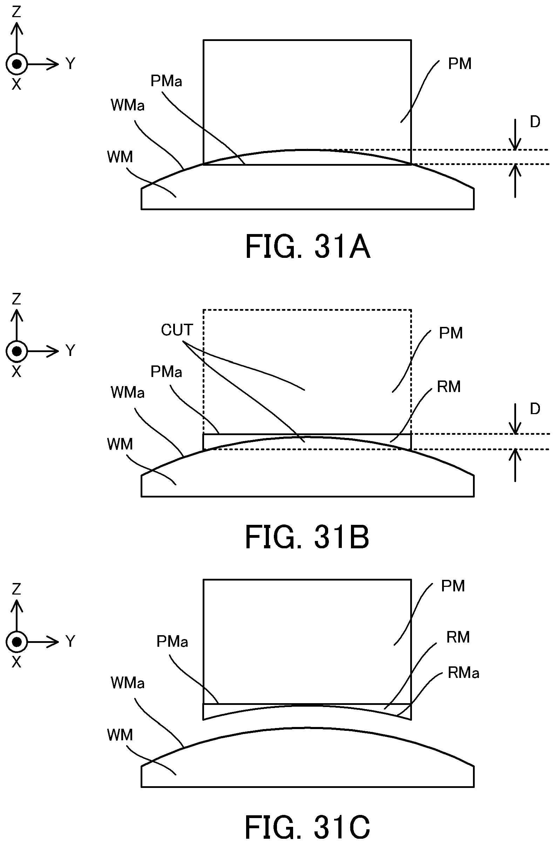

FIG. 31A to FIG. 31C illustrate another example of the method of modifying the build information as illustrated in FIG. 29. Each of FIG. 31A to FIG. 31C is a cross-sectional view that conceptually illustrates another example of the method of modifying the build information with the build model PM and the workpiece model WM. In this case, as illustrated in FIG. 31A, the control apparatus 7 makes the build model PM be closer to the workpiece model WM until there is no gap between the surface PMa of the build model PM and the surface WMa of the workpiece model WM. Then, the control apparatus 7 calculates the thickness (namely, the entering amount of the build model PM relative to the workpiece model WM) D of the overlapped part of the build model PM and the workpiece model WM. Then, as illustrated in FIG. 31B, the control apparatus 7 cuts a part of the build model PM that overlaps with the workpiece model WM. Furthermore, the control apparatus 7 cuts a part of the build model PM other than a lower edge part having the thickness D. As a result, a part of the build model PM that is the lower edge part having the thickness D and that does not overlap with the workpiece model WM remains as a repaired model RM. A shape of a surface RMa of the repaired model RM facing toward the workpiece model WM and the shape of the surface WMa of the workpiece model WM have the complementary relationship. This repaired model RM may be regarded to be equivalent to a three-dimensional model of a build object that fills the gap between the surface PMa of the build model PM and the surface WMa of the workpiece model WM. Then, as illustrated in FIG. 31C, the repaired model RM is added to a lower edge of the build model PM. As a result, a three-dimensional model including the repaired model RM and the build model PM is used as a new (namely, modified) build model PM Therefore, the control apparatus 7 may modify the build information (especially, the build shape information) so that the modified build information include information relating to a position and a shape of the three-dimensional model (namely, the modified build model PM) including the repaired model RM and the unmodified build model PM.

### (2-4) Build operation

Next, the build operation will be described. The build operation is an operation of actually forming the three-dimensional structural object ST on the workpiece W.

As described above, the processing system SYS forms the three-dimensional structural object ST by the Laser Metal Deposition. Thus, the processing system SYS may form the three-dimensional structural object ST by performing an existing build operation (a build operation in this case) based on the Laser Metal Deposition. One example of the build operation of forming the three-dimensional structural object ST by using the Laser Metal Deposition will be briefly described in the below described description.

The processing system SYS forms the three-dimensional structural object ST, the position and the shape of which is determined by the above described build model alignment operation, on the workpiece W, the position and the shape of which is determined by the above described workpiece model alignment operation. Namely, the processing system SYS forms the three-dimensional structural object ST having the desired shape at a desired position on the workpiece W on the basis of the workpiece information that is generated by the above described workpiece model alignment operation and the build information that is generated by the above described build model alignment operation.

The processing system SYS sequentially forms a plurality of layered partial structural objects (it is referred to as a "structural layer" in the below described description) SL that are arranged along the Z axis direction in order to form the three-dimensional structural object ST, for example. For example, the processing system SYS forms, one by one, the plurality of structural layers SL that are obtained by slicing the three-dimensional structural object ST along the Z axis direction. As a result, the three-dimensional structural object ST that is a layered structural body in which the plurality of structural layers SL are layered is formed. Next, a flow of an operation for forming the three-dimensional structural object ST by forming the plurality of structural layers SL one by one in sequence will be described.

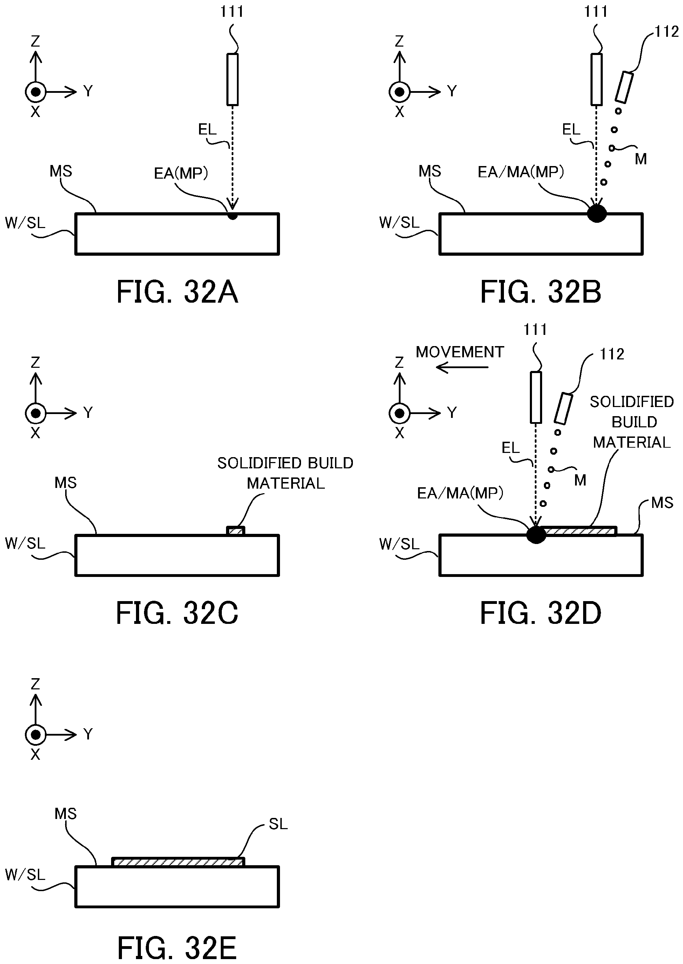

Firstly, with reference to FIG. 32A to FIG. 32C, an operation for forming each structural layer SL will be described. The processing system SYS sets the irradiation area EA at a desired area on the build surface MS that corresponds to a surface of the workpiece W or a surface of the formed structural layer SL and emits the processing light EL from the irradiation optical system 211 to the irradiation area EA under the control of the control apparatus 7. Note that an area on the build surface MS that is occupied by the processing light EL emitted from the irradiation optical system 211 may be referred to as the irradiation area EA. In the first embodiment, the light concentration position (namely, a condensed position) of the processing light EL is coincident with the build surface MS. As a result, as illustrated in FIG. 32A, the melt pool (namely, a pool of a metal molten by the processing light EL) MP is formed at the desired area on the build surface MS by the processing light EL emitted from the irradiation optical system 211. Moreover, the processing system SYS sets the supply area MA at the desired area on the build surface MS and supplies the build materials M to the supply area MA from the material nozzle 212 under the control of the control apparatus 7. Here, since the irradiation area EA is coincident with the supply area MA as described above, the supply area MA is set at an area at which the melt pool MP is formed. Thus, the processing system SYS supplies the build materials M to the melt pool MP from the material nozzle 212, as illustrated in FIG. 32B. As a result, the build materials M supplied to the melt pool MP are molten. When the melt pool MP is not irradiated with the processing light EL due to the movement of the build head 21, the build materials M molten in the melt pool MP are cooled and solidified again (namely, coagulated). As a result, as illustrated in FIG. 32C, the solidified build materials M are deposited on the build surface MS. Namely, a build object is formed by a deposition of the solidified build materials M.

A series of build process including the formation of the melt pool MP by the irradiation of the processing light EL, the supply of the build materials M to the melt pool MP, the melting of the supplied build materials M and the solidification of the molten build materials M is repeated while relatively moving the build head 21 relative to the build surface MS along the XY plane, as illustrated in FIG. 32D. Namely, when the build head 21 relatively moves relative to the build surface MS, the irradiation area EA also relatively moves relative to the build surface MS. Therefore, the series of build process is repeated while relatively moving the irradiation area EA relative to the build surface MS along the XY plane (namely, in a two-dimensional plane). In this case, the irradiation area EA set at the area on which the build object should be formed on the build surface MS is selectively irradiated with the processing light EL and the irradiation area EA set at an area on which the build object should not be formed on the build surface MS is not selectively irradiated with the processing light EL (it can be said that the irradiation area EA is not set at the area on which the build object should not be formed). Namely, the processing system SYS moves the irradiation area EA along a predetermined moving trajectory on the build surface MS and irradiates the build surface MS with the processing light EL at a timing based on an aspect of a distribution of an area on which the build object should be formed. Note that the aspect of the distribution of an area on which the build object should be formed may be referred to as a distribution pattern and a pattern of the structural layer SL. As a result, the melt pool MP also moves on the build surface MS along a moving trajectory based on the moving trajectory of the irradiation area EA. Specifically, the melt pool MP is formed in series at a part that is irradiated with the processing light EL in the area along the moving trajectory of the irradiation area EA on the build surface MS. Moreover, since the irradiation area EA is coincident with the supply area MA as described above, the supply area MA also moves on the build surface MS along a moving trajectory based on the moving trajectory of the irradiation area EA. As a result, as illustrated in FIG. 32E, the structural layer SL that is an aggregation of the build object of the solidified build materials M is formed on the build surface MS. Namely, the structural layer SL that is an aggregation of the build object formed in a pattern based on the moving trajectory of the melt pool MP on the build surface MS (namely, the structural layer SL having a shape based on the moving trajectory of the melt pool MP in a planar view) is formed.

In this case, at least a part of a side surface of the structural layer SL may be parallel to at least a part of a side surface of the workpiece W. Namely, the processing system SYS may form, on the upper surface of the workpiece W that has a planar side surface, the structural layer SL that includes a surface parallel to at least a part of the side surface of the workpiece W. Note that FIG. 32E illustrates an example in which both of at least a part of the side surface of the structural layer SL and at least a part of the side surface of the workpiece W are parallel to the Z axis.

Incidentally, when the irradiation area EA is set at the area on which the build object should not be formed, the irradiation area EA may be irradiated with the processing light EL and the supply of the build materials M may be stopped. Moreover, when the irradiation area EA is set at the area on which the build object should not be formed, the build materials M may be supplied to the irradiation area EL and the irradiation area EL may be irradiated with the processing light EL having an intensity by which the melt pool MP is not formed. Incidentally, although the irradiation area EA is moved relative to the build surface MS in the above described description, the build surface MS may be moved relative to the irradiation area EA.

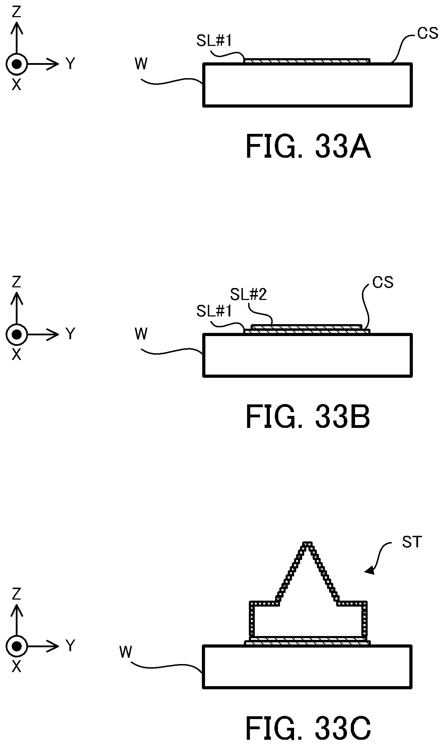

The processing system SYS repeats the operation for forming the structural layer SL on the basis of the build information (namely, the information relating to the build model PM) under the control of the control apparatus 7. Specifically, a slice data is firstly generated by performing a slicing process on the build model PM represented by the build information by a layer pitch. Note that a data obtained by partially modifying the slice data on the basis of a characteristic of the processing system SYS may be used. The processing system SYS performs an operation for forming the first structural layer SL#1 on the build surface MS that corresponds to the surface of the workpiece W on the basis of the three-dimensional model data corresponding to a structural layer SL#1, namely, the slice data corresponding to the structural layer SL#1. For example, the processing system SYS may operate by using information relating to a tool path, which is a trajectory of the irradiation area EA (the supply area MA) that passes an area t which the structural layer SL#1 exists, of the slice data corresponding to the structural layer SL#1. As a result, as illustrated in FIG. 33A, the structural layer SL#1 is formed on the build surface MS. The structural layer SL#1 is integrated (in other words, coupled) with the build surface MS. Namely, the structural layer SL#1 is integrated (in other words, coupled) with the workpiece W. Then, the processing system SYS sets the surface (namely, an upper surface) of the structural layer SL#1 to a new build surface MS and forms a second structural layer SL#2 on the new build surface MS. In order to form the structural layer SL#2, firstly, the control apparatus 7 controls the head driving system 22 so that the build head 21 moves along the Z axis direction. Specifically, the control apparatus 7 controls the head driving system 22 to move the build head 21 toward the +Z axis side so that the irradiation area EA and the supply area MA are set on the surface of the structural layer SL#1 (namely, the new build surface MS). By this, the light concentration position of the processing light EL is coincident with the new build surface MS. Then, the processing system SYS forms the structural layer SL#2 on the structural layer SL#1 on the basis of the slice data corresponding to the structural layer SL#2 by the operation that is the same as the operation for forming the structural layer SL#1 under the control of the control apparatus 7. As a result, as illustrated in FIG. 33B, the structural layer SL#2 is formed. The structural layer SL#1 is integrated (in other words, coupled) with the build surface MS. Namely, the structural layer SL#1 is integrated (in other words, coupled) with the structural layer SL#2. Then, the same operation is repeated until all structural layers SL constituting the three-dimensional structural object ST that should be formed on the workpiece W are formed. As a result, the three-dimensional structural object ST is formed by a layered structural object in which the plurality of structural layers SL are layered, as illustrated in FIG. 33C.

In this case, when at least a part of the side surface of the structural layer SL is parallel to at least a part of the side surface of the workpiece W, at least a part of a side surface of the three-dimensional structural object ST, which is constituted from the plurality of structural layers SL, may also be parallel to at least a part of the side surface of the workpiece W. Namely, the processing system SYS may form, on the upper surface of the workpiece W that has the planar side surface, the three-dimensional structural object ST that includes a surface parallel to at least a part of the side surface of the workpiece W.

The three-dimensional structural object ST formed like this is typically integrated (in other words, coupled) with the workpiece W. Namely, the processing system SYS forms the three-dimensional structural object ST that is integrated (in other words, coupled) with the workpiece W. When the three-dimensional structural object ST is integrated (in other words, coupled) with the workpiece W, it can be said that a relative position of the workpiece W and the three-dimensional structural object ST is fixed (namely, kept). Namely, it can be said that the processing system SYS forms the three-dimensional structural object ST the relative position of which is fixed relative to the workpiece W.

### (3) Technical Effect of Processing System SYS in First Embodiment

As described above, the processing system in the first embodiment properly performs the additive processing on the workpiece W.

The processing system SYS generates the workpiece information by the workpiece model alignment operation and forms the three-dimensional structural object ST on the workpiece W the position and the shape of which are determined by the generated workpiece information. Thus, the processing system SYS forms the three-dimensional structural object ST on the workpiece W more properly, compared to the case where the workpiece information is not used. Moreover, since the workpiece information is mainly generated by the processing system SYS, a load of the user is reduced, compared to the case where the user generates the workpiece information.

The processing system SYS generates the build position information by the build model alignment operation and forms, on the workpiece W, the three-dimensional structural object ST the position of which is determined by the generated build position information. Thus, the processing system SYS forms the three-dimensional structural object ST on the workpiece W more properly, compared to the case where the build position information is not used. Moreover, since the build position information is mainly generated by the processing system SYS, a load of the user is reduced, compared to the case where the user generates the build position information.

### (4) Processing System SYS in Second Embodiment

Next, the processing system SYS in a second embodiment will be described. In the below described description, the processing system SYS in the second embodiment is referred to as a "processing system SYSa" to distinguish it from the processing system SYS in the first embodiment.

### (4-1) Structure of Processing System SYSa in Second Embodiment

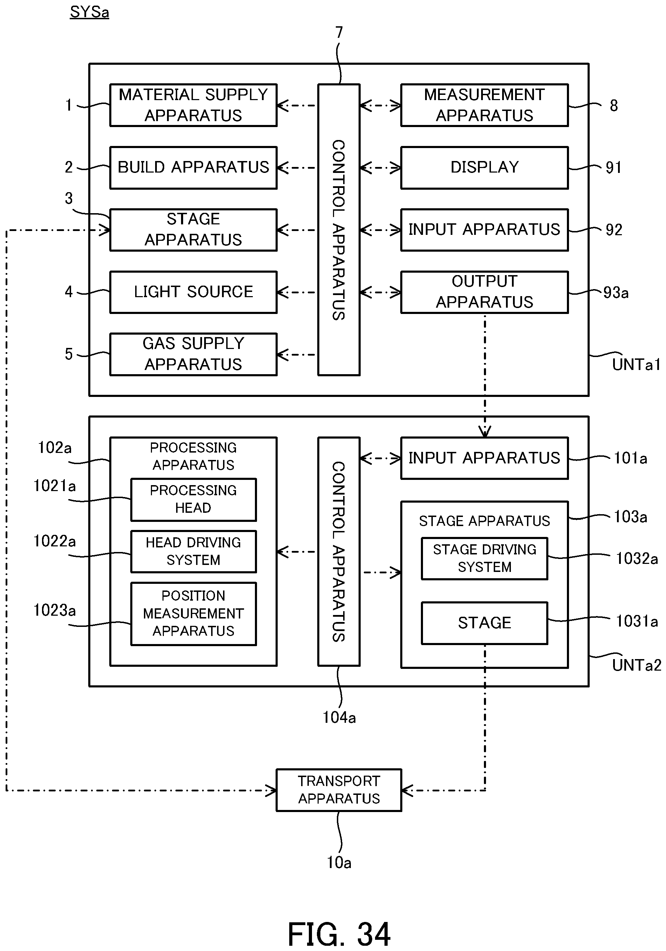

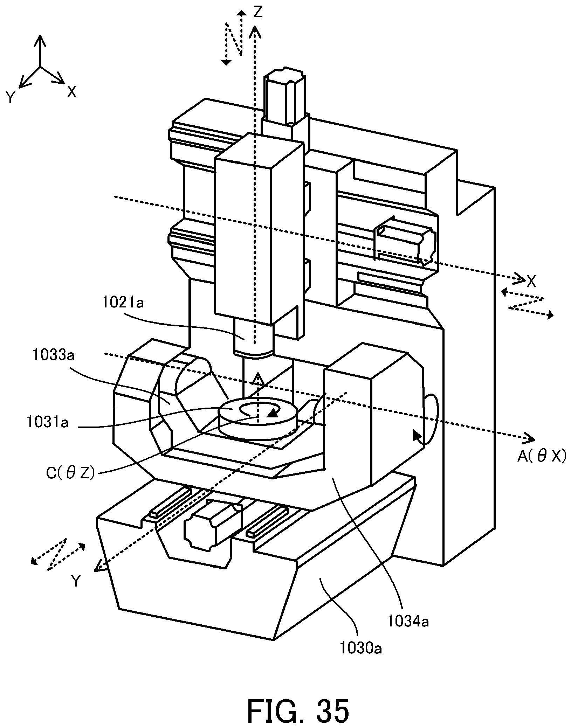

Firstly, with reference to FIG. 34 and FIG. 35, a structure of the processing system SYSa in the second embodiment will be described. FIG. 34 is a system configuration diagram that illustrates one example of a system configuration of the processing system SYSa in the second embodiment. FIG. 35 is a perspective view that illustrates a structure of an exterior of a processing unit UNTa2 of the processing system SYSa in the second embodiment. Note that a detailed description of a component that is already described is omitted by assigning the same reference number to it.

As illustrated in FIG. 34, the processing system SYSa is provided with a build unit UNTa1, the processing UNTa2 and a transport apparatus 10.

The build unit UNTa1 is provided with the material supply apparatus 1, the build apparatus 2, the stage apparatus 3, the light source 4, the gas supply apparatus 5, the housing 6, the control apparatus 7, the measurement apparatus 8, the display 91 and the input apparatus 92, as with the processing system SYS in the first embodiment. Thus, the build unit UNTa1 may form the three-dimensional structural object ST on the workpiece W by performing the coordinate matching operation, the workpiece model alignment operation, the build model alignment operation and the build operation will be described in sequence, as with the processing system SYS. The build unit UNTa1 is different from the processing system SYS in that it is provided with an output apparatus 93. Another feature of the build unit UNTa1 may be same as another feature of the processing system SYS.

The output apparatus 93a is an apparatus that outputs information to an outside of the build unit UNTa1. For example, the output apparatus 93a may output the information to a user of the build unit UNTa1 and / or a user of the processing unit UNTa2. For example, the output apparatus 93a may output the information to an external apparatus outside the build unit UNTa1. Specifically, the output apparatus 93a may output the information to the processing unit UNTa2. For example, the output apparatus 93a may output the information to a recording medium that is attachable to the build unit UNTa1. At least one of a display that is configured to output information as an image and a speaker that is configured to output information as a sound is one example of the output apparatus 93a. An interface apparatus for connecting to the external apparatus outside the build unit UNTa1 is another example of the output apparatus 93a. A writing apparatus that is configured to perform a writing on the recording medium that is attachable to the build unit UNTa1 is another example of the output apparatus 93a.

The information outputted from the output apparatus 93a may include information relating to the build unit UNTa1. The information relating to the build unit UNTa1 may include information relating to the operation (for example, the coordinate matching operation, the workpiece model alignment operation, the build model alignment operation and / or the build operation) performed by the build unit UNTa1, for example.

The processing unit UNTa2 processes a processing target object. In the second embodiment, the processing target object includes the three-dimensional structural object ST (namely, the three-dimensional structural object ST that is formed by the above described build unit UNTa1). A processing operation performed by the processing unit UNTa2 may be any operation as long as it is an operation that is configured to processes the three-dimensional structural object ST. In the below described description, it is assumed that the processing unit UNTa2 performs a finish-processing for allowing the size of the three-dimensional structural object ST to be closer to a designed size (namely, an ideal size) for the convenience of the description. In this case, the processing unit UNTa2 may perform the finish-processing for allowing the size of the three-dimensional structural object ST by removing (for example, cutting) a part of the three-dimensional structural object ST, for example. namely, the processing unit UNTa2 may performs a removal processing on the three-dimensional structural object ST.

In order to perform the processing operation, the processing unit UNTa2 is provided with an input apparatus 101a (not illustrated in FIG. 35), a processing apparatus 102a, a stage apparatus 103a and a control apparatus 104a (not illustrated in FIG. 35), as illustrated in FIG. 34 and FIG. 35. Note that FIG. 35illustrates an example in which the processing unit UNTa2 is a processing unit (what we call a machining center) having three linear axes that are perpendicular to one another and two rotational axes that are perpendicular to each other. However, the structure of the processing unit UNTa2 is not limited to the structure illustrated in FIG. 35. For example, the processing unit UNTa2 may be any machine tool (for example, a turning machine, a turning center, a multi-tasking machine tool, a drilling machine or a grinding machine) that is different from the machining center.

The input apparatus 101a is an apparatus that receives an input of information from the outside of the processing unit UNTa2. For example, the input apparatus 101a may receive the input of the information from the user. Specifically, the input apparatus 101a may receive the input of the information from the user of the build unit UNTa1 and / or the user of the processing unit UNTa2. For example, the input apparatus 101a may receive the input of the information from an external apparatus outside the processing UNTa2. Specifically, for example, the input apparatus 101a may receive the input of the information that is outputted from the build unit UNTa1. For example, the input apparatus 101a may receive the input of the information from a recording medium that is attachable to the processing UNTa2. An operation apparatus that is operable by the user is one example of the input apparatus 101a. At least one of a keyboard, a mouse, a touch pad, a touch panel (for example, a touch panel that is integrated with a non-illustrated display of the processing unit UNTa2) and a pointing device is one example of the operation apparatus. An interface apparatus for connecting to the apparatus at the outside of the processing unit UNTa2 is another example of the input apparatus 101a. A reading apparatus that is configured to read the recording medium that is attachable to the processing unit UNTa2 is another example of the input apparatus 101a. The information the input of which is received by the input apparatus 101a (namely, the information inputted to the input apparatus 101a) is outputted to the control apparatus 104a, for example.

The processing apparatus 102a processes (for example, removal-processes, as described above) the three-dimensional structural object ST (namely, the processing target object). In order to process the three-dimensional structural object ST, the processing apparatus 102a is provided with a processing head 1021a, a head driving system 1022a (not illustrated in FIG. 35) and a position measurement apparatus 1023a (not illustrated in FIG. 35). However, the processing apparatus 102a may not be provided with the head driving system 1022a and the position measurement apparatus 1023a.

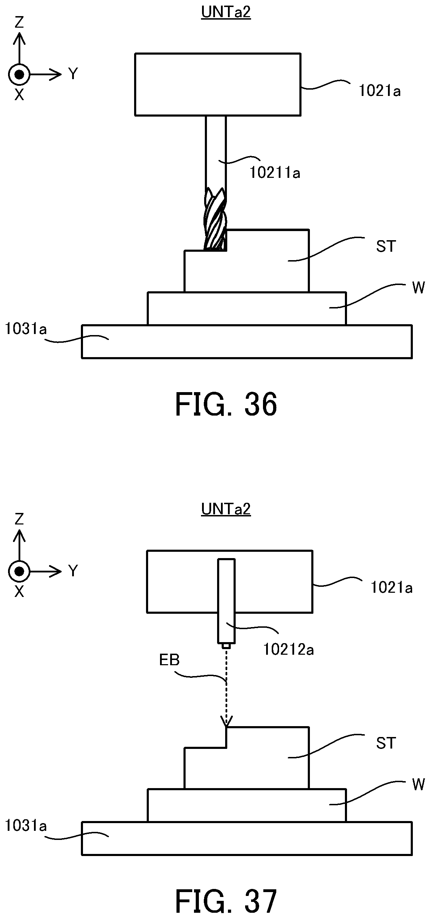

The processing head 1021a processes the three-dimensional structural object ST (namely, the processing target object). The processing head 1021a may have any structure as long as it is configured process the three-dimensional structural object ST. One example of the processing head 1021a is illustrated in FIG. 36 and FIG. 37. FIG. 36 illustrates the processing head 1021a that partially cuts the three-dimensional structural object ST by using a cutting tool 10211a. At least one of a drill tool, a turning tool, a milling tool, an end mill tool, a reamer tool, a tap tool, a hob tool, a pinion cutter, a dice, a broaching tool, a trimmer and a router is one example of the cutting tool 10211a. FIG. 37 illustrates the processing head 1021a that partially cuts the three-dimensional structural object ST by using an energy beam EB. In the example illustrated in FIG. 37, the processing head 1021a partially removes the three-dimensional structural object ST by emitting the energy beam EB from the irradiation optical system 10212a to the three-dimensional structural object ST. In this case, a part of the three-dimensional structural object ST that is irradiated with the energy beam EB is evaporated or ablated and thus three-dimensional structural object ST is partially removed. Note that a light, a charged particle beam or the like is one example of the energy beam EB.

The head driving system 1022a moves the processing head 1021a under the control of the control apparatus 104a. The head driving system 1022a moves the processing head 1021a along at least one of the X axis, the Y axis, the Z axis, the θX direction, the θY direction and the θZ direction. The head driving system 1022a includes a motor, for example.

In the example illustrated in FIG. 35, the head driving system 1022a moves the processing head 1021a relative to a bed 1030a that is a basement of the stage apparatus 103 along the X axis and the Z axis that are the linear axes and that are perpendicular to each other. Namely, the processing head 1021a is configured to move in in two degrees of freedom of translation relative to the bead 1030a.

The position measurement apparatus 1023a is configured to measure a position of the processing head 1021a. The position measurement apparatus 1023a may include at least one of an encoder and a laser interferometer, for example.

The stage apparatus 103a is provided with the stage 1031a. The stage 1031a is configured to support the workpiece W (more specifically, the workpiece W on which the three-dimensional structural object ST is built by the build unit UNTa1). Note that a state where "the stage 1031a supports the workpiece W" here may mean a state where the workpiece W is directly or indirectly supported by the stage 1031a. The stage 1031a may be configured to hold the workpiece W. Namely, the stage 1031a may support the workpiece W by holding the workpiece W. Alternatively, the stage 1031a may not be configured to hold the workpiece W. In this case, the workpiece W may be placed on the stage 1031a. Namely, the stage 1031a may support the workpiece W placed on the stage 1031a. In this case, the workpiece W may be placed on the stage 1031a without a clamp. Therefore, the state where "the stage 1031a supports the workpiece W" in the second embodiment may include a state where the stage 1031a holds the workpiece W and a state where the workpiece W is placed on the stage 1031a. The stage 1031a may be referred to as a support apparatus that supports the workpiece W, a placement apparatus on which the workpiece W is placed, a holding apparatus that holds the workpiece W or a table. Moreover, when the stage 1031a may be configured to release the held workpiece W, when the workpiece W is held. The above described processing head 1021a processes the three-dimensional structural object in at least a part of a period when the stage 1031a supports the workpiece W. Note that the stage 1031a may be provided with a mechanical chuck, a vacuum chuck and the like in order to hold the workpiece W.

The stage apparatus 103a is further provided with a stage driving system 1032a (however, not illustrated in FIG. 35). However, the stage apparatus 103a may not be provided with a stage driving system 1032a. In the example illustrated in FIG. 35, the stage driving system 1032a moves the stage 1031a to rotate it around a C axis that is the rotational axis (namely, to move it along the rotational direction along the θZ direction) relative to a cradle 1033a of the stage apparatus 103a. Namely, the stage 1031a is configured to move in one degree of freedom of rotation relative to the cradle 1033a. Moreover, the stage driving system 1032a moves the cradle 1033a to rotate it around an A axis that is the rotational axis and that is perpendicular to the C axis (namely, to move it along the rotational direction along the θX direction) relative to a trunnion 1034a of the stage apparatus 103a. Namely, the cradle 1033a is configured to move in one degree of freedom of rotation relative to the trunnion 1034a. Note that the cradle 1033a may be referred to as a swing member or a rotation member. Moreover, the stage driving system 1032a moves the trunnion along the Y axis that is the liner axis and that is perpendicular to the X axis and the Z axis relative to the bed 1030a. Namely, the trunnion 1034a is configured to move in one degree of freedom of translation relative to the bed 1030a. Note that the trunnion 1034a may be referred to as a movement member. As a result, the processing head 1021a is configured to move in three degrees of freedom of translation and two degrees of freedom of rotation relative to the stage 1031a. Each feed shaft (namely, a feed shaft corresponding to the X axis, a feed shaft corresponding to the Y axis, a feed shaft corresponding to the Z axis, a feed shaft corresponding to the C axis, a feed shaft corresponding to the A axis) of the stage driving system 1032a (moreover, the head driving system 1022a) is driven by a servo motor under the control of the control apparatus 7 or the control apparatus 104a.

However, the number of the axis of the movement of the processing head 1021a is not limited to five axes, and may be three axes, four axes or six axes. Moreover, the stage 1031a may not be configured to move in two degrees of freedom of rotation, the processing head 1021a may be configured to move in two degrees of freedom of rotation, and each of the processing head 1021a and the stage 1031a may be configured to move in one or more degree of freedom of rotation.

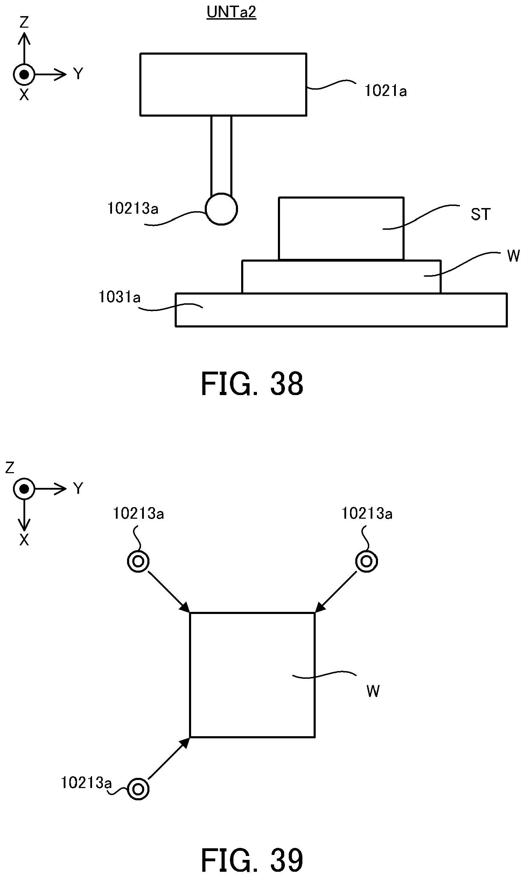

The processing apparatus 102a may have a function for measuring the workpiece W supported by the stage 1031a or the three-dimensional structural object ST. Next, with reference to FIG. 38 to 42, the function of the processing apparatus 102a for measuring the workpiece W or the three-dimensional structural object ST will be descried. FIG. 38 is a planar view that illustrates the processing head 1021a to which a probe 10213a for measuring the workpiece W or the three-dimensional structural object ST is attached. Each of FIG. 39 to FIG. 42 is a planar view that illustrates an aspect of measuring the workpiece W or the three-dimensional structural object ST by using the probe 10213a.

As illustrated in FIG. 38, when the processing apparatus 102a measures the workpiece W or the three-dimensional structural object ST, the probe 10213a (specifically, a touch probe) is attached to the processing head 1021a. The processing apparatus 102a makes the probe 10213a contact with a predetermined part of the workpiece W or the three-dimensional structural object ST under the control of the control apparatus 104a. The control apparatus 104a calculates the position of the workpiece W or the three-dimensional structural object ST on the basis of a position of the probe 10213a when the probe 10213a contacts with the predetermined part of the workpiece W or the three-dimensional structural object ST.

For example, as illustrated in FIG. 39, the processing apparatus 102a may make the probe 10213a contact with a corner (namely, a vertex) of the workpiece W. For example, the processing apparatus 102a may make the probe 10213a contact with one corner of the workpiece W. In this case, the control apparatus 104a is allowed to calculate the position of the workpiece W in each of the X axis direction, the Y axis direction and the Z axis direction. For example, the processing apparatus 102a may make the probe 10213a contact with each of two corners of the workpiece W. In this case, the control apparatus 104a is allowed to calculate the position in the θZ direction (namely, a rotational amount of the workpiece W around the Z axis) in addition to the position of the workpiece W in each of the X axis direction, the Y axis direction and the Z axis direction. For example, the processing apparatus 102a may make the probe 10213a contact with each of three corners of the workpiece W. In this case, the control apparatus 104a is allowed to calculate the position of the workpiece W in each of the X axis direction, the Y axis direction and the Z axis direction and the position in each of the θX direction, the θY direction and the θZ direction (namely, a rotational amount of the workpiece W around each of the X axis, the Y axis and the Z axis).

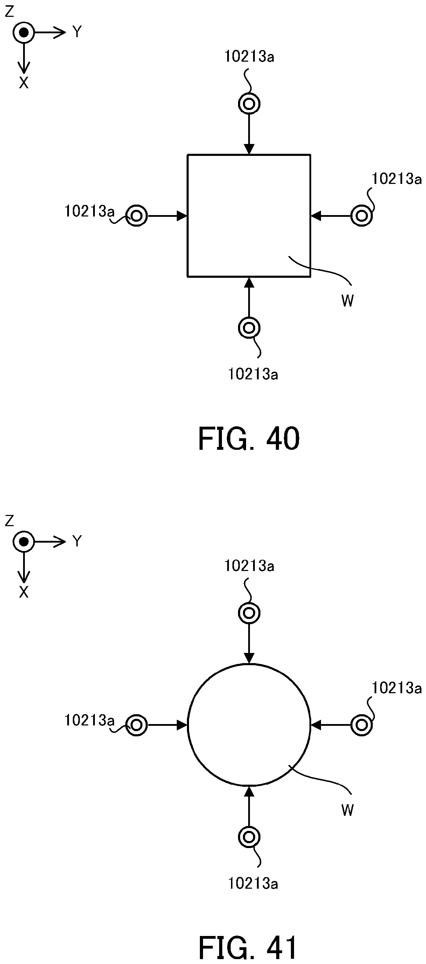

For example, when the shape of the workpiece W is a shape that is already know to the processing unit UNTa2, the processing apparatus 102a may make the probe 10213a contact with a side surface of the workpiece W. For example, when the shape of the workpiece W is a rectangular shape in a planar view (namely, the shape of the workpiece W is a rectangular column shape), the processing apparatus 102a may make the probe 10213a contact with each of a side surface at the +X side and a side surface at the -X side of the workpiece W, as illustrated in FIG. 40. In this case, the control apparatus 104a is allowed to calculate a center position of the workpiece W in the X axis direction. For example, when the shape of the workpiece W is a rectangular shape in a planar view, the processing apparatus 102a may make the probe 10213a contact with each of a side surface at the +Y side and a side surface at the -Y side of the workpiece W, as illustrated in FIG. 40. In this case, the control apparatus 104a is allowed to calculate a center position of the workpiece W in the Y axis direction. For example, even in the case where the shape of the workpiece W is a circular shape in a planar view (namely, the shape of the workpiece W is a cylindrical shape), the processing apparatus 102a may make the probe 10213a contact with each side surface of the workpiece W, as illustrated in FIG. 41. In this case, the control apparatus 104a is allowed to calculate a center position of the workpiece W (in an example illustrated in FIG. 41, a center position in a lane that is along the XY plane).

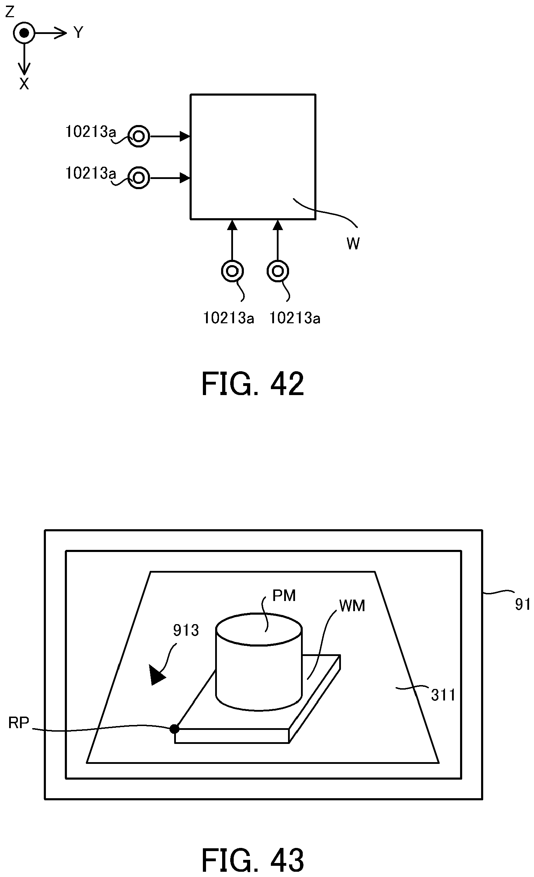

For example, when the shape of the workpiece W is a shape that is already know to the processing unit UNTa2, the processing apparatus 102a may make the probe 10213a contact with a plurality of different parts on each of two side surfaces of the workpiece W that are intersect with each other. side surface. For example, the processing apparatus 102a may make the probe 10213a contact with different two parts on a first side surface (in an example illustrated in FIG. 42, a side surface at the +X side) of the workpiece W and make the probe 10213a contact with different two parts on a second side surface (in the example illustrated in FIG. 42, a side surface at the -Y side) of the workpiece W. In this case, the control apparatus 104a is allowed to calculate a position of an intersecting point of the first side surface of the workpiece W and the second side surface of the workpiece W (in the example illustrated in FIG. 42, an intersecting point of the side surface of the workpiece W at the +X side and the side surface of the workpiece W at the -Y side).

Note that the processing apparatus 102a may measure the workpiece W by using an irradiation apparatus that is configured to emit a beam for an alignment in addition to or instead of the probe 10213a. Specifically, the processing apparatus 102a may calculate the position of the workpiece W or the three-dimensional structural object ST on the basis of a position of the processing head 1021a when the predetermined part of the workpiece W or the three-dimensional structural object ST is irradiated with the beam for the alignment from the irradiation apparatus that is attached to the processing head 1021a.

Again in FIG. 34, the control apparatus 104a controls an operation of the processing unit UNTa2. The control apparatus 104a may include a CPU (Central Processing Unit) (alternatively, a GPU (Graphic Processing Unit) in addition to or instead of the CPU) and a memory, for example. The control apparatus 104a serves as an apparatus for controlling the operation of the processing unit UNTa2 by means of the CPU executing a computer program. The computer program is a computer program that allows the control apparatus 104a (for example, the CPU) to execute (namely, to perform) a below described operation that should be executed by the control apparatus 104a. Namely, the computer program is a computer program that allows the control apparatus 104a to function so as to make the processing unit UNTa2 execute the below described operation. The computer program executed by the CPU may be recorded in the memory (namely, a recording medium) of the control apparatus 104a, or may be recorded in any recording medium (for example, a hard disk or a semiconductor memory) that is built in the control apparatus 104a or that is attachable to the control apparatus 104a. Alternatively, the CPU may download the computer program that should be executed from an apparatus disposed at the outside of the control apparatus 104a through a network interface.

For example, the control apparatus 104a may control a processing aspect of the three-dimensional structural object ST by the processing head 1021a. When the processing head 1021a includes the cutting tool 10211a (see FIG. 36), the processing aspect may include a state of the cutting tool 10211a (for example, a rotational amount of the cutting tool 10211a). When the processing head 1021a includes the irradiation optical system 10212a (see FIG. 37), the processing aspect may include a state of the energy beam EB (for example, at least one of an intensity of the energy beam EB and an emission timing of the energy beam EB). Moreover, the control apparatus 104a may control a moving aspect of the processing head 1021a by the head driving system 1022a. The moving aspect may include at least one of a moving distance, a moving speed, a moving direction and a moving timing, for example. Especially, the control apparatus 104a may control the moving aspect of the processing head 1021a so that a removal target part of the three-dimensional structural object ST that should be removed by the processing unit UNTa2 is removed properly. Namely, the control apparatus 104a may control the moving aspect of the processing head 1021a so that the removal target part of the three-dimensional structural object ST contacts with the cutting tool 10211a or is irradiated with the energy beam EB.

The control apparatus 104a may not be disposed in the processing unit UNTa2, and may be disposed at the outside of the processing unit UNTa2 as a server or the like. In this case, the control apparatus 104a may be connected to the processing unit UNTa2 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 104a and the processing unit UNTa2 may be configured to transmit and receive various information through the network. Moreover, the control apparatus 104a may be configured to transmit an information such as a command and a control parameter to the processing unit UNTa2 through the network. The processing unit UNTa2 may be provided with a receiving apparatus that receives the information such as the command and the control parameter from the control apparatus 104a through the network. The processing unit UNTa2 may be provided with a transmitting apparatus that transmits the information such as the command and the control parameter to the control apparatus 104a through the network (namely, an output apparatus that outputs the information to the control apparatus 104a). Alternatively, a first control apparatus that performs a part of the processing performed by the control apparatus 104a may be disposed in the processing unit UNTa2 and a second control apparatus that performs another part of the processing performed by the control apparatus 104a may be disposed at the outside of the processing unit UNTa2.

Note that the recording medium recording therein the computer program that should be executed by the CPU may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. Moreover, the recording medium may include a device that is configured to record the computer program (for example, a device for a universal use or a device for an exclusive use in which the computer program is embedded to be executable in a form of at least one of a software, a firmware and the like). Moreover, various processes or functions included in the computer program may be realized by a logical process block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes an partial element of the hardware are combined.

The transport apparatus 10a transports the workpiece W from the build unit UNTa1 to the processing unit UNTa2. The transport apparatus 10a may grasp the workpiece W by using a transport arm and transport the grasped workpiece W. The transport apparatus 10a may transport the workpiece W by storing the workpiece W in a container and transporting the container in which the workpiece W is stored.

As described above, the processing system SYS forms the three-dimensional structural object ST that is integrated with the workpiece W. Thus, the transport apparatus 10a substantially transports the three-dimensional structural object ST formed on the workpiece W by transporting the workpiece W. The transport apparatus 10a transports the three-dimensional structural object ST with the workpiece W. The transport apparatus 10a transports the three-dimensional structural object ST with the workpiece W while keeping a relative position of the workpiece W and the three-dimensional structural object ST. Thus, the transport apparatus 10a transports the workpiece W (the three-dimensional structural object ST) from the build unit UNTa1 to the processing unit UNTa2 after the build unit UNTa1 forms the three-dimensional structural object ST on the workpiece W. Then, the processing unit UNTa2 processes the three-dimensional structural object ST transported from the build unit UNTa1 by the transport apparatus 10.

The transport apparatus 10a transports the workpiece W from the build unit UNTa1 to the processing unit UNTa2. The transport apparatus 10a transports the workpiece W to the processing unit UNTa2 after the build unit UNTa1 forms the three-dimensional structural object ST on the workpiece W. Since the build unit UNTa1 forms the three-dimensional structural object ST that is integrated with the workpiece W as described above, the transport apparatus 10a substantially transports the workpiece W that is integrated with the three-dimensional structural object ST. The transport apparatus 10a transports the workpiece W with the three-dimensional structural object ST. The transport apparatus 10a transports the workpiece W with the three-dimensional structural object ST while keeping the relative position of the workpiece W and the three-dimensional structural object ST. Note that the processing system SYSa may not be provided with the transport apparatus 10a.

### (4-2) Operation of Processing System SYSa in Second Embodiment

Next, an operation that is performed by the processing system SYSa in the second embodiment will be described. In the second embodiment, the build unit UNTa1 builds the three-dimensional structural object ST and then the processing unit UNTa2 processes the three-dimensional structural object ST. Therefore, in the below described description, an operation that is performed by the build unit UNTa1 and an operation that is performed by the processing unit UNTa2 will be described in sequence.

### (4-2-1) Operation performed by Build Unit UNTa1

The build unit UNTa1 forms the three-dimensional structural object ST in a same manner as the above described processing system SYS in the first embodiment. Namely, the build unit UNTa1 performs the coordinate matching operation, then performs the workpiece model alignment operation, then performs the build model alignment operation and then performs the build operation.

However, in the second embodiment, in the build model alignment operation (alternatively, the workpiece model alignment operation), the control apparatus 7 sets (in other words, designates) a fiducial point RP that is usable as a fiducial position when the three-dimensional structural object ST is formed. Specifically, at the step S153 in FIG. 22, the control apparatus 7 sets the fiducial point RP in addition to receiving the input for designating the position of the build model PM (namely, the build position). Note that the fiducial point RP may be referred to as a fiducial position. Moreover, the fiducial point RP may be referred to as a set point or a designated point (alternatively, a set position or a designated position), because the fiducial point RP is set (in other words, designated) by the control apparatus 7.

The fiducial point RP may be used as the fiducial position in the build operation. For example, the fiducial point RP may be used as a fiducial for specifying the position of the build model PM. The fiducial point RP may be used as a fiducial for specifying the position at which the three-dimensional structural object ST should be formed. The fiducial point RP may be used as an origin for specifying the position of the build model PM. The fiducial point RP may be used as an origin for specifying the position at which the three-dimensional structural object ST should be formed. The fiducial point RP may be used as a fiducial position for the movement of the build head 21. The fiducial point RP may be used as an origin of a fiducial coordinate system of the build unit UNTa1. However, the fiducial point RP may not be used as the origin of the fiducial coordinate system of the build unit UNTa1. for the movement of the build head 21. This fiducial point RP may be referred to as an original (for example, a build origin).

The control apparatus 7 sets the fiducial point RP on the workpiece model WM. Since the workpiece model WM corresponds to the actual workpiece W, the control apparatus 7 substantially sets the fiducial point RP on the workpiece W. Namely, the control apparatus 7 substantially sets the fiducial point RP on the workpiece W on which the three-dimensional structural object ST is formed (namely, on the workpiece model WM corresponding to this workpiece W).

Here, as described above, the three-dimensional structural object ST that is formed on the workpiece W is integrated with the workpiece W. Thus, a positional relationship between the three-dimensional structural object ST that is formed on the workpiece W and the workpiece W does not usually change. Thus, it can be said that the control apparatus 7 sets the fiducial point RP the relative position of which is fixed relative to the three-dimensional structural object ST. Therefore, the control apparatus 7 may set the fiducial point RP on an object the relative position of which is fixed relative to the three-dimensional structural object ST in addition to or instead of setting the fiducial point RP on the workpiece W. The control apparatus 7 may set the fiducial point RP on an object the relative position of which does not change relative to the three-dimensional structural object ST. Note that the control apparatus 7 may set the fiducial point RP on the three-dimensional structural object ST. Even in this case, the fiducial point RP the relative position of which is fixed relative to the three-dimensional structural object ST is set.

The control apparatus 7 may set the fiducial point RP on the basis of an instruction of the user of the build unit UNTa1. Namely, the user may designate a position at which the fiducial point RP is desired to be set by using the input apparatus 92 and the control apparatus 7 may set the fiducial point RP on the position that is designated by the user. In this case, the control apparatus 7 may control the display 91 to display the workpiece model WM and the build model PM. Note that FIG. 43 is a planar view that illustrates a display example of the workpiece model WM and the build model PM. Moreover, the user may designate the position at which the fiducial point RP is desired to be set on the display screen of the display 91 on which the workpiece model WM and the build model PM are displayed. For example, as illustrated in FIG. 43, the user may move a pointer 913 for designating fiducial point RP and designate, as the position at which the fiducial point RP should be set, a position of the pointer 913 at a timing when the pointer 913 is located at a position at which the fiducial point RP is desired to be set by using the input apparatus 92.

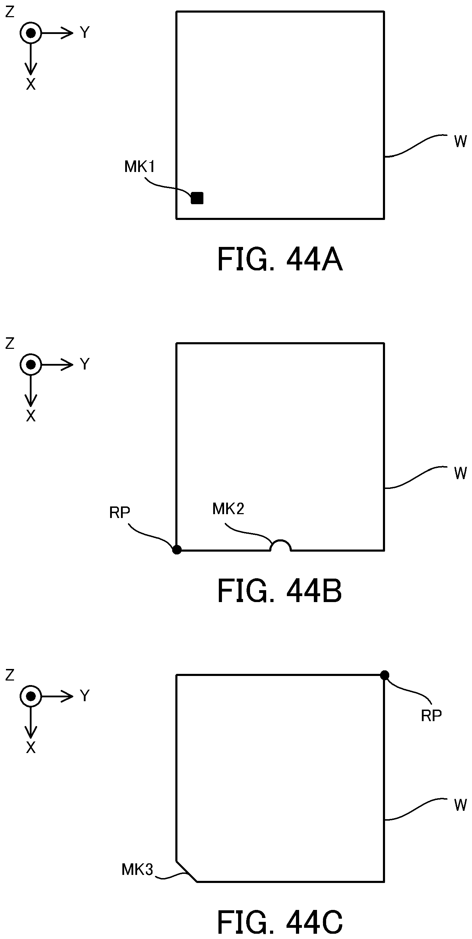

The control apparatus 7 may designate the fiducial point RP by the control apparatus 7 itself, not based on the instruction of the user of the build unit UNTa1. For example, the control apparatus 7 may extract a feature point of the workpiece model WM (namely, a feature point of the workpiece W) on the basis of the workpiece model data that indicates the workpiece model WM, and set the fiducial point RP at a position of the extracted feature point. Namely, the control apparatus 7 may set the feature point of the workpiece model WM to the fiducial point RP. Alternatively, for example, the control apparatus 7 may set a feature point of the object the relative position of which does not change relative to the three-dimensional structural object ST to the fiducial point RP. Alternatively, for example, the control apparatus 7 may set a feature point of the existing structural object that is formed on the workpiece W (for example, the three-dimensional structural object ST formed by the previous build operation) to the fiducial point RP. Note that the feature point of the object may include a point at a characterizing position of the three-dimensional shape of the object that is indicated by a point cloud data that is an aggregation of points that indicate positions on a surface of the object. At least one of a vertex, a corner, a point located at the most +Z side, a point located at the most -Z side, a point located at the most +X side, a point located at the most -X side, a point located at the most +Y side and a point located at the most -Y side is one example of the feature point. Alternatively, for example, the control apparatus 7 may set the fiducial point RP at a position on the workpiece W that has a predetermined positional relationship relative to the build model PM (alternatively, an object a relative position of which does not change relative to the three-dimensional structural object ST or an existing structural object formed on the workpiece W, the same applies to this paragraph). As one example, the control apparatus 7 may set the fiducial point at a position on the workpiece W that is away from the position of the build model PM toward a predetermined direction by a predetermined distance. Alternatively, for example, when a predetermined mark is formed on the workpiece W, the control apparatus 7 may set the fiducial point RP at a position of the mark or a position on the workpiece W that has a predetermined positional relationship relative to the mark. A condition of the position of the mark relative to the stage 31 when the workpiece W is supported by the stage 31 and a condition relating to a positional relationship between the mark and the position that is set as the fiducial point RP may be set in advance. Each of FIG. 44A to FIG. 44C is a planar view that illustrates one example of the mark. As illustrated in FIG. 44A, a marker MK1 that is one example of the mark may be formed on the workpiece W. Note that a shape of the mark is not limited to the rectangular shape (a box shape), and may be a cross shape or a L shape. As illustrated in FIG. 44B, a cutout MK2 that is one example of the mark may be formed at a certain side (for example, near a center of the side) of the workpiece W. In this case, for example, a condition that the workpiece W is supported so that the side at which the cutout MK2 is formed is located at a front side from a viewpoint facing the stage 31 and a condition that the fiducial point RP is set at a corner at the left side (for example, the -Y side) from the cutout MK2 may be set in advance. As illustrated in FIG. 44C, a cutout MK3 that is one example of the mark may be formed at a certain corner of the workpiece W. In this case, for example, a condition that the fiducial point RP is set at a corner that faces the corner at which the cutout MK3 is formed may be set in advance.

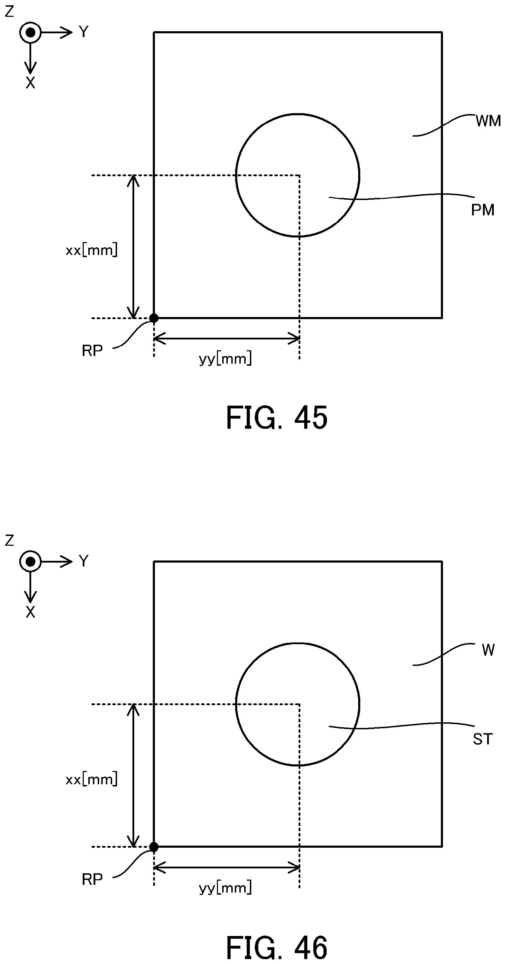

When the fiducial point RP is set, the build position information that indicates the position of the above described build model PM may indicate a relative position of the build model PM relative to the fiducial point RP in addition to or instead of the absolute position of the build model PM in the fiducial coordinate system. The build position information may indicate a relative position of the build model PM and the fiducial point RP. The build position information may indicate where the build model PM is located relative to the fiducial point RP. For example, FIG. 45 is a planar view that illustrates a positional relationship between the fiducial point RP and the build model PM. As illustrated in FIG. 45, the build position information may indicate a distance between the fiducial point RP and the build model PM in the X axis direction. As illustrated in FIG. 45, the build position information may indicate a distance between the fiducial point RP and the build model PM in the Y axis direction. The build position information may indicate a distance between the fiducial point RP and the build model PM in the Z axis direction, although it is not illustrated for the simplicity of illustration. In an example illustrated in FIG. 45, the build position information indicates that a distance between the fiducial point RP and the build model PM (more specifically, a certain part of the build model PM) in the X axis direction is xx [mm] and a distance between the fiducial point RP and the build model PM in the Y axis direction is yy [mm]. Namely, the build position information indicates that the three-dimensional structural object ST should be formed at a position that is away along the X axis direction by xx [mm] and that is away along the Y axis direction by yy [mm] from the fiducial point RP. In this case, it can be said that the build information including this build position information is the build information that is associated with the fiducial point RP (more specifically, associated with the position of the fiducial point RP). Moreover, since the build information is the information in which the build position information is associated with the build shape information, it can be said that the build information including this build position information is the build information in which the fiducial point RP is associated with the build information (for example, the build shape information (namely, the shape of the build model PM (namely, the three-dimensional structural object ST))).

When the fiducial point RP is set on the workpiece W, the workpiece position information that indicates the position of the above described workpiece model WM may indicate a position of the fiducial point RP that is set on the workpiece W in addition to or instead of the absolute position of the workpiece model WM in the fiducial coordinate system. The workpiece position information may indicate a relative position of the fiducial point RP and the workpiece W. The workpiece position information may indicate where the fiducial point RP is set on the workpiece model WM. Specifically, the control apparatus 7 may modify, on the basis of the fiducial point RP, the workpiece position information (namely, the workpiece information) generated by the workpiece model alignment operation. The control apparatus 7 may add information relating to the fiducial point RP to the workpiece position information (namely, the workpiece information) generated by the workpiece model alignment operation. For example, as illustrated in FIG. 45, the workpiece position information may indicate that the fiducial point RP is set at the vertex at the -X side and the -Y side of the workpiece W the shape of which is a square shape in a plane along the XY plane. In this case, it can be said that the workpiece information including this workpiece position information is the workpiece information that is associated with the fiducial point RP (more specifically, associated with the position of the fiducial point RP). Moreover, since the workpiece information is the information in which the workpiece position information is associated with the workpiece shape information, it can be said that the workpiece information including this workpiece position information is the workpiece information in which the fiducial point RP is associated with the workpiece information (for example, the workpiece shape information (namely, the shape of the workpiece model WM (namely, the workpiece W))).

After the build information is generated by the build model alignment operation in this manner, the build unit UNTa1 performs the build operation for forming the three-dimensional structural object ST on the basis of the workpiece information and the build information, as with the processing system SYS in the first embodiment. In this case, as described above, since the workpiece information indicates the relative position of the build model PM relative to the fiducial point RP, the control apparatus 7 may control the build apparatus 2 on the basis of the information relating to the fiducial point RP so that the three-dimensional structural object ST is formed relative to the fiducial point RP of the workpiece W. Specifically, the control apparatus 7 may control the build apparatus 2 so that the additive processing is performed at a position that is determined on the basis of the fiducial point RP. For example, the control apparatus 7 may control the head driving system 22 so that the build head 21 moves relative to the fiducial point RP of the workpiece W. For example, the control apparatus 7 may control the head driving system 22 to emit the processing light EL at a timing when the irradiation area EA overlaps with a position that is determined on the basis of the fiducial point RP of the workpiece W (for example, a position at which the build object that constitutes the three-dimensional structural object ST should be formed). As a result, the three-dimensional structural object ST is formed at a position that has a predetermined positional relationship relative to the fiducial point RP of the workpiece W (namely, the fiducial point RP of the workpiece model WM). Namely, the three-dimensional structural object ST is formed at a position that has a positional relationship, which is indicated by the build information, relative to the fiducial point RP. Note that FIG. 46 is a planar view that illustrates three-dimensional structural object ST that is formed on the workpiece W when the fiducial point RP illustrated in FIG. 45 is set. As illustrated in FIG. 46, he three-dimensional structural object ST is formed at a position that is away along the X axis direction by xx [mm] and that is away along the Y axis direction by yy [mm] from the fiducial point RP of the workpiece W.

Moreover, in the second embodiment, the output apparatus 93a outputs information relating to the fiducial point RP (it is referred to as a fiducial point information in the below described description). Specifically, the output apparatus 93a outputs the fiducial point information to the processing unit UNTa2. In this case, the processing unit SYSa2 processes, on the basis of the fiducial point information, the three-dimensional structural object ST formed by the build unit UNTa1.

The fiducial point information may include first information relating to the position of the fiducial point RP (for example, the position of the fiducial point RP in the fiducial coordinate system). Specifically, the fiducial point information may include the first information that indicates a position on the workpiece model WM on which the fiducial point RP is set. The fiducial point information may include the first information that indicates a position of a part of the workpiece model WM on which the fiducial point RP is set. Namely, the fiducial point information may include the first information that indicates where the fiducial mark RP is set on the workpiece model WM. Since the fiducial point RP on the workpiece W corresponds to the fiducial point RP on the workpiece model WM, the fiducial point information may include the first information that indicates a position on the workpiece W on which the fiducial point RP is set. The processing unit UNTa2 is allowed to determine by referring to the first information where the fiducial point RP is set on the workpiece W that is transported from the build unit UNTa1 by the transport apparatus 10a. One example of the first information is information relating to a relative position of the workpiece W and the fiducial point RP (namely, a relative position of the workpiece model WM and the fiducial point RP).

As described above, the workpiece information (specifically, the workpiece information that is associated with the fiducial point RP) may indicate the position of the fiducial point RP. In other words, as described above, the workpiece information may be associated with the fiducial point RP. In this case, the fiducial point information may include the workpiece information (especially, the workpiece information that is associated with the fiducial point RP). Namely, the output apparatus 93a may output, as the fiducial point information, the workpiece information (especially, the workpiece information that is associated with the fiducial point RP) to the processing unit UNTa2. Even in this case, the processing unit UNTa2 is allowed to determine where the fiducial point RP is set on the workpiece W.

The fiducial point information may include the measurement information relating to the measured result of the workpiece W by the measurement apparatus 8 (especially, the measurement information that is associated with the fiducial point RP), in addition to or instead of the workpiece information that is associated with the fiducial point RP. Namely, the output apparatus 93a may output, as the fiducial point information, the measurement information relating to the measured result of the workpiece W (especially, the measurement information that is associated with the fiducial point RP) to the processing unit UNTa2. This is because the measurement information relating to the measured result of the workpiece W includes the information relating to the shape of the workpiece W and the information relating to the position of the workpiece W, as with the workpiece information. Note that "the measurement information of the workpiece W that is associated with the fiducial point RP" may mean the measurement information that includes the information relating to the fiducial point RP (for example the measurement information from which the position of the fiducial point RP is determinable). The measurement apparatus 8 may measure the workpiece W before the build unit UNTa1 forms the three-dimensional structural object ST (namely, before starting the build operation). In this case, the fiducial point information may include the measurement information relating to the measured result of the workpiece W before the build unit UNTa1 forms the three-dimensional structural object ST. Incidentally, when the measurement apparatus 8 measures the workpiece W before the three-dimensional structural object ST is formed (namely, before the build operation is started), there is an advantage that there is small possibility that a part of the workpiece W that may be the feature point is not hidden by the three-dimensional structural object ST. The measurement apparatus 8 may measure the workpiece W at a desired timing during a period when the build unit UNTa1 forms the three-dimensional structural object ST. In this case, the fiducial point information may include the measurement information relating to the measured result of the workpiece W at the desired timing during the period when the build unit UNTa1 forms the three-dimensional structural object ST. The measurement apparatus 8 may measure the workpiece W after the build unit UNTa1 forms the three-dimensional structural object ST (namely, after completing the build operation). In this case, the fiducial point information may include the measurement information relating to the measured result of the workpiece W after the build unit UNTa1 forms the three-dimensional structural object ST.

The fiducial point information may include second information relating to a relative position of the fiducial point RP and the three-dimensional structural object ST (for example, a relative position of the fiducial point RP and the three-dimensional structural object ST in the fiducial coordinate system), in addition to or instead of the above described first information. Namely, the fiducial point information may include the second information relating to a relationship between the position of the fiducial point RP and the position of the three-dimensional structural object ST (for example, a relationship between the position of the fiducial point RP and the position of the three-dimensional structural object ST in the fiducial coordinate system). Specifically, the fiducial point information may include the second information that indicates a formed position of the three-dimensional structural object ST starting from the fiducial point RP. Namely, the fiducial point information may include the second information that indicates where the three-dimensional structural object ST is formed based on the fiducial mark RP. Moreover, since the three-dimensional structural object ST is formed at the position of the build model PM that is designated by the build model alignment operation, the fiducial point information may include the second information that indicates which position is designated as the position of the build model PM based on the fiducial point RP. Namely, the fiducial point information may include information relating to a relationship between the fiducial point RP and the build model PM (namely, a relationship between the position of the fiducial point RP and the position of the build model PM). The processing unit UNTa2 is allowed to determine by referring to the second information where the three-dimensional structural object ST is formed relative to the fiducial point RP.

As described above, the build information (especially, the build position information) may indicate the relative position of the build model PM based on the fiducial point RP. In other words, as described above, the build information may be associated with the fiducial point RP. In this case, the fiducial point information may include the build information (especially, the build information that is associated with the fiducial point RP). Namely, the output apparatus 93a may output, as the fiducial point information, the build information (especially, the build information that is associated with the fiducial point RP) to the processing unit UNTa2. Even in this case, the processing unit UNTa2 is allowed to determine where the three-dimensional structural object ST is formed based on the fiducial point RP.

The fiducial point information may include the measurement information relating to the measured result of the three-dimensional structural object ST by the measurement apparatus 8 (especially, the measurement information that is associated with the fiducial point RP), in addition to or instead of the build information that is associated with the fiducial point RP. Namely, the output apparatus 93a may output, as the fiducial point information, the measurement information relating to the measured result of the three-dimensional structural object ST (especially, the measurement information that is associated with the fiducial point RP) to the processing unit UNTa2. This is because the measurement information relating to the measured result of the three-dimensional structural object ST includes the information relating to the shape of the three-dimensional structural object ST and the information relating to the position of the three-dimensional structural object ST, as with the build information. Note that "the measurement information of the three-dimensional structural object ST that is associated with the fiducial point RP" may mean the measurement information that includes the information relating to the fiducial point RP (for example the measurement information from which the position of the fiducial point RP is determinable). The measurement apparatus 8 may measure the three-dimensional structural object ST at a desired timing during a period when the build unit UNTa1 forms the three-dimensional structural object ST. In this case, the fiducial point information may include the measurement information relating to the measured result of the three-dimensional structural object ST at the desired timing during the period when the build unit UNTa1 forms the three-dimensional structural object ST. The measurement apparatus 8 may measure the three-dimensional structural object ST after the build unit UNTa1 forms the three-dimensional structural object ST (namely, after completing the build operation). In this case, the fiducial point information may include the measurement information relating to the measured result of the three-dimensional structural object ST after the build unit UNTa1 forms the three-dimensional structural object ST.

### (4-2-2) Operation performed by Processing Unit UNTa2

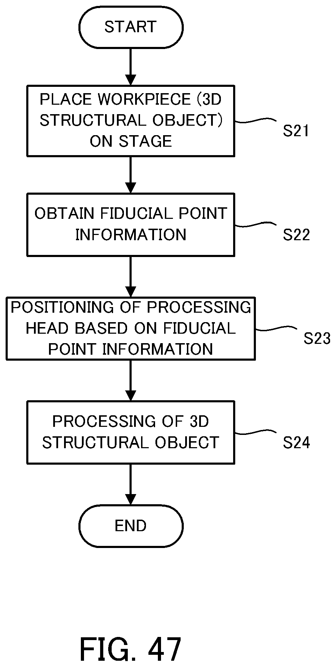

The processing unit UNTa2 processes (for example, removal-processes) the three-dimensional structural object ST that is formed by the build unit UNTa1. For example, as described above, the processing unit UNTa2 performs the finish-processing for allowing the size of the three-dimensional structural object ST to be closer to the designed size (namely, the ideal size). As a result, even when an accuracy of the size of the three-dimensional structural object ST formed by the build unit UNTa1 is relatively low, the accuracy of the size of the three-dimensional structural object ST improves by the processing by the processing unit UNTa2. Next, the operation (namely, the processing operation) that is performed by the processing unit UNTa2 will be described with reference to FIG. 47. FIG. 47 is a flowchart that illustrates a flow of the processing operation that is performed by the processing unit UNTa2.

As illustrated in FIG. 47, firstly, the three-dimensional structural object ST is placed on the stage 1031a of the processing unit UNTa2 (a step S21). Specifically, the three-dimensional structural object ST is transported from the build unit UNTa1 to the processing unit UNTa2 by the transport apparatus 10a. Specifically, since the three-dimensional structural object ST is integrated with the workpiece W, the three-dimensional structural object ST that is integrated with the workpiece W is transported from the build unit UNTa1 to the processing unit UNTa2 by the transport apparatus 10a. The three-dimensional structural object ST (namely, the three-dimensional structural object ST that is integrated with the workpiece W) transported by the transport apparatus 10a is placed on the stage 1031a. In this case, the stage 1031a may hold the three-dimensional structural object ST. For example, when the processing head 1021a is provided with the cutting tool 10211a, there is a possibility that the position of the three-dimensional structural object ST is shifted (namely, is changed) due to a force that is applied from the cutting tool 10211a to the three-dimensional structural object ST during a period when the processing operation is performed. Therefore, the stage 1031a may hold the three-dimensional structural object ST in order to prevent the shift of the position of the three-dimensional structural object ST.

Furthermore, the fiducial point information that is outputted from the output apparatus 93a of the build unit UNTa1 is inputted to the input apparatus 101a of the processing unit UNTa2 (a step S22). Namely, the input apparatus 101a obtains the fiducial point information. Then, the processing unit UNTa2 processes the three-dimensional structural object ST on the basis of the fiducial point information (a step S23 to a step S24). Namely, the control apparatus 104a of the processing unit UNTa2 controls the processing apparatus 102a to process the three-dimensional structural object ST on the basis of the fiducial point information. For example, the control apparatus 104a may control the processing apparatus 102a to process the three-dimensional structural object ST relative to the fiducial point RP of the workpiece W. For example, the control apparatus 104a may control the processing apparatus 102a so that the processing (for example, the above described removal processing, and substantially the finish-processing) is performed at a position that is determined on the basis of the fiducial point RP of the workpiece W. For example, the control apparatus 104a may control the head driving system 1022a so that the processing head 1021a moves relative to the fiducial point RP of the workpiece W. As a result, the processing is performed on the three-dimensional structural object ST that is formed at the position that has the predetermined positional relationship relative to the fiducial point RP of the workpiece W. Namely, in the second embodiment, the processing unit UNTa2 processes the three-dimensional structural object ST on the basis of the fiducial point RP that is used as the fiducial when the build unit UNTa1 performs the build operation. In other words, the fiducial point that is used as the fiducial position when the processing unit UNTa2 performs the processing operation is same as the fiducial point that is used as the fiducial position when the build unit UNTa1 performs the build operation.

In order to process the three-dimensional structural object ST, firstly, the control apparatus 104a performs an alignment of the workpiece W and the processing apparatus 102a (especially, the processing head 1021a) (a step S23). Namely, the control apparatus 104a performs a positioning of the processing head 1021a. Especially in the second embodiment, it is assumed that the control apparatus 104a performs the alignment of the workpiece W and the processing apparatus 102a (especially, the processing head 1021a) by performing an alignment of the fiducial point RP and the processing apparatus 102a (especially, the processing head 1021a).

Specifically, the control apparatus 104a performs the alignment of the fiducial point RP and the processing apparatus 102a in a fiducial coordinate system of the processing unit UNTa2. In the second embodiment, it is assumed that a processing coordinate system is used as the fiducial coordinate system of the processing unit UNTa2. The processing coordinate system is a three-dimensional coordinate system that is used to determine the position of the processing head 1021a. For example, the head driving system 1022a moves the processing head 1021a on the basis of information relating to the position of the processing head 1021a determined in the processing coordinate system. For example, the position measurement apparatus 1023a measures the position of the processing head 1021a in the processing coordinate system. Incidentally, in the second embodiment, the fiducial coordinate system of the build unit UNTa1 (namely, the fiducial coordinate system of the processing system SYS in the first embodiment) is referred to as a "build fiducial coordinate system" and the fiducial coordinate system of the processing unit UNTa2 is referred to as a "processing fiducial coordinate system" to distinguish both.

Note that the workpiece W may be measured by using the above described probe 10213a and the like before the alignment of the fiducial point RP and the processing apparatus 102a. Namely, the position of the workpiece W in the processing fiducial coordinate system may be measured. Then, the alignment of the processing apparatus 102a and the fiducial point RP of the workpiece W the position of which is determined in the processing fiducial coordinate system may be performed.

In order to perform the alignment of the fiducial point RP and the processing apparatus 102a (especially, the processing head 1021a), the control apparatus 104a moves the processing head 1021a on the basis of the fiducial point information to satisfy such a poisoning condition that the fiducial point RP that is set on the workpiece W and the processing apparatus 102a (especially, the processing head 1021a) have a predetermined positional relationship.

For example, when the processing head 1021a is provided with the cutting tool 10211a (see FIG. 36), the positioning condition may include a first condition that the cutting tool 10211a is located at the fiducial point RP (for example, a tip of the cutting tool 10211a contacts with the fiducial point RP). However, when the first condition is used, it is preferable that the cutting tool 10211a be stopped in order to prevent the three-dimensional structural object ST from being processed accidentally during a period when the alignment of the fiducial point RP and the processing apparatus 102a is performed. For example, when the processing head 1021a is provided with the irradiation optical system 10212a (see FIG. 37), the positioning condition may include a second condition that the fiducial point RP is irradiated with the energy beam EB from the irradiation optical system 10212a. The positioning condition may include the second condition that a converged position of the energy beam EB from the irradiation optical system 10212a is located at the fiducial point RP. However, when the second condition is used, it is preferable that an intensity of the energy beam EB be too low to process the three-dimensional structural object ST in order to prevent the three-dimensional structural object ST from being processed accidentally during a period when the alignment of the fiducial point RP and the processing apparatus 102a is performed. For example, when the probe 10213a for the alignment (see FIG. 38) is attachable to the processing head 1021a, the positioning condition may include a third condition that the probe 10213a is located at the fiducial point RP (for example, a tip of the probe 10213a contacts with the fiducial point RP). For example, when the processing head 1021a is provided with an irradiation apparatus that is allowed to emit a beam for the alignment, the positioning condition may include a fourth condition that the fiducial point RP is irradiated with the beam from the irradiation apparatus. The positioning condition may include the fourth condition that a converged position of the beam EB from the irradiation apparatus is located at the fiducial point RP.

The control apparatus 104a may move the processing head 1021a on the basis of the fiducial point information to satisfy the positioning condition. Specifically, the fiducial point information indicates the position on the workpiece W on which the fiducial point RP is set, as described above. Therefore, the control apparatus 104a may determine the fiducial point RP set on the workpiece W on the basis of the fiducial point information and move the processing head 1021a to satisfy the poisoning condition that the determined fiducial point RP and the processing apparatus 102a have the predetermined positional relationship. Alternatively, when the fiducial point RP set on the workpiece W is information that is already know to the user of the processing unit UNTa2, the control apparatus 104a may move the processing head 1021a on the basis of an instruction of the user that is inputted to the processing unit UNTa2 through the input apparatus 101a to satisfy the poisoning condition that the determined fiducial point RP and the processing apparatus 102a have the predetermined positional relationship. Namely, the user may move the processing head 1021a to satisfy the poisoning condition.

Then, the control apparatus 104a controls the processing apparatus 102a on the basis of a result of the alignment of the fiducial point RP and the processing head 1021a to process the three-dimensional structural object ST (the step S24). Specifically, the control apparatus 104a determines the position of the processing head 1021a at the timing when the positioning condition is satisfied on the basis of a measured result by the position measurement apparatus 1023a. Namely, the control apparatus 104a determines the position of the processing head 1021a at the timing when the alignment of the fiducial point RP and the processing head 1021a is performed to satisfy the positioning condition. Then, the control apparatus 104a determines the position of the fiducial point in the processing fiducial coordinate system on the basis of the position of the processing head 1021a in the processing fiducial coordinate system at the timing when the positioning condition is satisfied.

For example, the first condition that the cutting tool 10211a is located at the fiducial point RP (for example, a tip of the cutting tool 10211a contacts with the fiducial point RP) is used as the positioning condition, the control apparatus 104a is allowed to determine the position of the cutting tool 10211a (for example, the position of the cutting tool 10211a) at the timing when the positioning condition is satisfied on the basis of the position of the processing head 1021a at the timing when the positioning condition is satisfied. This is because the cutting tool 10211a is attached to the processing head 1021a and thus the cutting tool 10211a and the processing head 1021a usually have a specific positional relationship that is already know to the control apparatus 104a. Moreover, the position of the cutting tool 10211a at the timing when the positioning condition is satisfied is regarded to be equivalent to the position of the fiducial point RP in the processing fiducial coordinate system. This is because the cutting tool 10211a is located at the fiducial point RP at the timing when the positioning condition is satisfied. Therefore, the control apparatus 104a may determine, as the position of the fiducial point RP in the processing fiducial coordinate system, the position of the cutting tool 10211a at the timing when the positioning condition is satisfied on the basis of the position of the processing head 1021a at the timing when the positioning condition is satisfied. In this case, a correction of a tool diameter of the cutting tool 10211a may be performed. Incidentally, when the third condition that the probe 10213a is located at the fiducial point RP (for example, a tip of the probe 10213a contacts with the fiducial point RP) is used as the positioning condition, the control apparatus 104a may also determine, as the position of the fiducial point RP in the processing fiducial coordinate system, the position of the probe 10213a at the timing when the positioning condition is satisfied on the basis of the position of the processing head 1021a at the timing when the positioning condition is satisfied.

For example, the third condition that the fiducial point RP is irradiated with the energy beam EB from the irradiation optical system 10212a is used as the positioning condition, the control apparatus 104a is allowed to determine an irradiation position of the energy beam EB at the timing when the positioning condition is satisfied on the basis of the position of the processing head 1021a at the timing when the positioning condition is satisfied. This is because the irradiation optical system 10212a is attached to the processing head 1021a and thus the irradiation position of the energy beam EB and the processing head 1021a usually have a specific positional relationship that is already know to the control apparatus 104a. Moreover, the irradiation position of the energy beam EB at the timing when the positioning condition is satisfied is regarded to be equivalent to the position of the fiducial point RP in the processing fiducial coordinate system. This is because the fiducial point RP is irradiated with the energy beam EB at the timing when the positioning condition is satisfied. Therefore, the control apparatus 104a may determine, as the position of the fiducial point RP in the processing fiducial coordinate system, the irradiation position of the energy beam at the timing when the positioning condition is satisfied on the basis of the position of the processing head 1021a at the timing when the positioning condition is satisfied. Incidentally, when the fourth condition that the fiducial point RP is irradiated with the beam from the irradiation apparatus is used as the positioning condition, the control apparatus 104a may also determine, as the position of the fiducial point RP in the processing fiducial coordinate system, the irradiation position of the beam at the timing when the positioning condition is satisfied on the basis of the position of the processing head 1021a at the timing when the positioning condition is satisfied.

Alternatively, the control apparatus 104a may control the processing apparatus 102a to process the three-dimensional structural object ST based on the position of the processing head 1021a in the processing fiducial coordinate system at the timing when the positioning condition is satisfied, in addition to or instead of determining the position of the fiducial point RP in the processing fiducial coordinate system (the step S24). This is because the position of the processing head 1021a in the processing fiducial coordinate system at the timing when the positioning condition is satisfied typically corresponds to the position of the fiducial point RP in the processing fiducial coordinate system. Thus, an operation for processing the three-dimensional structural object ST based on the position of the processing head 1021a in the processing fiducial coordinate system at the timing when the positioning condition is satisfied may be regarded to be substantially equivalent to an operation for processing the three-dimensional structural object ST based on the position of the fiducial point RP in the processing fiducial coordinate system.

Then, the control apparatus 104a controls the processing apparatus 102a on the basis of the fiducial point information to process the three-dimensional structural object ST based on the position of the fiducial point RP in the processing fiducial coordinate system (the step S24). Specifically, the fiducial indicates the formed position of the three-dimensional structural object ST starting from the fiducial point RP, as described above. Thus, the control apparatus 104a is allowed to determine a relative position of the fiducial point RP and the three-dimensional structural object ST in the processing fiducial coordinate system on the basis of the position of the fiducial point RP in the processing fiducial coordinate system and the fiducial point information. Namely, the control apparatus 104a is allowed to determine the position of the three-dimensional structural object ST in the processing fiducial coordinate system.

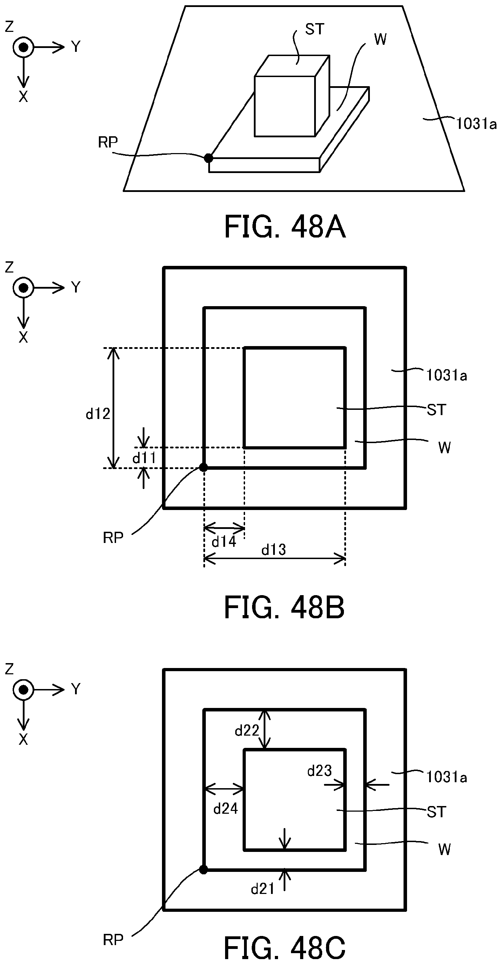

For example, FIG. 48A and FIG. 48B are a perspective view and a planar view each of which illustrates one example of the three-dimensional structural object ST and the workpiece W that is supported by the stage 1031a, respectively. As illustrated in FIG. 48A and FIG. 48B, the control apparatus 104a is allowed to determine on the basis of the fiducial point information how far each side surface (for example, a side surface at the +X side, a side surface at the -X side, a side surface at the +Y side and a side surface at the -Y side) of the three-dimensional structural object ST having the rectangular column shape is located to be away from the fiducial point RP that is set at the corner of the workpiece W. In an example illustrated in FIG. 48B, the control apparatus 104a may determine on the basis of the fiducial point information that the side surface at the +X side of the three-dimensional structural object ST is located at a position that is away from the fiducial point RP by a distance d11, the side surface at the -X side of the three-dimensional structural object ST is located at a position that is away from the fiducial point RP by a distance d12, the side surface at the +Y side of the three-dimensional structural object ST is located at a position that is away from the fiducial point RP by a distance d13 and the side surface at the -Y side of the three-dimensional structural object ST is located at a position that is away from the fiducial point RP by a distance d14. Alternatively, when the workpiece W is measured by the probe 10213a and the like as described above, as illustrated in FIG. 48C, the control apparatus 104a is allowed to determine on the basis of the fiducial point information and the measured result of the workpiece W how far each side surface of the three-dimensional structural object ST having the rectangular column shape is located to be away from the fiducial point RP that is set at the corner of the workpiece W. In an example illustrated in FIG. 48B, the control apparatus 104a may determine on the basis of the fiducial point information that the side surface at the +X side of the three-dimensional structural object ST is located at a position that is away from the side surface at the +X side of the workpiece W by a distance d21, the side surface at the -X side of the three-dimensional structural object ST is located at a position that is away from the side surface at the -X side of the workpiece W by a distance d22, the side surface at the +Y side of the three-dimensional structural object ST is located at a position that is away from the side surface at the +Y side of the workpiece W by a distance d23 and the side surface at the -Y side of the three-dimensional structural object ST is located at a position that is away from the side surface at the -Y side of the workpiece W by a distance d24.

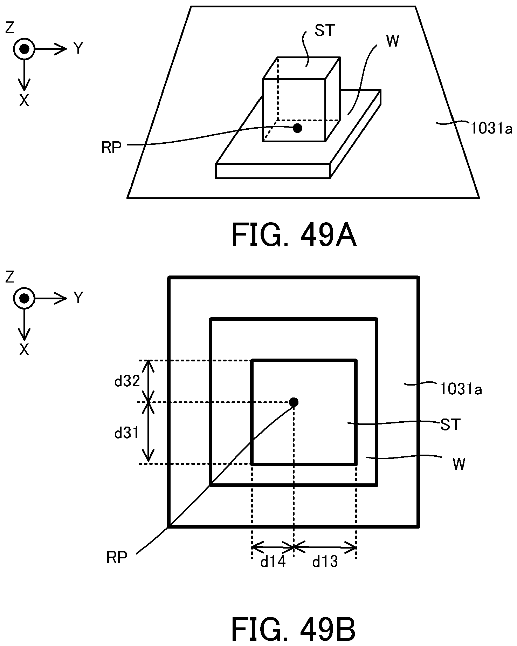

For example, FIG. 49A and FIG. 49B are a perspective view and a planar view each of which illustrates one example of the three-dimensional structural object ST and the workpiece W that is supported by the stage 1031a, respectively. As illustrated in FIG. 49A and FIG. 49B, even when the fiducial point RP is hidden by the three-dimensional structural object ST, the control apparatus 104a is allowed to determine on the basis of the fiducial point information how far each side surface of the three-dimensional structural object ST having the rectangular column shape is located to be away from the fiducial point RP that is set near a center of the workpiece W. In an example illustrated in FIG. 49B, the control apparatus 104a may determine on the basis of the fiducial point information that the side surface at the +X side of the three-dimensional structural object ST is located at a position that is away from the fiducial point RP by a distance d31, the side surface at the -X side of the three-dimensional structural object ST is located at a position that is away from the fiducial point RP by a distance d32, the side surface at the +Y side of the three-dimensional structural object ST is located at a position that is away from the fiducial point RP by a distance d33 and the side surface at the -Y side of the three-dimensional structural object ST is located at a position that is away from the fiducial point RP by a distance d34.

As a result, the control apparatus 104a is allowed to determine in which direction and by how much the processing head 1021a should be moved relative to the fiducial point RP in the processing fiducial coordinate system in order to properly process the three-dimensional structural object ST. The control apparatus 104a is allowed to determine a moving trajectory (what we call a tool path) of the processing head 1021a relative to the fiducial point RP in the processing fiducial coordinate system. Therefore, the processing apparatus 2 is allowed to properly process the three-dimensional structural object ST.

However, there is a possibility that the control apparatus 104a cannot determine the shape of each of the workpiece W and the three-dimensional structural object ST with high accuracy only by referring to the position of the fiducial point RP in the processing fiducial coordinate system and the fiducial point information. Thus, in the second embodiment, the work shape information relating to the shape of the workpiece W and the build shape information relating to the shape of the three-dimensional structural object ST, which are in a state where they are associated with the fiducial point information, may be inputted from the output apparatus 93a of the build unit UNTa1 to the input apparatus 101a of the processing unit UNTa2. In this case, the control apparatus 104a is allowed to determine on the basis of the position of the fiducial point RP in the processing fiducial coordinate system and the fiducial point information where the three-dimensional structural object ST, the shape of which is determinable by the build shape information with relatively high accuracy, is located in the processing fiducial coordinate system relative to the workpiece W (especially, the fiducial point RP on the workpiece W), the shape of which is determinable by the workpiece shape information with relatively high accuracy. In this case, the work shape information and the build shape information, which are in a state where they are associated with each other, may be inputted from the build unit UNTa1 to the processing unit UNTa2. "The workpiece information and the build information that are associated with each other" may mean the workpiece information and the build information that are in a state where the positional relationship between the workpiece model WM (the workpiece W) and the build model PM (the three-dimensional structural object ST) is determinable therefrom.

Alternatively, the measurement information relating to the measured result by the measurement apparatus 8 of the build unit UNTa1, which is in a state where it is associated with the fiducial point information, may be inputted from the output apparatus 93a of the build unit UNTa1 to the input apparatus 101a of the processing unit UNTa2, in addition to or instead of the work shape information and the build shape information. Specifically, for example, the measurement information relating to the measured result of the workpiece W by using the measurement apparatus 8 (especially, the measurement shape information relating to the shape of the workpiece W) may be inputted to the processing unit UNTa2. For example, the measurement information relating to the measured result of the three-dimensional structural object ST by using the measurement apparatus 8 (especially, the measurement shape information relating to the shape of the three-dimensional structural object ST) may be inputted to the processing unit UNTa2. In this case, the control apparatus 104a is allowed to determine on the basis of the position of the fiducial point RP in the processing fiducial coordinate system and the fiducial point information where the three-dimensional structural object ST, the shape of which is determinable by the measurement shape information with relatively high accuracy, is located in the processing fiducial coordinate system relative to the workpiece W (especially, the fiducial point RP on the workpiece W), the shape of which is determinable by the measurement shape information with relatively high accuracy. In this case, the measurement information, which are in a state where the measured result of the workpiece W and the measured result of the three-dimensional structural object ST are associated with each other, may be inputted from the build unit UNTa1 to the processing unit UNTa2. "The measurement information in which the measured result of the workpiece W and the measured result of the three-dimensional structural object ST are associated with each other" may mean the measurement information that is in a state where the positional relationship between the workpiece model WM (the workpiece W) and the build model PM (the three-dimensional structural object ST) is determinable therefrom. Note that the measurement apparatus 8 may measure the workpiece W before the build unit UNTa1 forms the three-dimensional structural object ST (namely, before the build operation is started). The measurement apparatus 8 may measure at least one of the workpiece W and the three-dimensional structural object ST at a desired timing during a period when the build unit UNTa1 forms the three-dimensional structural object ST. The measurement apparatus 8 may measure the workpiece W and the three-dimensional structural object ST after the build unit UNTa1 forms the three-dimensional structural object ST (namely, after the build operation completed).

### (4-3) Technical Effect of Processing System SYSa in Second Embodiment

The processing system SYSa in the second embodiment is provided with the build unit UNTa1 that is different from the above described processing system SYS in the first embodiment in that it is further provided with the output apparatus 93a. Therefore, the processing system SYSa in the second embodiment can achieve an effect that is same as the effect achievable by the processing system SYS in the first embodiment.

Moreover, in the processing system SYSa in the second embodiment, the processing unit UNTa2 is allowed to process the three-dimensional structural object ST on the basis of the fiducial point information relating to the fiducial point RP that is used as the fiducial by the build unit UNTa1 to perform the build operation. Specifically, the processing unit UNTa2 is allowed to process the three-dimensional structural object ST on the basis of the fiducial point RP that is used as the fiducial by the build unit UNTa1 to perform the build operation. As a result, the positioning of the processing head 1021a is performed more easily, compared to the case where the fiducial point information is not used (namely, the case where the three-dimensional structural object ST is processed on the basis of a point that has no relation to the fiducial point RP that is used as the fiducial by the build unit UNTa1 to perform the build operation).

Specifically, the build fiducial coordinate system is not always same as the processing fiducial coordinate system, because the build unit UNTa1 and the processing unit UNTa2 are separated apparatuses. Thus, even when the position of the three-dimensional structural object ST in the build fiducial coordinate system is information that is already known, the position of the three-dimensional structural object ST in the processing fiducial coordinate system is not always information that is already known. Thus, the above described positioning of the processing head 1021a (more specifically, the alignment of the processing head 1021a and the three-dimensional structural object ST that is the processing target object) is necessary for the processing unit UNTa2 to process the three-dimensional structural object ST. Here, when the fiducial position information is not used, there is a possibility that the processing unit UNTa2 needs to perform the alignment of the processing head 1021a and a plurality of feature points of the three-dimensional structural object ST in order to perform the positioning of the processing head 1021a, for example. For example, there is a possibility that the processing unit UNTa2 needs to perform the alignment of the processing head 1021a and an edge part at the +X side of the three-dimensional structural object ST, to perform the alignment of the processing head 1021a and an edge part at the -X side of the three-dimensional structural object ST, and then to determine a center position of the three-dimensional structural object ST in the X axis direction. For example, there is a possibility that the processing unit UNTa2 needs to perform the alignment of the processing head 1021a and an edge part at the +Y side of the three-dimensional structural object ST, to perform the alignment of the processing head 1021a and an edge part at the -Y side of the three-dimensional structural object ST, and then to determine a center position of the three-dimensional structural object ST in the Y axis direction. For example, there is a possibility that the processing unit UNTa2 need to perform another necessary operation. Therefore, there is a possibility that a cost relating to the processing of the three-dimensional structural object ST (for example, at least one of a cost relating to a time and a cost relating to money) is relatively high.

On the other hand, in the second embodiment, it is enough for the processing unit UNTa2 to perform the alignment of the processing head 1021a and the workpiece W (especially, the fiducial point RP on the workpiece W) in order to perform the positioning of the processing head 1021a. It is unnecessary for the processing unit UNTa2 to perform the alignment of the processing head 1021a and the three-dimensional structural object ST in order to perform the positioning of the processing head 1021a. This is because the build unit UNTa1 forms the three-dimensional structural object ST on the basis of the fiducial point RP and thus the processing unit UNTa2 is allowed to easily determine by referring to the fiducial point information relating to the fiducial point RP where the three-dimensional structural object ST that is the processing target object is located relative to the fiducial point RP of the workpiece W. Thus, in the second embodiment in which the fiducial point information is used, the cost relating to the processing of the three-dimensional structural object ST is reducible, compared to the case where the fiducial point information is not used.

Moreover, since the fiducial point RP is set on the workpiece W that is integrated with the three-dimensional structural object ST, even when the three-dimensional structural object ST is transported from the build unit UNTa1 to the processing unit UNTa2, the relative position of the fiducial point RP and the three-dimensional structural object ST does not change. Namely, the relative position of the fiducial point RP and the three-dimensional structural object ST when the workpiece W is placed on the stage 31 of the build unit UNTa1 is same as the relative position of the fiducial point RP and the three-dimensional structural object ST when the workpiece W is placed on the stage 1031a of the processing unit UNTa2. Thus, even when the three-dimensional structural object ST is transported from the build unit UNTa1 to the processing unit UNTa2, the processing unit UNTa2 is allowed to properly process the three-dimensional structural object ST on the basis of the fiducial point RP that is used as the fiducial by the build unit UNTa1 to perform the build operation.

### (4-4) Modified Example adaptable to Second Embodiment

Next, a modified example that is adaptable to the second embodiments will be described.

### (4-4-1) First Modified Example

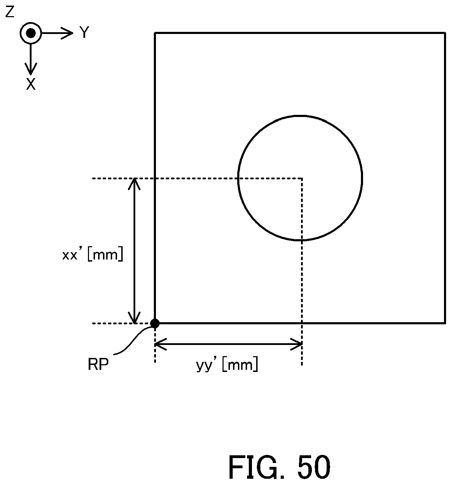

When a build accuracy of the build unit UNTa1 is relatively low, there is a possibility that the three-dimensional structural object ST is formed at a position that is distant from (namely, away from) an ideal position that is indicated by the build information. Namely, there is a possibility that a build error (typically, an error of the position or an error of the shape relative to the designated value) of the three-dimensional structural object ST occurs. Specifically, FIG. 50 is a planar view that illustrates the three-dimensional structural object ST that is formed on the workpiece W by the build unit UNTa1 the build accuracy of which is relatively low when the fiducial point illustrated in FIG. 45 is set. As illustrated in FIG. 50, when the build accuracy of the build unit UNTa1 is relatively low, there is a possibility that the three-dimensional structural object ST is actually formed at a position that is away along the X axis direction by xx' [mm] that is different from xx [mm] and that is away along the Y axis direction by yy' [mm] that is different from yy [mm] from the fiducial point RP of the workpiece W, even though the three-dimensional structural object ST should be formed at a position that is away along the X axis direction by xx [mm] and that is away along the Y axis direction by yy [mm] from the fiducial point RP of the workpiece W. Alternatively, although it is not illustrated in the drawing for the convenience of the description, there is a possibility that the three-dimensional structural object ST the size of which in a certain direction is s' [mm] that is different from s [mm] is formed, even though the three-dimensional structural object ST the size of which in the certain direction (for example, at least one of the X axis direction, the Y axis direction and the Z axis direction) is s [mm] should be formed.

On the other hand, the fiducial point information that is outputted from the build unit UNTa1 to the processing unit UNTa2 does not include information relating to the build error of the three-dimensional structural object ST. Thus, the processing unit UNTa2 cannot determine whether or not the build error of the three-dimensional structural object ST occurs. Thus, there is a possibility that the processing unit UNTa2 can properly process the three-dimensional structural object ST.

Thus, in the first modified example, the build unit UNTa1 may perform an operation for reducing an effect caused by to the build error of the three-dimensional structural object ST. Specifically, the build unit UNTa1 may measure the actually formed three-dimensional structural object ST by using the measurement apparatus 8 after forming the three-dimensional structural object ST. When the measured result by the measurement apparatus 8 indicates that the three-dimensional structural object ST is formed at the ideal position that is indicated by the build information, it is estimated that the build error of the three-dimensional structural object ST does not occur. On the other hand, when the measured result by the measurement apparatus 8 indicates that the three-dimensional structural object ST is formed at the position that is distant from the ideal position that is indicated by the build information, it is estimated that the build error of the three-dimensional structural object ST occurs. In this case, the processing unit UNTa2 may process the three-dimensional structural object ST so as to reduce the effect caused by to the build error of the three-dimensional structural object ST.

As one example, the output apparatus 93a of the build unit UNTa1 may output the measured result by the measurement apparatus 8 to the processing unit UNTa2. The processing unit UNTa2 may process the three-dimensional structural object ST on the basis of the measured result by the measurement apparatus 8 so as to reduce the effect caused by to the build error of the three-dimensional structural object ST. For example, the control apparatus 104a of the processing unit UNTa2 may generate the fiducial point information on which the build error is reflected by correcting the fiducial point information on which the build error is not reflected on the basis of the measured result by the measurement apparatus 8. The fiducial point information on which the build error is reflected may indicate the relative position of the fiducial point RP and the actual three-dimensional structural object ST (for example, the three-dimensional structural object ST that is formed at the position that is distant from the ideal position that is indicated by the build information). Then, the control apparatus 104a may control the processing apparatus 102a to process the three dimensional structural object ST on the basis of the fiducial point information on which the build error is reflected. Alternatively, for example, the control apparatus 104a may control the processing apparatus 102a so as to reduce the effect caused by to the build error (for example, so as to reduce a deterioration of a processing accuracy caused by the build error) on the basis of the measured result by the measurement apparatus 8 and the fiducial point information on which the build error is not reflected. For example, the control apparatus 104a may determine the position of the actual three-dimensional structural object ST in the fiducial coordinate system on the basis of the measured result by the measurement apparatus 8 and the fiducial point information on which the build error is not reflected, and control the processing apparatus 102a to process the three-dimensional structural object ST the actual position (namely, the position on which the build error is reflected) of which is determined.

As another example, the control apparatus 7 of the build unit UNTa1 may generate the fiducial point information on which the build error is reflected by correcting the fiducial point information on which the build error is not reflected on the basis of the measured result by the measurement apparatus 8. Then, the output apparatus 93a of the build unit UNTa1 may output the fiducial point information on which the build error is reflected to the processing unit UNTa2. In this case, the processing unit UNTa2 may process the three-dimensional structural object ST on the basis of the fiducial point information that is outputted from the build unit UNTa1.

### (4-4-2) Second Modified Example

In the above described description, the fiducial point information is outputted from the build unit UNTa1 to the processing unit UNTa2. However, the user of the build unit UNTa1 and / or the processing unit UNTa2 may manually input the fiducial point information to the processing unit UNTa2. Namely, the user of the build unit UNTa1 and / or the processing unit UNTa2 may input the fiducial point information to the processing unit UNTa2 by using the input apparatus 101a such as the keyboard. Namely, a route through which the fiducial point information is obtained from the user may exists as a route for the processing unit UNTa2 to obtain the fiducial point information, in addition to or instead of a route through which the fiducial point information is obtained from the build unit UNTa1. In this case, the output apparatus 93a of the build unit UNTa1 may not output the fiducial point information to the processing unit UNTa2. The build unit UNTa1 may not be provided with the output apparatus 93a.

### (4-4-3) Third Modified Example

In the above described description, the fiducial point information is inputted to the processing unit UNTa2 from the build unit UNTa1 and / or the user. However, information that is different from the fiducial point information may be inputted to the processing unit UNTa2 through the input apparatus 101a in addition to or instead of the fiducial point information, and the processing unit UNTa2 may process the three-dimensional structural object ST on the basis of the inputted information. Namely, the control apparatus 104a of the processing unit UNTa2 may control the processing apparatus 102a to process the three-dimensional structural object ST on the basis of the information that is different from the fiducial point information.

For example, the control apparatus 104a may generate the fiducial point information on the basis of the information that is different from the fiducial point information, and control the processing apparatus 102a to process the three-dimensional structural object ST on the basis of the generated fiducial point information. For example, the control apparatus 104a may control the processing apparatus 102a to process the three-dimensional structural object ST on the basis of the information that is different from the fiducial point information without generating the fiducial point information. In this case, the control apparatus 104a may determine the position (moreover, another characteristic such as the shape, if needed) of the three-dimensional structural object ST in the processing fiducial coordinate system on the basis of the information that is different from the fiducial point information, and control the processing apparatus 102a to process the three-dimensional structural object ST on the basis of information relating to the determined position.

The workpiece information and the build information are examples of the information that is different from the fiducial point information. Namely, the workpiece information and the build information may be inputted from the output apparatus 93a of the build unit UNTa1 to the input apparatus 101a of the processing unit UNTa2. In this case, the workpiece information and the build information, which are in a state where they are associated with each other, may be inputted from of the build unit UNTa1 to the processing unit UNTa2. For example, the workpiece information and the build information, which are in a state where the workpiece shape information (namely, the information relating to the thee-dimensional shape of the workpiece model WM, and substantially, the information relating to the thee-dimensional shape of the workpiece W) included in the workpiece information is associated with the build shape information (namely, the information relating to the thee-dimensional shape of the build model PM, and substantially, the information relating to the thee-dimensional shape of the three-dimensional structural object ST) included in the build information, may be inputted from of the build unit UNTa1 to the processing unit UNTa2. For example, the workpiece information and the build information, which are in a state where the workpiece position information (namely, the information relating to the position of the workpiece model WM, and substantially, the information relating to the position of the workpiece W) included in the workpiece information is associated with the build position information (namely, the information relating to the position of the build model PM, and substantially, the information relating to the position of the three-dimensional structural object ST) included in the build information, may be inputted from of the build unit UNTa1 to the processing unit UNTa2. Note that "the workpiece information and the build information that are associated with each other" may mean the workpiece information and the build information that are in a state where the positional relationship between the workpiece model WM (the workpiece W) and the build model PM (the three-dimensional structural object ST) is determinable therefrom.

The measurement information relating to the measured result by the measurement apparatus 8 of the build unit UNTa1 is another example of the information that is different from the fiducial point information. Namely, the measurement information may be inputted from the output apparatus 93a of the build unit UNTa1 to the input apparatus 101a of the processing unit UNTa2. For example, the build unit UNTa1 may measure the workpiece W by using the measurement apparatus 8 before forming the three-dimensional structural object ST, and the measurement information relating to the measured result by the measurement apparatus 8 before the three-dimensional structural object ST is formed may be inputted to the processing unit UNTa2 through the input apparatus 101a. For example, the build unit UNTa1 may measure at least one of the workpiece W and the three-dimensional structural object ST by using the measurement apparatus 8 at a desired timing during a period when the three-dimensional structural object ST is formed, and the measurement information relating to the measured result by the measurement apparatus 8 at the desired timing during the period when the three-dimensional structural object ST is formed may be inputted to the processing unit UNTa2 through the input apparatus 101a. For example, the build unit UNTa1 may measure the workpiece W and the three-dimensional structural object ST by using the measurement apparatus 8 after the three-dimensional structural object ST is formed, and the measurement information relating to the measured result by the measurement apparatus 8 after the three-dimensional structural object ST is formed may be inputted to the processing unit UNTa2 through the input apparatus 101a. In this case, the measurement information, which is in a state where the measured result of the workpiece W included in the measurement information is associated with the measured result of the three-dimensional structural object ST included in the measurement information, may be inputted from of the build unit UNTa1 to the processing unit UNTa2. Note that "the measurement information in which the measured result of the workpiece W is associated with the measured result of the three-dimensional structural object ST may mean the measurement information that is in a state where the positional relationship between the workpiece model WM (the workpiece W) and the build model PM (the three-dimensional structural object ST) is determinable therefrom.

Alternatively, the processing unit UNTa2 may be provided with a measurement apparatus for measuring the three-dimensional structural object ST and may generate the fiducial point information on the basis of a measured result by the measurement apparatus of the processing unit UNTa2 (namely, a measured result of the three-dimensional structural object ST). The processing unit UNTa2 may process the three-dimensional structural object ST on the basis of the measured result by the measurement apparatus of the processing unit UNTa2 (namely, the measured result of the three-dimensional structural object ST). Note that the measurement apparatus of the processing unit UNTa2 may have a structure that is same as that of the measurement apparatus 8 of the build unit UNTa1.

### (4-4-4) Fourth Modified Example

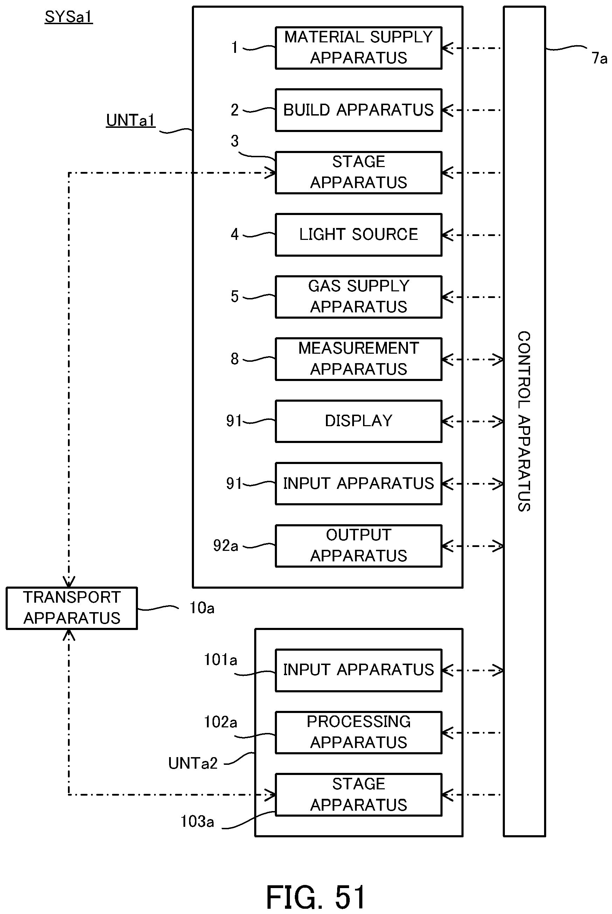

In the above described description, the build unit UNTa1 and the processing unit UNTa2 are provided with the control apparatus 7 and the control apparatus 104a, respectively. Namely, the processing system SYSa is provided with the control apparatus 7 and the control apparatus 104a that control the build unit UNTa1 and the processing unit UNTa2, respectively. However, the processing system SYSa may be provided with a shared control apparatus 7a that controls the build unit UNTa1 and the processing unit UNTa2, in addition to or instead of the control apparatus 7 and the control apparatus 104a. Namely, the processing system SYSa may be provided with the build unit UNTa1 that may not be provided with the control apparatus 7, the processing unit UNTa2 that may not be provided with the control apparatus 104a, the transport apparatus 10a and the control apparatus 7a. Note that FIG. 51 is a system configuration diagram that illustrates a system configuration of the processing system SYSa that is provided with the shared control apparatus 7a that controls the build unit UNTa1 and the processing unit UNTa2. FIG. 51 illustrates an example in which the build unit UNTa1 is not provided with the control apparatus 7, however, the build unit UNTa1 may be provided with the control apparatus 7. FIG. 51 illustrates an example in which the processing unit UNTa2 is not provided with the control apparatus 104a, however, the processing unit UNTa2 may be provided with the control apparatus 104a. In the below described description, the processing system SYSa that is provided with the control apparatus 7a is referred to as a "processing system SYSa1".

In this case, the control apparatus 7a may perform at least a part of the operation that is performed by the control apparatus 7 and the operation that is performed by the control apparatus 104a. Moreover, when the processing system SYSalis provided with the control apparatus 7a, the fiducial point information may not be necessarily inputted from the output apparatus 93a of the build unit UNTa1 to the input apparatus 101a of the processing unit UNTa2. For example, the control apparatus 7a may set the fiducial point RP in the build operation and control the processing apparatus 102a on the basis of the fiducial point information relating to the set fiducial point RP in the processing operation. For example, the control apparatus 7a may control the build apparatus 2 to form the three-dimensional structural object ST on the basis of the workpiece information and the build information, generate the fiducial point information on the basis of the workpiece information and the build information, and control the processing apparatus 102a to process the three-dimensional structural object ST on the basis of the fiducial point information. For example, the control apparatus 7a may obtain the fiducial point information relating to the fiducial point RP that is generated by the control apparatus 7 of the build unit UNTa1 in the build operation and input the obtained fiducial point information to the input apparatus 101a of the processing unit UNTa2. For example, the control apparatus 7a may obtain the workpiece information and the build information that are used by the control apparatus 7 of the build unit UNTa1 in the build operation and input the obtained workpiece information and build information to the input apparatus 101a of the processing unit UNTa2. For example, the control apparatus 7a may obtain the fiducial point information relating to the fiducial point RP that is generated by the control apparatus 7 of the build unit UNTa1 in the build operation and control the processing apparatus 102a to process the three-dimensional structural object ST in the basis of the obtained fiducial point information. For example, the control apparatus 7a may obtain the workpiece information and the build information that are used by the control apparatus 7 of the build unit UNTa1 in the build operation, generate the fiducial point information on the basis of the obtained workpiece information and build information, and control the processing apparatus 102a to process the three-dimensional structural object ST on the basis of the generated fiducial point information. Note that the processing system SYSa1 may not be provided with the transport apparatus 10a. Moreover, the control apparatus 7 may be disposed at an outside of the processing system SYSa1.

### (4-4-5) Fifth Modified Example

In the above described description, the stage 31 of the build unit UNTa1 supports the single workpiece W. However, the stage 31 may support the workpiece W through an object that is different from the workpiece W. In this case, the measurement apparatus 8 of the build unit UNTa1 may measure the workpiece W with the object that is different from the workpiece W.

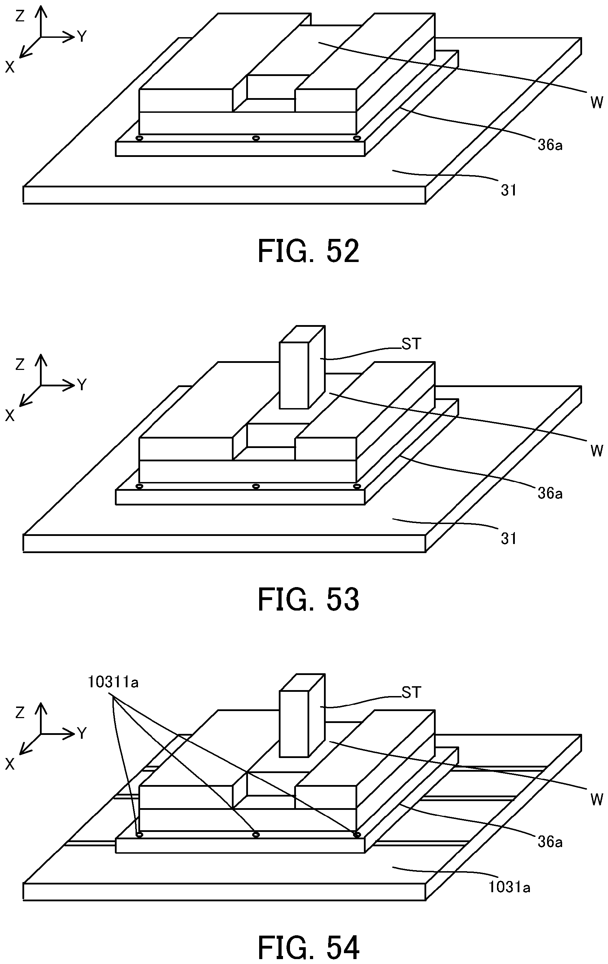

For example, FIG. 52 is a perspective view that illustrates one example of the stage 31 that supports the workpiece W through the object that is different from the workpiece W. As illustrated in FIG. 52, for example, the stage 31 may support the workpiece W through a fixed jig (for example, a vise) 36a for fixing the workpiece W. Namely, the stage 31 may support the fixed jig 36a and the workpiece W may be fixed to the fixed jig 36a that is supported by the stage 31. Note that the fixed jig 36a may be an apparatus for fixing the workpiece W so as not to allow the three-dimensional structural object ST to be displaced relative to the stage 1031a during a period when the processing unit UNTa2 processes the three-dimensional structural object ST, for example. In this case, the measurement apparatus 8 may measure the workpiece W that is fixed to the fixed jig 36a in the coordinate matching operation and the workpiece model alignment operation. Namely, the measurement apparatus 8 may measure the workpiece W with the fixed jig 36a. Moreover, the control apparatus 7 may set the fiducial point RP on the fixed jig 36a, because a relative position of the fixed jig 36a and the three-dimensional structural object ST rarely changes as long as the fixed jig 36a fixes the workpiece W. Moreover, the processing apparatus 2 may form the three-dimensional structural object ST on the workpiece W that is fixed to the fixed jig 36a in the build operation. Note that FIG. 53 is a perspective view that illustrates the three-dimensional structural object ST that is formed on the workpiece W fixed to the fixed jig 36a.

Furthermore, when the workpiece W is fixed to the fixed jig 36a, the transport apparatus 10a may transport the workpiece W that is fixed to the fixed jig 36a. Namely, the transport apparatus 10a may transport the workpiece W that is fixed to the fixed jig 36a with the fixed jig 36a. Namely, when the stage 31 supports the workpiece W through the object that is different from the workpiece W, the transport apparatus 10a may transport the workpiece W with the object that is different from the workpiece W.

Furthermore, the stage 1031a of the processing unit UNTa2 may also support the workpiece W through the fixed jig 36a for fixing the workpiece W. Namely, the stage 1031a may support the fixed jig 36a and the workpiece W may be fixed to the fixed jig 36a that is supported by the stage 1031a. Note that FIG. 54 is a perspective view that illustrates the stage 1031a that support the workpiece W fixed to the fixed jig 36a. Namely, when the stage 31 supports the workpiece W through the object that is different from the workpiece W, the stage 1031a may support the workpiece W through the object that is different from the workpiece W.

The fixed jig 36a may be fixed to the stage 1031a. As a result, it is possible to reduce the displacement of three-dimensional structural object ST relative to the stage 1031a during the period when the processing unit UNTa2 processes the three-dimensional structural object ST. For example, as illustrated in FIG. 54, the fixed jig 36a may be screwed to the stage 1031a through a screw hole 361a formed in the fixed jig 36a and a groove (for example, a T-groove) formed in the stage 1031a.

Note that the stage 31 may support a plurality of workpieces W that are fixed to a plurality of fixed jigs 36a, respectively. Namely, the stage 31 may support the plurality of workpieces W through the plurality of fixed jigs 36a, respectively. In this case, the above described workpiece model alignment operation is performed on each of the plurality of workpieces W. For example, the stage 31 supports N (note that N is an integer that is equal to or larger than 2) workpieces W, the workpiece information relating to a first workpiece W is generated by performing the workpiece model alignment operation on the first workpiece W, the workpiece information relating to a second workpiece W is generated by performing the workpiece model alignment operation on the second workpiece W, .., and the workpiece information relating to a N-th workpiece W is generated by performing the workpiece model alignment operation on the N-th workpiece W. However, when two or more workpieces W are included in the measurement range of the measurement apparatus 8, the measurement by the measurement apparatus 8 for the workpiece model alignment operation may be performed on two or more workpieces W together. Moreover, when the measurement apparatus 8 measures the three-dimensional structural object ST after the three-dimensional structural object ST is formed, the measurement apparatus 8 may measure a plurality of three-dimensional structural objects ST that are formed on the plurality of workpieces W, respectively, with the plurality of workpieces W together or in sequence.

Note that the stage 31 may support the plurality of workpieces W without using the fixed jig 36a. Even in this case, the above described workpiece model alignment operation may be performed on each of the plurality of workpieces W.

### (5) Modified Example

Next, a modified example that is adaptable to each of the first and second embodiments will be described.

### (5-1) Modified Example relating to Stage Driving System 32

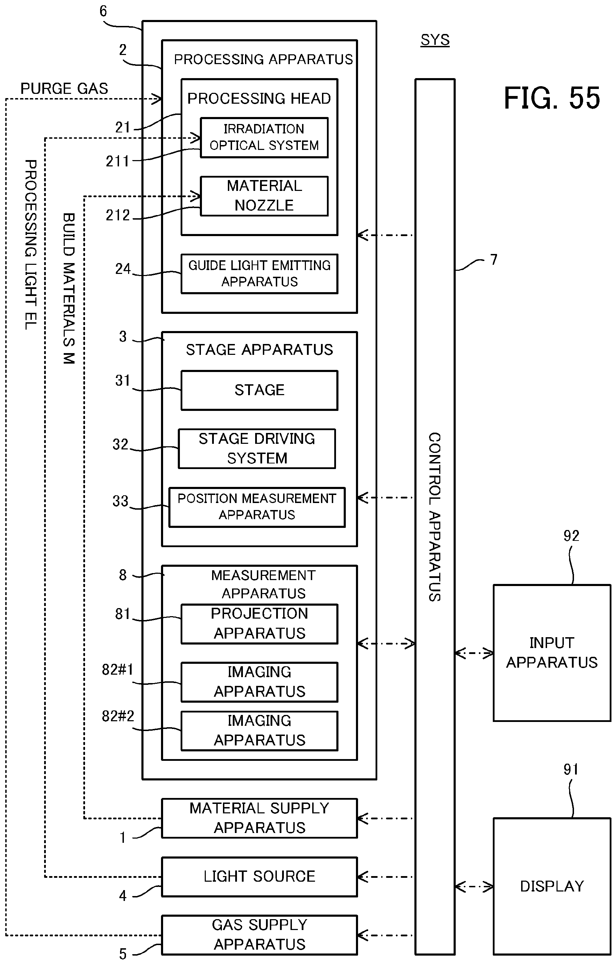

As illustrated in FIG. 55 that illustrates another example of the system configuration of the processing system SYS in the first embodiment (namely, another example of the system configuration of the build unit UNTa1 in the second embodiment), the stage apparatus 3 may be provided with a stage driving system 32 for moving the stage 31. The stage driving system 32 may move the stage 31 in the chamber space 63IN. The stage driving system 32 may move the stage 31 along at least one of the X axis, the Y axis and the Z axis. When the stage 31 moves along at least one of the X axis and the Y axis, each of the irradiation area EA and the supply area MA moves on the workpiece W along at least one of the X axis and the Y axis. Furthermore, the stage driving system 32 may move the stage 31 along at least one of the θX direction, the θY direction and the θZ direction, in addition to or instead of at least one of the X axis, the Y axis and the Z axis. The stage driving system 32 includes a motor or the like, for example.

When the processing system SYS is provided with the stage driving system 32, the stage apparatus 3 is further provided with a position measurement apparatus 33. The position measurement apparatus 33 is configured to measure a position of the stage 31. The position measurement apparatus 33 may include at least one of an encoder and a laser interferometer, for example.

When the processing system SYS is provided with the stage driving system 32, the build apparatus 2 may not be provided with the head driving system 22. However, even when the processing system SYS is provided with the stage driving system 32, the build apparatus 2 may be provided with the head driving system 22. When the build apparatus 2 is not provided with the head driving system 22, the build apparatus 2 may not be provided with the position measurement apparatus 23.

When the processing system SYS is provided with the stage driving system 32, the stage driving system 32 may move the stage 31 so that the beam detector 325 is irradiated with the processing light EL at the above described step S112 in FIG. 4 that illustrates the flow of the above described coordinate matching operation for associating the build coordinate system and the stage coordinate system. Moreover, at the step S113 in FIG. 4, the control apparatus 7 may modify the positions of the pins 312 in the stage coordinate system, which is the information already known to the control apparatus 7, on the basis of a moving distance of the stage 31, and may determine that the position in the build coordinate system of the build head 21 that is in the state where it is allowed to irradiate the pin 312 with the processing light EL and the position in the stage coordinate system at which the pin 312 is formed are positions that should be associated with each other. However, when the processing system SYS is not provided with the head driving system 22 (namely, the build head 21 does not move), the build coordinate system may not be used, and in this case, the above described processes from the step S111 to the step S113 that illustrates the flow of the coordinate matching operation for associating the build coordinate system and the stage coordinate system may not be performed.

When the processing system SYS is provided with the stage driving system 32, the position measurement apparatus 33 may measure the position of the stage 31 when the measurement apparatus 8 measures the fiducial member 34 at the above described step S115 in FIG. 4 that illustrates the flow of the above described coordinate matching operation for associating the measurement coordinate system and the stage coordinate system. Moreover, at the step S116 in FIG. 4, the control apparatus 7 may associate the measurement coordinate system with the stage coordinate system on the basis of the measured result by the measurement apparatus 8 at the step S115 and the measured result of the stage 31 when the measurement apparatus 8 measures the fiducial member 34 at the step S115. Specifically, the control apparatus 7 determines the position of the fiducial mark 343 in the measurement coordinate system on the basis of the measured result by the measurement apparatus 8. Furthermore, as described above, the information relating to the positional relationship between the fiducial marks 343 and the through-holes 342 (namely, the positional relationship between the fiducial marks 343 and the pins 312) is the information that is already known to the control apparatus 7. Thus, the control apparatus 7 determines the positions of the through-holes 322 and the pins 312 in the measurement coordinate system on the basis of the information relating to the position of the fiducial marks 343 in the measurement coordinate system and the information relating to the positional relationship between the fiducial marks 343 and the through-holes 342. Furthermore, as described above, the information relating to the position of the pins 312 in the stage coordinate system is the information that is already known to the control apparatus 7. As a result, the control apparatus 7 determines that the position of the pin 312 in the measurement coordinate system and the position of the pin 312 in the stage coordinate system are positions that should be associated with each other. However, when the stage 31 moves by the stage driving system 32, the positions of the pins 31 in the stage coordinate system are modified by the moving distance of the stage 31 by the stage driving system 32. In this case, the control apparatus 7 determines that the position of the pin 312 in the measurement coordinate system and the modified position of the pin 312 in the stage coordinate system are positions that should be associated with each other. As a result, the control apparatus 7 associates the measurement coordinate system with the stage coordinate system on the basis of such a determined result that the specific position in the measurement coordinate system and the specific position in the stage coordinate system are positions that should be associated with each other.

When the processing system SYS is provided with the stage driving system 32, the stage driving system 32 may move the stage 31 to satisfy the position condition that the user designated point that is designated at the step S143 in FIG. 17 and the build apparatus 2 have the desired third positional relationship at the above described step S144 in FIG. 17 that illustrates the flow of the above described third workpiece model alignment operation. Moreover, at the step S145 in FIG. 17, the position measurement apparatus 33 may measure the position of the stage 31 at the timing when the position condition is satisfied, after the stage 31 moves to satisfy the position condition that the user designated point and the build apparatus 2 have the desired third positional relationship. Moreover, at the step S148 in FIG. 17, the control apparatus 7 may generate the workpiece information on the basis of the measured result by the position measurement apparatus 23 and / or 33 at the step S145 in FIG. 17 and the workpiece model data obtained at the step S142. Specifically, the measured result by the position measurement apparatus 23 and / or 33 at the step S145 indicates the position of the build head 21 and / or the stage 31 when the user designated point and the build apparatus 2 have the desired third positional relationship. Thus, the control apparatus 7 may determines the position of the user designated point in the build coordinate system and / or the position of the user designated point in the stage coordinate system from the measured result by the position measurement apparatus 23 and / or 33. This is because the user designated point and the build apparatus 2 have the desired third positional relationship and thus the user designated point and the build head 21 and / or the stage 31 on which the workpiece W is placed must have a certain positional relationship that is determinable from the information relating to the third positional relationship that is the information already know to the control apparatus 7. Then, the control apparatus 7 may perform the alignment process for disposing a workpiece model designated point that is a point of the workpiece model WM corresponding to the user designated point at the position of the user designated point that is determined from the measured result by the position measurement apparatus 23 and / or 33. Then, the control apparatus 7 may generate the workpiece information on the basis of the result of the alignment process.

### (5-2) Modified Example relating to Coordinate Matching Operation

In the above described description, the beam detection member 32 is placed on the placement surface 311 in order to perform the coordinate matching operation. However, the beam detection member 32 (especially, the light shield member 323 and the beam detector 325) may be formed on the stage 31 (for example, the placement surface 311). Similarly, in the above described description, the fiducial member 34 is placed on the placement surface 311 in order to perform the coordinate matching operation. However, the fiducial member 34 (especially, the fiducial mark 343) may be formed on the stage 31 (for example, the placement surface 311).

In the above described description, the pins 312 and the through-holes 322 are used as the marks for alignment when the beam detection member 32 is placed on the placement surface 311. However, the pin 312 and the through-hole 322 are merely examples of the marks for the alignment, and a mark that is different from the pin 312 and the through-hole 322 may be used. For example, a convex structural object that is one example of the mark may be formed on the placement 311, a concave structural object that is one example of the mark may be formed on the beam detection member 32, and the beam detection member 32 may be aligned with the placement surface 311 by placing the beam detection member 32 on the placement surface 311 so that the convex structural object is inserted into the concave structural object. For example, a concave structural object that is one example of the mark may be formed on the placement 311, a convex structural object that is one example of the mark may be formed on the beam detection member 32, and the beam detection member 32 may be aligned with the placement surface 311 by placing the beam detection member 32 on the placement surface 311 so that the convex structural object is inserted into the concave structural object. For example, a guide member having a shape along at least a part of an outer rim of the beam detection member 32 may be formed on the placement surface 311 as the mark and the beam detection member 32 may be aligned with the placement surface 311 by placing the beam detection member 32 on the placement surface 311 so that the outer rim of the beam detection member 32 contacts with the guide member. The same applies to the mark for the alignment when the fiducial member 34 is placed on the placement surface 311.

In the above described description, the fiducial member 34 that is different from the beam detection member 32 for associating the build coordinate system with the stage coordinate system is used in order to associate the measurement coordinate system with the stage coordinate system. However, the beam detection member 32 may be used as the fiducial member 34 for associating the measurement coordinate system with the stage coordinate system. In this case, for example, at least one of the light shield member 323, the aperture 324 and the beam detector 325 that are formed at the beam detection member 32 may be used as the fiducial mark 343. Alternatively, the fiducial mark 343 may be formed on the base member 321 of the beam detection member 32.

In the above described description, the mark that is measurable by the measurement apparatus 8 is formed on the fiducial member 34 as the fiducial mark 343. However, a solid member 344 having a three-dimensional structure may be formed on the fiducial member 34 as an alternative object of the fiducial mark 343, as illustrated in FIG. 52A that is a cross-sectional view illustrating another example of the fiducial member 34 and FIG. 52B is an A-A' cross-sectional view in FIG. 52A, because the measurement apparatus 8 is configured to measure the shape (especially, the three-dimensional shape) of the measurement target object. For example, FIG. 52A and FIG. 52B illustrate an example in which at least a part of a sphere (specifically, a half sphere) is formed on the fiducial member 34 as the solid member 344. The solid member 344 may have a characteristic that is same as that of the fiducial mark 343, except that it has the three-dimensional structure. As a result, even when the solid member 344 is formed, the measurement coordinate system is properly associated with the stage coordinate system.

In the above described description, the beam detection member 32 is placed on the placement surface 311 in order to perform the coordinate matching operation. Moreover, in the above described description, the fiducial member 34 is placed on the placement surface 311 in order to perform the coordinate matching operation. However, the coordinate matching operation may be performed without using the beam detection member 32 or the fiducial member 34. For example, a photosensitive / thermosensitive member (as one example, a thermosensitive paper) on a surface of which a photosensitive material or a thermosensitive material is provided is placed on the stage 311 (for example, the placement surface 311), the processing apparatus 2 irradiates the photosensitive / thermosensitive member with the processing light EL in a state where the processing head 21 is located at a origin point position of the processing coordinate system (a head coordinate system). By this, a mark is formed by an exposure on the photosensitive / thermosensitive member and this mark is a processing light fiducial origin point. Next, the intersecting position of the plurality of guide lights GL emitted from the plurality of guide light emitting apparatuses 24 is moved to be coincident with a position of the mark formed by the exposure on the photosensitive / thermosensitive member. By this, the processing coordinate system and the measurement coordinate system are associated with each other. Note that the position of the mark formed by the exposure may be measured by using the measurement apparatus 8 in addition to or instead of using the plurality of guide lights GL.

### (5-3) Another Modified Example

In the above described description, the build apparatus 2 melts the build materials M by irradiating the build materials M with the processing light EL. However, the build apparatus 2 may melt the build materials M by irradiating the build materials M with any energy beam. In this case, the build apparatus 2 may be provided with a beam irradiation apparatus that is configured to emit any energy beam in addition to or instead of the irradiation optical system 211. Any energy beam includes, but is not limited to, a charged particle beam such as an electron beam and an ion beam or electromagnetic wave.

In the above described description, the processing system SYS is configured to form the three-dimensional structural object ST by the Laser Metal Deposition. However, the processing system SYS may form the three-dimensional structural object ST from the build materials M by another method for forming the three-dimensional structural object ST by irradiating the build materials M with the processing light EL (alternatively, any energy beam). A Powder Bed Fusion such as a Selective Laser Sintering (SLS), a Binder Jetting or a Laser Metal Fusion (LMF) is one example of another method, for example. Alternatively, the processing system SYS may form the three-dimensional structural object ST by any method for the additive processing that is different from the method for forming the three-dimensional structural object ST by irradiating the build materials M with the processing light EL (alternatively, any energy beam).

In the above described description, the processing system SYS forms the three-dimensional structural object ST by supplying the build materials M from the material nozzle 212 to the irradiation area EA that is irradiated with the processing light EL by the irradiation optical system 211. However, the processing system SYS may form the three-dimensional structural object ST by supplying the build materials M from the material nozzle 212 without emitting the processing light EL from the irradiation optical system 211. For example, the processing system SYS may form the three-dimensional structural object ST by spraying the build materials M from the material nozzle 212 to the build surface MS to thereby melt the build materials M on the build surface MS and then solidifying the molten build materials M. For example, the processing system SYS may form the three-dimensional structural object ST by spraying the build materials M at an ultrafast speed from the material nozzle 212 to the build surface MS to thereby melt the build materials M on the build surface MS and then solidifying the molten build materials M. For example, the processing system SYS may form the three-dimensional structural object ST by spraying the heated build materials M from the material nozzle 212 to the build surface MS to thereby melt the build materials M on the build surface MS and then solidifying the molten build materials M. When the three-dimensional structural object ST is formed without emitting the processing light EL from the irradiation optical system 211, the processing system SYS (especially, the build head 21) may not be provided with the irradiation optical system 211.

Alternatively, the processing system SYS may perform a removal processing that removes at least a part of an object by irradiating the object such as the workpiece W with the processing light EL (alternatively, any energy beam) in addition to or instead of the additive processing. Alternatively, the processing system SYS may perform a marking processing that forms a mark (for example, a character, a number or a diagram) on at least a part of an object by irradiating the object such as the workpiece W with the processing light EL (alternatively, any energy beam) in addition to or instead of at least one of the additive processing and the removal processing. Even in these cases, the above described effect is achievable.

### (6) Supplementary Note

Regarding the above described embodiment, below described Supplementary Notes are further disclosed.

### [Supplementary Note 1]

A build unit comprising:
a build apparatus that builds a build object on a base member on the basis of a set position that is set on the base member; and
an output apparatus that outputs position information relating to the set position.

### [Supplementary Note 2]

The build unit according to the Supplementary Note 1, wherein
the output apparatus outputs the position information to a processing unit that performs a processing operation on the build object.

### [Supplementary Note 3]

The build unit according to the Supplementary Note 2, wherein
the processing unit performs the processing operation on the basis of the position information outputted from the output apparatus.

### [Supplementary Note 4]

The build unit according to the Supplementary Note 2 or 3, wherein
the processing unit performs an alignment of the build object and the processing unit on the basis of the position information outputted from the output apparatus and performs the processing operation on the basis of a result of the alignment.

### [Supplementary Note 5]

The build unit according to any one of the Supplementary Notes 1 to 4, wherein
the build apparatus builds the build object a relative position of which is fixed relative to the base member.

### [Supplementary Note 6]

The build unit according to any one of the Supplementary Notes 1 to 5, wherein
the build apparatus builds the build object that is coupled with the base member.

### [Supplementary Note 7]

The build unit according to any one of the Supplementary Notes 1 to 6, wherein
the position information includes information relating to a relative position of the set position and the base member.

### [Supplementary Note 8]

The build unit according to any one of the Supplementary Notes 1 to 7, wherein
the position information includes information relating to a relative position of the set position and the build object.

### [Supplementary Note 9]

A build unit comprising:
a build apparatus that builds a build object on a base member on the basis of a set position that is set on the base member; and
an output apparatus that outputs position information relating to a relative position of the set position and the build object.

### [Supplementary Note 10]

A build unit comprising:
a build apparatus that builds a build object on a base member on the basis of a set position that is set on the base member; and
an output apparatus that outputs position information relating to a relationship between the set position and a position of the build object.

### [Supplementary Note 11]

The build unit according to any one of the Supplementary Notes 8 to 10, wherein
the build apparatus builds the build object on the base member on the basis of a build data,
the output apparatus outputs, as the position information, the build data that is associated with the set position.

### [Supplementary Note 12]

The build unit according to the Supplementary Note 11, wherein
the build data includes a data that defines a detail of a build operation for building the build object.

### [Supplementary Note 13]

The build unit according to the Supplementary Note 11 or 12, wherein
the build data includes a three-dimensional shape data of the build obj ect.

### [Supplementary Note 14]

The build unit according to any one of the Supplementary Notes 8 to 13 further comprising a measurement apparatus that measures the built build object to obtain a measured result,
the output apparatus outputting, as the position information, the measured result that is associated with the set position.

### [Supplementary Note 15]

The build unit according to the Supplementary Note 14, wherein
the measurement apparatus measures a position of the base member in a fiducial coordinate system of the build unit,
the output apparatus outputs the position information relating to the set position in the fiducial coordinate system.

### [Supplementary Note 16]

The build unit according to the Supplementary Note 15 further comprising a support apparatus that supports the base member,
the fiducial coordinate system including a support position coordinate system for indicating a position on a support surface of the support apparatus.

### [Supplementary Note 17]

The build unit according to any one of the Supplementary Notes 14 to 16, wherein
the measurement apparatus measures a position of a part of the base member in a fiducial coordinate system of the build unit,
the output apparatus outputs the position of the part of the base member that is associated with the set position.

### [Supplementary Note 18]

The build unit according to any one of the Supplementary Notes 9 to 17, wherein
the output apparatus outputs information relating to the set position.

### [Supplementary Note 19]

The build unit according to any one of the Supplementary Notes 14 to 18, wherein
the measurement apparatus measures the build object in a non-contact manner.

### [Supplementary Note 20]

The build unit according to any one of the Supplementary Notes 1 to 19 further comprising a control apparatus that sets the set position.

### [Supplementary Note 21]

The build unit according to the Supplementary Note 19, wherein
the control apparatus sets the set position on the base member.

### [Supplementary Note 22]

A build unit comprising:
a control apparatus that sets a set position on a base member; and
a build apparatus that builds a build object on the base member on the basis of the set position.

### [Supplementary Note 23]

The build unit according to any one of the Supplementary Notes 20 to 22 comprising an input apparatus to which information for setting the set position is inputted,
the control apparatus setting the set position on the basis of the information inputted to the input apparatus.

### [Supplementary Note 24]

The build unit according to any one of the Supplementary Notes 20 to 23, wherein
the control apparatus sets the set position on the basis of information relating to the base member.

### [Supplementary Note 25]

A build unit comprising:
a build apparatus that builds a build object on a base member;
a control apparatus that sets a set position on at least one of the base member and the build object and controls the build apparatus on the basis of the set position; and
an output apparatus that outputs first position information relating to the set position and a second position information relating to a positional relationship between the set position and a position of the build object.

### [Supplementary Note 26]

A build unit comprising:
a build apparatus that builds a build object on a base member; and
an output apparatus that outputs position information relating to a relationship between a position of the build object and a set position that is set on at least one of the base member and the build object.

### [Supplementary Note 27]

A build unit comprising:
a build apparatus that builds a build object on a base member; and
an output apparatus that outputs a three-dimensional shape data of the base member and a three-dimensional shape data of the build object.

### [Supplementary Note 28]

The build unit according to the Supplementary Note 27, wherein
the output apparatus associates and outputs the three-dimensional shape data of the base member and the three-dimensional shape data of the build object.

### [Supplementary Note 29]

The build unit according to the Supplementary Note 27 or 28, wherein
the output apparatus outputs information relating to a set position that is set on the base member.

### [Supplementary Note 30]

The build unit according to the Supplementary Note 29, wherein
the output apparatus associates and outputs the set position and the three-dimensional shape data of the base member.

### [Supplementary Note 31]

The build unit according to the Supplementary Note 29 or 30, wherein
the output apparatus associates and outputs the set position and the three-dimensional shape data of the build object.

### [Supplementary Note 32]

A build unit comprising:
a build apparatus that builds a build object on a base member;
a measurement apparatus that obtains three-dimensional information of the base member and the build object; and
an output apparatus that outputs a measured result by the measurement apparatus.

### [Supplementary Note 33]

The build unit according to the Supplementary Note 32, wherein
the measurement apparatus measures the base member to obtain a first measured result in at least one of a period before the build object is build and a period during which the build object is build, and measures the build object to obtain a second measured result in at least one of a period during which the build object is build and a period after the build object is build.

### [Supplementary Note 34]

The build unit according to the Supplementary Note 33, wherein
the output apparatus associates and outputs the first measured result and the second measured result.

### [Supplementary Note 35]

A build unit comprising:
a build apparatus that builds a build object on a base member;
a measurement apparatus that measures the base member and the build object; and
an output apparatus that outputs a measured result by the measurement apparatus,
the measurement apparatus measuring the base member to obtain a first measured result in at least one of a period before the build object is build and a period during which the build object is build, and measuring the build object to obtain a second measured result in at least one of a period during which the build object is build and a period after the build object is build.

### [Supplementary Note 36]

The build unit according to the Supplementary Note 35, wherein
the output apparatus associates and outputs the first measured result and the second measured result.

### [Supplementary Note 37]

The build unit according to any one of the Supplementary Notes 1 to 31 further comprising a measurement apparatus that measures the build obj ect.

### [Supplementary Note 38]

The build unit according to the Supplementary Note 37, wherein
the output apparatus outputs position information relating to a set position that is set on the base member and a measured result by the measurement apparatus.

### [Supplementary Note 39]

The build unit according to the Supplementary Note 37 or 38 further comprising a control apparatus that modifies, on the basis of a measures result by the measurement apparatus, the position information relating to a set position that is set on the base member, the output apparatus outputting the modified position information.

### [Supplementary Note 40]

The build unit according to any one of the Supplementary Notes 32 to 39, wherein
the measurement apparatus measures the build object in a non-contact manner.

### [Supplementary Note 41]

The build unit according to any one of the Supplementary Notes 1 to 40, wherein
the build apparatus comprises a supply apparatus that supplies a material to a build position,
a positional relationship between a set position that is set on the base member and the build position is a predetermined relationship.

### [Supplementary Note 42]

The build unit according to the Supplementary Note 41, wherein
the build apparatus comprises a beam irradiation apparatus that irradiates the build position with an energy beam.

### [Supplementary Note 43]

The build unit according to any one of the Supplementary Notes 1 to 42, wherein
the build apparatus builds the build object by performing an additive processing on the base member.

### [Supplementary Note 44]

The build unit according to any one of the Supplementary Notes 1 to 43, wherein
a mark is provided on the base member.

### [Supplementary Note 45]

The build unit according to the Supplementary Note 44, wherein
a position of the mark or a position that has a predetermined relationship relative to a position of the mark is used as a set position on the base member.

### [Supplementary Note 46]

The build unit according to any one of the Supplementary Note 1 to 45, wherein
a feature point of the base member is used as a set position on the base member.

### [Supplementary Note 47]

The build unit according to the Supplementary Note 46, wherein
the feature point includes a border of the base member or a border of a structure on the base member.

### [Supplementary Note 48]

The build unit according to the Supplementary Note 43 or 44, wherein
the feature point includes a corner of the base member or a corner of a structure on the base member.

### [Supplementary Note 49]

A build unit comprising:
a build apparatus that builds a build object that includes a planar surface on an upper surface of a base member that has a planar side surface; and
a control apparatus that controls the build apparatus so that the planar surface of the build object is parallel to the side surface of the base member.

### [Supplementary Note 50]

A processing unit comprising:
a processing apparatus that performs a processing operation on a build object that is built on a base member on the basis of a set position that is set on the base member; and
a control apparatus that controls the processing apparatus on the basis of position information relating to the set position.

### [Supplementary Note 51]

The processing unit according to the Supplementary Note 50 further comprising an input apparatus to which the position information is inputted.

### [Supplementary Note 52]

The processing unit according to the Supplementary Note 51, wherein
the position information is inputted to the input apparatus from a build unit that builds the build object.

### [Supplementary Note 53]

The processing unit according to the Supplementary Note 52, wherein
the position information is inputted to the input apparatus from at least one of a user of a build unit that builds the build object and a user of the processing unit.

### [Supplementary Note 54]

The processing unit according to any one of the Supplementary Notes 50 to 53, wherein
the control apparatus generates the position information on the basis of a build data that defines a detail of a build operation for building the build object.

### [Supplementary Note 55]

The processing unit according to any one of the Supplementary Notes 50 to 54, wherein
the control apparatus generates the position information on the basis of a build data that includes a three-dimensional shape data of the build obj ect.

### [Supplementary Note 56]

The processing unit according to the Supplementary Notes 54 or 55 further comprising an input apparatus to which the build data is inputted.

### [Supplementary Note 57]

The processing unit according to the Supplementary Note 56, wherein
the build data is inputted to the input apparatus from a build unit that builds the build object.

### [Supplementary Note 58]

The processing unit according to any one of the Supplementary Notes 50 to 57, wherein
the control apparatus performs an alignment of the set position and the processing apparatus on the basis of the position information and controls the processing apparatus to perform the processing operation on the basis of a result of the alignment.

### [Supplementary Note 59]

The processing unit according to any one of the Supplementary Notes 50 to 58, wherein
the build object is transported from a build unit to the processing unit after the build unit that builds the build object builds the build object.

### [Supplementary Note 60]

The processing unit according to the Supplementary Note 59, wherein
the build object is transported from the build unit to the processing unit with the base member.

### [Supplementary Note 61]

The processing unit according to the Supplementary Note 60, wherein
the build object is transported from the build unit to the processing unit with the base member while keeping a relative position of the base member and the build object.

### [Supplementary Note 62]

The processing unit according to the Supplementary Note 60 or 61, wherein
the build object that is coupled with the base member is transported from the build unit to the processing unit.

### [Supplementary Note 63]

The processing unit according to any one of the Supplementary Notes 59 to 62, wherein
the processing apparatus performs the processing operation on the build object transported from the build unit.

### [Supplementary Note 64]

The processing unit according to any one of the Supplementary Notes 50 to 63, wherein
the processing apparatus performs the processing operation on the build object while keeping a relative position of the base member and the build object.

### [Supplementary Note 65]

The processing unit according to any one of the Supplementary Notes 50 to 64, wherein
the processing apparatus performs the processing operation on the build object that is coupled with the base member.

### [Supplementary Note 66]

The processing unit according to any one of the Supplementary Notes 50 to 65, wherein
the processing apparatus performs, as the processing operation, a removal processing operation that removes a part of the build object.

### [Supplementary Note 67]

A processing unit comprising:
a processing apparatus that performs a processing operation on a build object that is built on a base member; and
a control apparatus that controls the processing apparatus by using information relating to a relationship between a position of the build object and a set position that is set on the base member.

### [Supplementary Note 68]

A processing unit comprising:
a processing apparatus that performs a processing operation on a build object that is built on a base member; and
a control apparatus that controls the processing apparatus by using a three-dimensional shape data of the base member and a three-dimensional shape data of the build object.

### [Supplementary Note 69]

The processing unit according to the Supplementary Note 68, wherein
the control apparatus controls the processing apparatus by using information in which the three-dimensional shape data of the base member is associated with the three-dimensional shape data of the build object.

### [Supplementary Note 70]

The processing unit according to the Supplementary Note 68 or 69, wherein
the control apparatus controls the processing apparatus by using information relating to a set position that is set on the base member.

### [Supplementary Note 71]

The processing unit according to the Supplementary Note 70, wherein
the control apparatus controls the processing apparatus by using information in which the set position is associated with the three-dimensional shape data of the base member.

### [Supplementary Note 72]

The processing unit according to the Supplementary Note 70 or 71, wherein
the control apparatus controls the processing apparatus by using information in which the set position is associated with the three-dimensional shape data of the build object.

### [Supplementary Note 73]

A processing unit comprising:
a processing apparatus that performs a processing operation on a build object that is built on a base member; and
a control apparatus that controls the processing apparatus by using a first measured result of the base member and a second measured result of the base member and the build object.

### [Supplementary Note 74]

The processing unit according to the Supplementary Note 73, wherein
the first measured result is associated with the second measured result.

### [Supplementary Note 75]

A processing system comprising:
a build unit that builds a build object on a base member on the basis of a set position that is set on the base member; and
a processing unit that performs a processing operation on the build object on the basis of position information relating to the set position.

### [Supplementary Note 76]

The processing system according to the Supplementary Note 75, wherein
the build unit outputs the position information to the processing unit.

### [Supplementary Note 77]

The processing system according to the Supplementary Note 76, wherein
the processing unit performs the processing operation on the basis of the position information outputted from the build unit.

### [Supplementary Note 78]

The processing system according to any one of the Supplementary Notes 75 to 77, wherein
the build unit build the build object on the basis of a build data and outputs the build data to the processing unit,
the processing unit generates the position information on the basis of the build data and performs the processing operation on the basis of the generated position information.

### [Supplementary Note 79]

The processing system according to any one of the Supplementary Notes 75 to 78 further comprising a control apparatus that controls at least one of the build unit and the processing unit.

### [Supplementary Note 80]

The processing system according to the Supplementary Note 79, wherein
the control apparatus obtains position information relating to the set position from the build unit and outputs the obtained position information to the processing unit.

### [Supplementary Note 81]

The processing system according to the Supplementary Note 79 or 80, wherein
the control apparatus obtains build data from the build unit and outputs the obtained build data to the processing unit.

### [Supplementary Note 82]

The processing system according to any one of the Supplementary Notes 79 to 81, wherein
the control apparatus obtains position information relating to the set position from the build unit and controls the processing unit to perform the processing operation on the basis of the obtained position information.

### [Supplementary Note 83]

The processing system according to any one of the Supplementary Notes 79 to 82, wherein
the control apparatus obtains build data, generates position information relating to the set position on the basis of the obtained build data and controls the processing unit to perform the processing operation on the basis of the generated position information.

### [Supplementary Note 84]

The processing system according to any one of the Supplementary Notes 79 to 83, wherein
the control apparatus controls the build unit to build the build object on the basis of position information relating to the set position and controls the processing unit to perform the processing operation on the basis of the position information.

### [Supplementary Note 85]

The processing system according to any one of the Supplementary Notes 79 to 84, wherein
the control apparatus controls the build unit to build the build object on the basis of a build data, generates position information relating to the set position on the basis of the build data and controls the processing unit to perform the processing operation on the basis of the generated position information.

### [Supplementary Note 86]

The processing system according to the Supplementary Note 78, 81, 83 or 85, wherein
the build data includes a data that defines a detail of a build operation for building the build object.

### [Supplementary Note 87]

The processing system according to the Supplementary Note 78, 81, 83, 85 or 86, wherein
the build data includes a three-dimensional shape data of the build obj ect.

### [Supplementary Note 88]

The processing system according to any one of the Supplementary Notes 75 to 87 further comprising a transport apparatus that transports the build object from the build unit to the processing unit.

### [Supplementary Note 89]

The processing system according to the Supplementary Note 88, wherein
the transport apparatus transports the build object from the build unit to the processing unit after the build unit builds the build object.

### [Supplementary Note 90]

The processing system according to the Supplementary Note 88 or 89, wherein
the transport apparatus transports the build object from the build unit to the processing unit with the base member.

### [Supplementary Note 91]

The processing system according to the Supplementary Note 90, wherein
the transport apparatus transports the build object from the build unit to the processing unit with the base member while keeping a relative position of the base member and the build object.

### [Supplementary Note 92]

The processing system according to the Supplementary Note 90 or 91, wherein
the transport apparatus transports the build object that is coupled with the base member from the build unit to the processing unit.

### [Supplementary Note 93]

A processing system comprising:
a build unit that builds a build object on a base member on the basis of a set position that is set on the base member; and
a processing unit that performs a processing operation on the build object on the basis of position information relating to a relative position of the set position and the build object.

### [Supplementary Note 94]

The processing system according to the Supplementary Note 93, wherein
the build apparatus builds the build object on the base member on the basis of a build data,
the position information includes the build data that is associated with the set position.

### [Supplementary Note 95]

The processing system according to the Supplementary Note 94, wherein
the build data includes a data that defines a detail of a build operation for building the build object.

### [Supplementary Note 96]

The processing system according to the Supplementary Note 94 or 95, wherein
the build data includes a three-dimensional shape data of the build obj ect.

### [Supplementary Note 97]

The processing system according to any one of the Supplementary Notes 93 to 96 further comprising a measurement unit that measures the built build object,
the position information includes a measured result by the measurement unit that is associated with the set position.

### [Supplementary Note 98]

The processing system according to the Supplementary Note 97, wherein
the measurement unit measures a position of the base member in a fiducial coordinate system of the build unit,
the position information includes information relating to the set position in the fiducial coordinate system.

### [Supplementary Note 99]

The processing system according to the Supplementary Note 98 further comprising a support apparatus that supports the base member,
the fiducial coordinate system including a support position coordinate system for indicating a position on a support surface of the support apparatus.

### [Supplementary Note 100]

The processing system according to any one of the Supplementary Notes 97 to 99, wherein
the measurement unit measures a position of a part of the base member in a fiducial coordinate system of the build unit,
the position information includes information relating to the position of the part of the base member that is associated with the set position.

### [Supplementary Note 101]

A processing system comprising:
a build unit that builds a build object on a base member; and
a processing unit that performs a processing operation on the build object that is built on the base member by using information relating to a relationship between a position of the build object and a set position that is set on the base member.

### [Supplementary Note 102]

A processing unit comprising:
a build unit that builds a build object on a base member; and
a processing unit that performs a processing operation on the build object that is built on the base member by using a three-dimensional shape data of the base member and a three-dimensional shape data of the build obj ect.

### [Supplementary Note 103]

The processing system according to the Supplementary Note 102, wherein
the processing unit performs the processing operation by using information in which the three-dimensional shape data of the base member is associated with the three-dimensional shape data of the build object.

### [Supplementary Note 104]

The processing system according to the Supplementary Note 102 or 103, wherein
the processing unit performs the processing operation by using information relating to a set position that is set on the base member.

### [Supplementary Note 105]

The processing system according to the Supplementary Note 104, wherein
the processing unit performs the processing operation by using information in which the set position is associated with the three-dimensional shape data of the base member.

### [Supplementary Note 106]

The processing system according to the Supplementary Note 104 or 105, wherein
the processing unit performs the processing operation by using information in which the set position is associated with the three-dimensional shape data of the build object.

### [Supplementary Note 107]

A processing system comprising:
a build unit that builds a build object on a base member; and
a processing unit that performs a processing operation on the build object that is built on the base member,
the processing unit performing by using a first measured result of the base member and a second measured result of the base member and the build object.

### [Supplementary Note 108]

The processing system according to the Supplementary Note 107, wherein
the first measured result is associated with the second measured result.

### [Supplementary Note 109]

The processing system according to any one of the Supplementary Notes 75 to 108, wherein
the build unit is the build unit according to any one of the Supplementary Notes 1 to 49.

### [Supplementary Note 110]

The processing system according to any one of the Supplementary Notes 75 to 109, wherein
the processing unit is the processing unit according to any one of the Supplementary Notes 50 to 74.

### [Supplementary Note 111]

A control apparatus that controls a build unit having a build apparatus and an output apparatus,
the control apparatus controlling the build apparatus to build a build object on a base member on the basis of a set position that is set on the base member,
the control apparatus controlling the output apparatus to output position information relating to the set position.

### [Supplementary Note 112]

A control apparatus that controls a build unit having a build apparatus and an output apparatus,
the control apparatus controlling the build apparatus to build a build object on a base member on the basis of a set position that is set on the base member,
the control apparatus controlling the output apparatus to output position information relating to a relative position of the set position and the build object.

### [Supplementary Note 113]

A control apparatus that controls a build unit having a build apparatus and an output apparatus,
the control apparatus controlling the build apparatus to build a build object on a base member on the basis of a set position that is set on the base member,
the control apparatus controlling the output apparatus to output position information relating to a relationship between the set position and a position of the build object.

### [Supplementary Note 114]

A control apparatus that controls a build unit that builds a build object on the object,
the control apparatus setting a set position on a base member; and
the control apparatus controlling the build apparatus to build the build object on the base member on the basis of the set position.

### [Supplementary Note 115]

A control apparatus that controls a build unit having a build apparatus and an output apparatus,
the control apparatus setting a set position on at least one of a base member and a build object and controlling the build apparatus to build the build material on the base member on the basis of the set position,
the control apparatus controlling the output apparatus to output first position information relating to the set position and a second position information relating to a positional relationship between the set position and a position of the build object.

### [Supplementary Note 116]

A control apparatus that controls a build unit having a build apparatus and an output apparatus,
the control apparatus controlling the build apparatus to build a build object on a base member,
the control apparatus controlling the output apparatus to output position information relating to a relationship between a position of the build object and a set position that is set on at least one of the base member and the build object.

### [Supplementary Note 117]

A control apparatus that controls a build unit having a build apparatus and an output apparatus,
the control apparatus controlling the build apparatus to build a build object on a base member,
the control apparatus controlling the output apparatus to output a three-dimensional shape data of the base member and a three-dimensional shape data of the build object.

### [Supplementary Note 118]

A control apparatus that controls a build unit having a build apparatus, a measurement apparatus and an output apparatus,
the control apparatus controlling the build apparatus to build a build object on a base member,
the control apparatus controlling the measurement apparatus to measure the base member and the build object;
the control apparatus controlling the output apparatus to output a measured result by the measurement apparatus,
the control apparatus controlling the measurement apparatus to measure the base member to obtain a first measured result in at least one of a period before the build object is build and a period during which the build object is build, and to measure the build object to obtain a second measured result in at least one of a period during which the build object is build and a period after the build object is build.

### [Supplementary Note 119]

A control apparatus that controls a build unit having a build apparatus,
the control apparatus controlling the build apparatus to build a build object that includes a planar surface on an upper surface of a base member that has a planar side surface,
the control apparatus controlling the build apparatus so that the planar surface of the build object is parallel to the side surface of the base member.

### [Supplementary Note 120]

A control apparatus that controls a processing apparatus, which performs a processing operation on a build object that is built on a base member on the basis of a set position that is set on the base member, on the basis of position information relating to the set position.

### [Supplementary Note 121]

A control apparatus that controls a processing apparatus, which performs a processing operation on a build object that is built on a base member, by using information relating to a relationship between a position of the build object and a set position that is set on the base member.

### [Supplementary Note 122]

A control apparatus that controls a processing apparatus, which performs a processing operation on a build object that is built on a base member, by using a three-dimensional shape data of the base member and a three-dimensional shape data of the build object.

### [Supplementary Note 123]

A control apparatus that controls a processing apparatus, which performs a processing operation on a build object that is built on a base member, by using a first measured result of the base member and a second measured result of the base member and the build object.

### [Supplementary Note 124]

A control apparatus that controls a processing system having a build unit and a processing unit,
the control apparatus controlling the build unit to build a build object on a base member on the basis of a set position that is set on the base member,
the control apparatus controlling the processing unit to perform a processing operation on the build object on the basis of position information relating to the set position

### [Supplementary Note 125]

A control apparatus that controls a processing system having a build unit and a processing unit,
the control apparatus controlling the build unit to build a build object on a base member on the basis of a set position that is set on the base member,
the control apparatus controlling the processing unit to perform a processing operation on the build object on the basis of position information relating to a relative position of the set position and the build obj ect.

### [Supplementary Note 126]

A control apparatus that controls a processing system having a build unit and a processing unit,
the control apparatus controlling the build unit to build a build object on a base member,
the control apparatus controlling the processing unit to perform a processing operation on the build object that is built on the base member by using information relating to a relationship between a position of the build object and a set position that is set on the base member.

### [Supplementary Note 127]

A control apparatus that controls a processing system having a build unit and a processing unit,
the control apparatus controlling the build unit to build a build object on a base member,
the control apparatus controlling the processing unit to perform a processing operation on the build object that is built on the base member by using a three-dimensional shape data of the base member and a three-dimensional shape data of the build object.

### [Supplementary Note 128]

A control apparatus that controls a processing system having a build unit and a processing unit,
the control apparatus controlling the build unit to build a build object on a base member,
the control apparatus controlling the processing unit that performs a processing operation on the build object that is built on the base member by using a first measured result of the base member and a second measured result of the base member and the build object.

### [Supplementary Note 129]

A build method including:
building a build object on a base member on the basis of a set position that is set on the base member; and
outputting position information relating to the set position.

### [Supplementary Note 130]

A build method including:
building a build object on a base member on the basis of a set position that is set on the base member; and
outputting position information relating to a relative position of the set position and the build object.

### [Supplementary Note 131]

A build method including:
building a build object on a base member on the basis of a set position that is set on the base member; and
outputting position information relating to a relationship between the set position and a position of the build object.

### [Supplementary Note 132]

A build method including:
setting a set position on a base member; and
building a build object on the base member on the basis of the set position.

### [Supplementary Note 133]

A build method including:
building a build material on a base member;
setting a set position on at least one of the base member and the build object; and
outputting first position information relating to the set position and a second position information relating to a positional relationship between the set position and a position of the build object,
the building including building the build material on the basis of the set position.

### [Supplementary Note 134]

A build method including:
building a build object on a base member; and
outputting position information relating to a relationship between a position of the build object and a set position that is set on at least one of the base member and the build object.

### [Supplementary Note 135]

A build method including:
building a build object on a base member; and
outputting a three-dimensional shape data of the base member and a three-dimensional shape data of the build object.

### [Supplementary Note 136]

A build method including:
building a build object on a base member;
measuring the base member and the build object; and
outputting a measured result by the measurement apparatus,
the measuring including measuring the base member to obtain a first measured result in at least one of a period before the build object is build and a period during which the build object is build, and measuring the build object to obtain a second measured result in at least one of a period during which the build object is build and a period after the build object is build.

### [Supplementary Note 137]

A processing method including:
obtaining position information relating to a set position that is set on the base member as a fiducial position of a build object; and
performing a processing operation on the build object, which is built on a base member on the basis of the set position, on the basis of position information.

### [Supplementary Note 138]

A processing method including:
performing a processing operation on a build object that is built on a base member; and
obtaining information relating to a relationship between a position of the build object and a set position that is set on the base member,
the performing the processing operation including performing the processing operation by using the information.

### [Supplementary Note 139]

A processing method including:
performing a processing operation on a build object that is built on a base member; and
obtaining a three-dimensional shape data of the base member and a three-dimensional shape data of the build object,
the performing the processing operation including performing the processing operation by using the three-dimensional shape data of the base member and the three-dimensional shape data of the build object.

### [Supplementary Note 140]

A processing method including:
performing a processing operation on a build object that is built on a base member; and
obtaining a first measured result of the base member and a second measured result of the base member and the build object,
the performing the processing operation including performing the processing operation by using the first measured result and the second measured result.

### [Supplementary Note 141]

A processing method including:
building a build object on a base member on the basis of a set position that is set on the base member; and
performing a processing operation on the build object on the basis of the position information.

### [Supplementary Note 142]

A processing method including:
building a build object on a base member on the basis of a set position that is set on the base member; and
performing a processing operation on the build object on the basis of position information relating to a relative position of the set position and the build object.

### [Supplementary Note 143]

A processing method including:
building a build object on a base member; and
performing a processing operation on the build object that is built on the base member by using information relating to a relationship between a position of the build object and a set position that is set on the base member.

### [Supplementary Note 144]

A processing method including:
building a build object on a base member; and
performing a processing operation on the build object that is built on the base member by using a three-dimensional shape data of the base member and a three-dimensional shape data of the build object.

### [Supplementary Note 145]

A processing method including:
building a build object on a base member; and
performing a processing operation on the build object that is built on the base member,
the performing the processing operation including performing the processing operation by using a first measured result of the base member and a second measured result of the base member and the build object.

At least a part of the features of each embodiment described above may be properly combined with at least another a part of the features of each embodiment described above. A part of the features of each embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification. A build unit, a processing unit, a processing system, a control apparatus, a build method and a processing method, which involve such changes, are also intended to be within the technical scope of the present invention.

### Description of Reference Codes

- SYS, SYSa: processing system
- UNTa1: build unit
- UNTa2: processing unit
- 1: material supply apparatus
- 2: build apparatus
- 21: build head
- 22: head driving system
- 24: guide light emitting apparatus
- 3: stage apparatus
- 31: stage
- 311: placement surface
- 7: control apparatus
- 8: measurement apparatus
- 81: projection apparatus
- 82: imaging apparatus
- 91: display
- 92: input apparatus
- 93a: output apparatus
- 101a: input apparatus
- 102a: output apparatus
- 1021a: processing head
- 1022a: head driving system
- 1023a: position measurement apparatus
- 103a: stage apparatus
- W: workpiece
- M: build material
- SL: structural layer
- MS: build surface
- EA: irradiation area
- MA: supply area
- MP: melt pool
- EL: processing light
- DL: measurement light
- GL: guide light
- WM: workpiece model
- PM: build model

## Claims

1. A build unit comprising:
a build apparatus that builds a build object on a base member on the basis of a set position that is set on the base member; and
an output apparatus that outputs position information relating to the set position.

2. The build unit according to claim 1, wherein
the output apparatus outputs the position information to a processing unit that performs a processing operation on the build object.

3. The build unit according to claim 2, wherein
the processing unit performs the processing operation on the basis of the position information outputted from the output apparatus.

4. The build unit according to claim 2 or 3, wherein
the processing unit performs an alignment of the build object and the processing unit on the basis of the position information outputted from the output apparatus and performs the processing operation on the basis of a result of the alignment.

5. The build unit according to any one of claims 1 to 4, wherein
the build apparatus builds the build object a relative position of which is fixed relative to the base member.

6. The build unit according to any one of claims 1 to 5, wherein
the build apparatus builds the build object that is coupled with the base member.

7. The build unit according to any one of claims 1 to 6, wherein
the position information includes information relating to a relative position of the set position and the base member.

8. The build unit according to any one of claims 1 to 7, wherein
the position information includes information relating to a relative position of the set position and the build object.

9. A build unit comprising:
a build apparatus that builds a build object on a base member on the basis of a set position that is set on the base member; and
an output apparatus that outputs position information relating to a relative position of the set position and the build object.

10. A build unit comprising:
a build apparatus that builds a build object on a base member on the basis of a set position that is set on the base member; and
an output apparatus that outputs position information relating to a relationship between the set position and a position of the build object.

11. The build unit according to any one of claims 8 to 10, wherein
the build apparatus builds the build object on the base member on the basis of a build data,
the output apparatus outputs, as the position information, the build data that is associated with the set position.

12. The build unit according to claim 11, wherein
the build data includes a data that defines a detail of a build operation for building the build object.

13. The build unit according to claim 11 or 12, wherein
the build data includes a three-dimensional shape data of the build object.

14. The build unit according to any one of claims 8 to 13 further comprising a measurement apparatus that measures the built build object to obtain a measured result,
the output apparatus outputting, as the position information, the measured result that is associated with the set position.

15. The build unit according to claim 14, wherein
the measurement apparatus measures a position of the base member in a fiducial coordinate system of the build unit,
the output apparatus outputs the position information relating to the set position in the fiducial coordinate system.

16. The build unit according to claim 15 further comprising a support apparatus that supports the base member,
the fiducial coordinate system including a support position coordinate system for indicating a position on a support surface of the support apparatus.

17. The build unit according to any one of claims 14 to 16, wherein
the measurement apparatus measures a position of a part of the base member in a fiducial coordinate system of the build unit,
the output apparatus outputs the position of the part of the base member that is associated with the set position.

18. The build unit according to any one of claims 9 to 17, wherein
the output apparatus outputs information relating to the set position.

19. The build unit according to any one of claims 14 to 18, wherein
the measurement apparatus measures the build object in a non-contact manner.

20. The build unit according to any one of claims 1 to 19 further comprising a control apparatus that sets the set position.

21. The build unit according to claim 19, wherein
the control apparatus sets the set position on the base member.

22. A build unit comprising:
a control apparatus that sets a set position on a base member; and
a build apparatus that builds a build object on the base member on the basis of the set position.

23. The build unit according to any one of claims 20 to 22 comprising an input apparatus to which information for setting the set position is inputted,
the control apparatus setting the set position on the basis of the information inputted to the input apparatus.

24. The build unit according to any one of claims 20 to 23, wherein
the control apparatus sets the set position on the basis of information relating to the base member.

25. A build unit comprising:
a build apparatus that builds a build object on a base member;
a control apparatus that sets a set position on at least one of the base member and the build object and controls the build apparatus on the basis of the set position; and
an output apparatus that outputs first position information relating to the set position and a second position information relating to a positional relationship between the set position and a position of the build object.

26. A build unit comprising:
a build apparatus that builds a build object on a base member; and
an output apparatus that outputs position information relating to a relationship between a position of the build object and a set position that is set on at least one of the base member and the build object.

27. A build unit comprising:
a build apparatus that builds a build object on a base member; and
an output apparatus that outputs a three-dimensional shape data of the base member and a three-dimensional shape data of the build object.

28. The build unit according to claim 27, wherein
the output apparatus associates and outputs the three-dimensional shape data of the base member and the three-dimensional shape data of the build object.

29. The build unit according to claim 27 or 28, wherein
the output apparatus outputs information relating to a set position that is set on the base member.

30. The build unit according to claim 29, wherein
the output apparatus associates and outputs the set position and the three-dimensional shape data of the base member.

31. The build unit according to claim 29 or 30, wherein
the output apparatus associates and outputs the set position and the three-dimensional shape data of the build object.

32. A build unit comprising:
a build apparatus that builds a build object on a base member;
a measurement apparatus that obtains three-dimensional information of the base member and the build object; and
an output apparatus that outputs a measured result by the measurement apparatus.

33. The build unit according to claim 32, wherein
the measurement apparatus measures the base member to obtain a first measured result in at least one of a period before the build object is build and a period during which the build object is build, and measures the build object to obtain a second measured result in at least one of a period during which the build object is build and a period after the build object is build.

34. The build unit according to claim 33, wherein
the output apparatus associates and outputs the first measured result and the second measured result.

35. A build unit comprising:
a build apparatus that builds a build object on a base member;
a measurement apparatus that measures the base member and the build object; and
an output apparatus that outputs a measured result by the measurement apparatus,
the measurement apparatus measuring the base member to obtain a first measured result in at least one of a period before the build object is build and a period during which the build object is build, and measuring the build object to obtain a second measured result in at least one of a period during which the build object is build and a period after the build object is build.

36. The build unit according to claim 35, wherein
the output apparatus associates and outputs the first measured result and the second measured result.

37. The build unit according to any one of claims 1 to 31 further comprising a measurement apparatus that measures the build object.

38. The build unit according to claim 37, wherein
the output apparatus outputs position information relating to a set position that is set on the base member and a measured result by the measurement apparatus.

39. The build unit according to claim 37 or 38 further comprising a control apparatus that modifies, on the basis of a measures result by the measurement apparatus, the position information relating to a set position that is set on the base member,
the output apparatus outputting the modified position information.

40. The build unit according to any one of claims 32 to 39, wherein
the measurement apparatus measures the build object in a non-contact manner.

41. The build unit according to any one of claims 1 to 40, wherein
the build apparatus comprises a supply apparatus that supplies a material to a build position,
a positional relationship between a set position that is set on the base member and the build position is a predetermined relationship.

42. The build unit according to claim 41, wherein
the build apparatus comprises a beam irradiation apparatus that irradiates the build position with an energy beam.

43. The build unit according to any one of claims 1 to 42, wherein
the build apparatus builds the build object by performing an additive processing on the base member.

44. The build unit according to any one of claims 1 to 43, wherein
a mark is provided on the base member.

45. The build unit according to claim 44, wherein
a position of the mark or a position that has a predetermined relationship relative to a position of the mark is used as a set position on the base member.

46. The build unit according to any one of claim 1 to 45, wherein
a feature point of the base member is used as a set position on the base member.

47. The build unit according to claim 46, wherein
the feature point includes a border of the base member or a border of a structure on the base member.

48. The build unit according to claim 43 or 44, wherein
the feature point includes a corner of the base member or a corner of a structure on the base member.

49. A build unit comprising:
a build apparatus that builds a build object that includes a planar surface on an upper surface of a base member that has a planar side surface; and
a control apparatus that controls the build apparatus so that the planar surface of the build object is parallel to the side surface of the base member.
